(19) Europäisches Patentamt
European Patent Office
Office européen des brevets

(11) Veröffentlichungsnummer: **0 176 481 B1**

# (12) EUROPÄISCHE PATENTSCHRIFT

(45) Veröffentlichungstag der Patentschrift: **11.12.91**

(51) Int. Cl.[5]: **C08G 77/20**, C08G 77/46, C08G 77/26, C08L 83/07, C08L 83/12, C08L 83/08, G02B 1/04

(21) Anmeldenummer: **85810423.5**

(22) Anmeldetag: **18.09.85**

Die Akte enthält technische Angaben, die nach dem Eingang der Anmeldung eingereicht wurden und die nicht in dieser Patentschrift enthalten sind.

## (54) Ungesättigte Polysiloxane, polymerisierbare Zusammensetzungen und Kontaktlinsen daraus.

(30) Priorität: **24.09.84 US 653416**

(43) Veröffentlichungstag der Anmeldung:
**02.04.86 Patentblatt 86/14**

(45) Bekanntmachung des Hinweises auf die Patenterteilung:
**11.12.91 Patentblatt 91/50**

(84) Benannte Vertragsstaaten:
**AT BE CH DE FR GB IT LI LU NL SE**

(56) Entgegenhaltungen:
**EP-A- 0 109 355**
**EP-A- 0 127 321**
**US-A- 4 136 250**

(73) Patentinhaber: **CIBA-GEIGY AG**
**Klybeckstrasse 141**
**CH-4002 Basel(CH)**

(72) Erfinder: **Mueller, Karl Friedrich**
**119 West 77th Street**
**New York New York 10024(US)**
Erfinder: **Lohmann, Dieter, Dr.**
**Mittelweg 56**
**CH-4142 Münchenstein(CH)**
Erfinder: **Falk, Robert A.**
**35 Glenside Drive**
**New City New York 0977(US)**

**EP 0 176 481 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Reaktionen von Polysiloxanzwischenprodukten, die Hydroxyl-, Amino- oder Thiolgruppen enthalten, an das Si-Atom über eine dazwischenliegende Alkylengruppe gebunden, mit einer äquivalenten Menge von Diisocyanat, gefolgt von einer Endverkappung mit einem Hydroxy- oder Aminoalkyl-(meth)-acrylat, werden beispielsweise beschrieben in der US-PS 4 136 250, der US-PS 4 130 708 und 4 486 577. Da die Urethan- und Harnstoffbildung bei niedrigen Temperaturen und ohne Entwicklung von Nebenprodukten verläuft, ist dies eine praktizierbare Synthese, insbesondere wenn das angestrebte Ziel eine Kontaktlinse mit gleichmässigen Eigenschaften und maximaler Reproduzierbarkeit ist. Weitere Vorteile von Polyurethanen und Polyharnstoffen sind ihre grosse Festigkeit und Flexibilität und gute Verträglichkeit und Klarheit in Kombination mit zweiten Polymeren, was ein Ergebnis der Wasserstoffbrückenbindung, wie z.B. in Nylon, ist.

Ein verbleibender Nachteil der in den US-Patenten 4136250 und 4486577 beschriebenen Struktur und Synthese ist jedoch, dass durch die statistische Natur der stufenweise wachsenden Polymerisationskinetik während der Reaktion des Diisocyanats mit dem Polysiloxandiol immer eine bestimmte Menge an Kettenverlängerungsreaktionen auftritt, was im besten Falle zu einer schwierig zu steuernden oder reproduzierbaren Zunahme der Viskosität und Zunahme der Polydispersität des Prepolymeren führt, und im schlechtesten Falle zu einer vorzeitigen Gelbildung oder zumindest der Gefahr einer vorzeitigen Gelbildung führt. Zwar sind bei Anwendungszwecken, wie photohärtbare Überzüge, geringe Änderungen der Polymerdispersität und Funktionalität von geringer Bedeutung, bei anderen Anwendungszwecken, beispielsweise bei der Herstellung von sauerstoffdurchlässigen harten und weichen Kontaktlinsen, ist eine genaue Reproduzierbarkeit von Ansatz zu Ansatz von äusserster Wichtigkeit, um den engen Vorschriften bezüglich Härte, Flexibilität und Klarheit zu entsprechen.

Es wurde nunmehr festgestellt, dass die vorstehenden Probleme überwunden werden können und ein durch Strahlung oder Wärme härtbares ungesättigtes Polydimethylsiloxan hergestellt werden kann, wenn ein Polydimethylsiloxan mit einem Molekulargewicht von 400-10000 und einem Gehalt von mindestens zwei -OH, -NH oder -SH-Gruppen mit einem ungesättigten Monoisocyanat, beispielsweise mit 2-Isocyanatoethylmethacrylat (IEM), 2-Isocyanoethyl-acrylat, 3-Isocyanatopropyl-methacrylat, 1-Methyl- und 1,1-Dimethyl-2-isocyanatoethyl-acrylat oder -methacrylat, wovon 2-Isocyanatoethyl-methacrylat bevorzugt ist, umgesetzt wird. Im Rahmen der Erfindung sind auch Vinylisocyanat und 2-Isocyanatoethylfumarat brauchbar.

Die vorliegende Erfindung betrifft ein Polysiloxan, das mindestens eine ungesättigte Gruppe enthält, die für die anschließende Polymerisation mit einem oder mehreren Vinylmonomeren geeignet ist.

Die vorliegende Erfindung betrifft auch Copolymere, die das Polysiloxan als eine Komponente und ein Vinylmonomer als zweite Komponente enthalten, und insbesondere Kontaktlinsen, die aus dem vernetzten Copolymerisationsprodukt des Polysiloxanmakromeren mit einem oder mehreren wasserlöslichen und/oder wasserunlöslichen monoolefinischen und diolefinischen Monomeren gebildet sind.

### Das Polysiloxanmakromere (A)

Das erfindungsgemäße Polysiloxanmakromere ist ein lineares oder verzweigtes Polysiloxanmakromeres mit einem Molekulargewicht von etwa 400 bis etwa 100000, gemessen durch Endgruppenanalyse oder Gelpermeationschromatographie, wobei das Makromere mindestens eine terminale oder seitliche polymerisierbare olefinische Gruppe und mindestens eine derartige polymerisierbare olefinische Gruppe pro Molekulargewichtseinheit von 5000 enthält, wobei die Gruppe durch eine Urethan-, Thiourethan- oder Harnstoffbindung an das Polysiloxan gebunden ist und das Makromere die Struktur $A_1$, $A_2$, $A_3$ oder $A_4$ hat

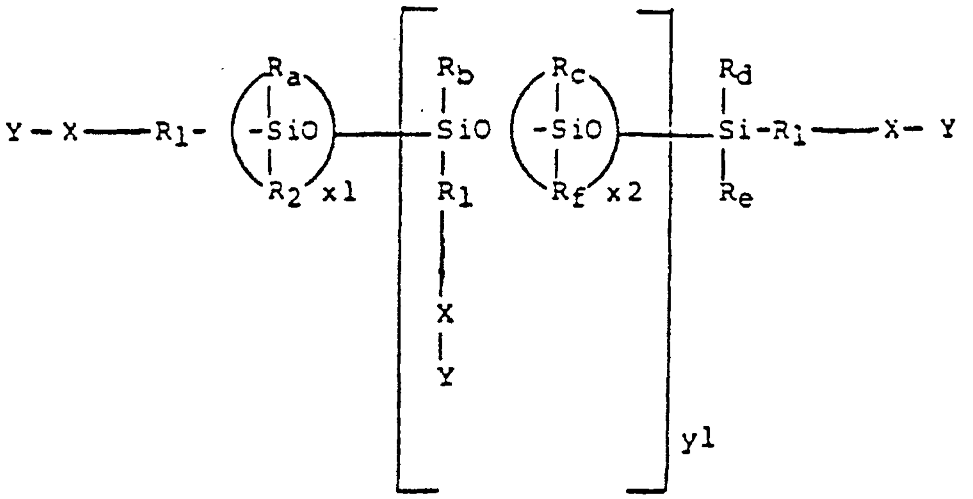

(A1)

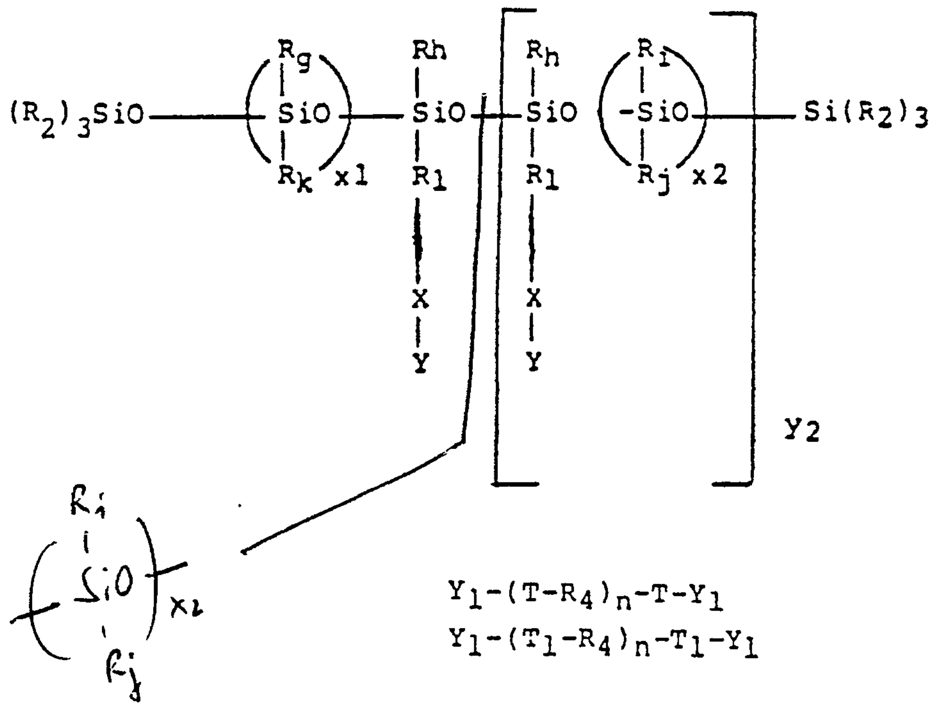

(A2)

$$Y_1-(T-R_4)_n-T-Y_1 \qquad (A_3)$$

$$Y_1-(T_1-R_4)_n-T_1-Y_1 \qquad (A_4),$$

worin:
$R_1$ eine lineare oder verzweigte Alkylengruppe mit 2-6 Kohlenstoffatomen oder eine Polyoxyalkylengruppe der Struktur G oder $G_1$ ist

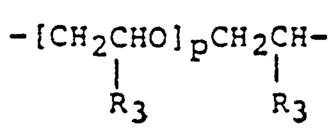

(G)

$-[CH_2CH_2CH_2CH_2O]_pCH_2CH_2CH_2CH_2-$ (G1),

worin $R_3$ Wasserstoff oder Methyl ist und p eine ganze Zahl von 1-50 ist, $R_2$, $R_a$, $R_b$, $R_c$, $R_d$, $R_e$, $R_f$, $R_g$, $R_h$, $R_i$, $R_j$ und $R_k$ unabhängig Methyl oder Phenyl sind, $x_1$, $x_2$ ganze Zahlen von 1 bis 500 sind, mit der Maßgabe, daß die Summe von $x_1 + x_2$ 7 bis 1300 ist,
$y_1$ 0 bis 14 ist und $y_2$ 1 bis 13 ist, mit der Maßgabe, daß das Verhältnis von

$$\frac{x_1 + x_2}{y_1 + 2}$$

oder

$$\frac{x_1 + x_2}{y_2 + 1}$$

nicht grösser als 70 ist,
X $-Z_1$-CO-NH- ist
$Z_1$ Sauerstoff, Schwefel oder $NR_5$ ist, worin $R_5$ Wasserstoff oder $C_1$-$C_4$-Alkyl ist, $Z_1$ an $R_1$ gebunden ist; mit der Maßgabe, daß für die Vertragsstaaten DE, FR, GB, IT und SE, $Z_1$ in Makromeren der Struktur $A_1$ von Sauerstoff verschieden ist;
$Y_1$

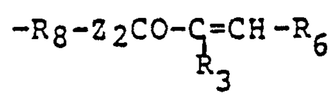

oder $-R_7$-O-CH=$CH_2$ ist,
worin:
$R_6$ ist: Wasserstoff, Methyl, $-COOR_5$ oder $-COOR_7OH$,
$Z_2$ = Sauerstoff oder $-NR_5$-,
Y gleich wie $Y_1$ ist, oder Y H, Alkyl mit 1 bis 8 Kohlenstoffatomen, Cyclohexyl, Phenyl, o-Tolyl, m-Tolyl oder p-Tolyl ist, mit der Maßgabe, daß mindestens eines von Y die gleiche Bedeutung wie $Y_1$ haben muß,
$R_7$ ein lineares oder verzweigtes Alkylen mit 2 bis 10 Kohlenstoffatomen, Phenylen oder Phenylalkylen mit 2 bis 10 Kohlenstoffatomen im Alkylen, oder Polyoxyalkylen der Struktur G oder $G_1$ ist;
$R_8$ eine Alkylengruppe mit 2 bis 6 Kohlenstoffatomen ist,
$R_4$ ein zweiwertiger Rest ist, der durch Entfernen der NCO-Gruppen von einem aliphatischen, cycloaliphatischen, araliphatischen oder aromatischen Diisocyant erhalten wird;
T die Gruppe

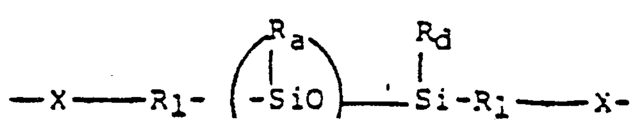

ist,
$T_1$ die Gruppe

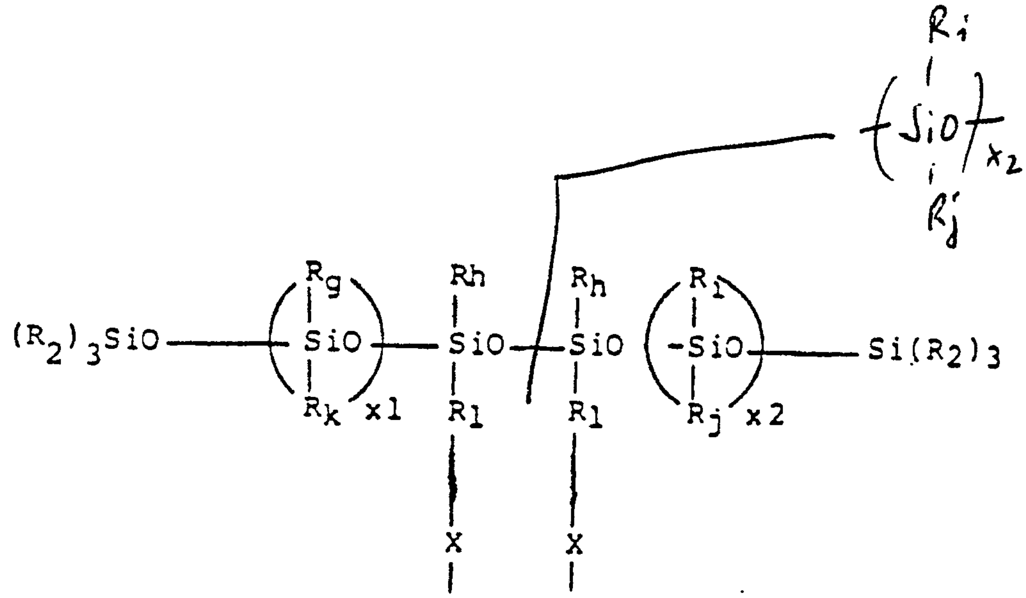

ist, und

n 1 bis 10 ist.

Die Verbindungen der Strukturen ($A_1$) und ($A_2$) sind somit Polysiloxane, die über eine Urethan- oder Harnstoffbindung mit Vinylgruppen verbunden sind; die Vinylgruppe kann ein Acrylsäure-, Methacrylsäure-, Fumarsäure- oder Itaconsäureester oder ein Vinylether sein.

Die Verbindungen der Strukturen ($A_3$) und ($A_4$) sind verlängerte oder oligomere Polysiloxane, worin das ursprüngliche Polysiloxanpolyol, -polyamin oder -polythiol zuerst mit einem Diisocyanatmolekül verlängert ist, unter Bildung der Gruppe $R_4$. Das resultierende verlängerte Produkt wird anschließend mit einem Vinyl enthaltenden Monoisocyanat, unter Bildung der Verbindungen der Strukturen $A_3$ oder $A_4$, umgesetzt.

Bevorzugte Ausführungsformen der Erfindung umfassen

| | |
|---|---|
| $R_1$ | = Alkylen mit 3 bis 4 Kohlenstoffatomen, |
| $R_2$, $R_a$, $R_b$, $R_c$, $R_d$, $R_e$, $R_f$, $R_g$, $R_h$, $R_i$, $R_j$ und $R_k$ | = Methyl, |
| $x_1 + x_2$ | = 10 bis 100, |
| $y_1$ | = 0 bis 2, |
| $y_2$ | = 1 bis 3, |
| $Z_1$ | = Sauerstoff oder - NH-, |
| $R_4$ | = zweiwertiger Rest eines aliphatischen oder cycloaliphatischen Diisocyanats mit 6 bis 10 Kohlenstoffatomen, |
| Y | ist gleich wie $Y_1$, |
| $R_6$ | = Wasserstoff, |
| $R_8$ | = $-CH_2CH_2-$; |
| $Z_2$ | = Sauerstoff oder |

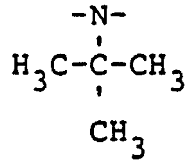 .

Die bevorzugsten Ausführungsformen umfassen das Polysiloxan der Struktur ($A_2$), worin

$Z_1$, $Z_2$ Sauerstoff und

$y_2$ 1 oder 2 sind; oder Polysiloxane der Struktur $A_3$ oder $A_4$

worin

$R_4$ ein zweiwertiger Rest des Isophoron-diisocyanats ist.

Das ungesättigte Polysiloxan der Erfindung wird durch Reaktion eines Polysiloxans der allgemeinen Strukturen $L_1$ oder $L_2$ mit einer Isocyanat-substituierten Vinylverbindung hergestellt. Diese Zwischenprodukte sind weitgehend Handelsprodukte.

Polyfunktionelle Polysiloxane, die als Ausgangsmaterialien für das Makromere (A) geeignet sind, haben Strukturen:

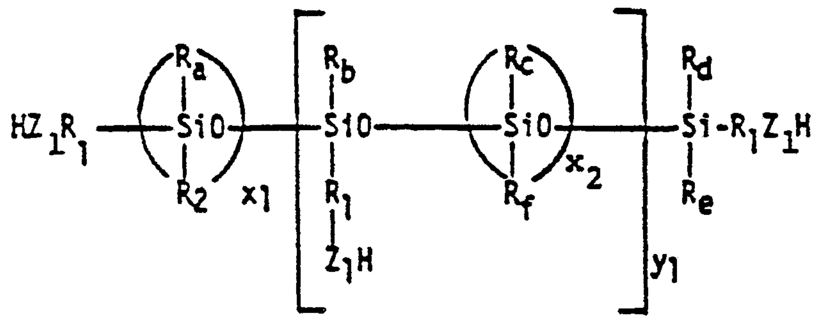

$L_1$ oder

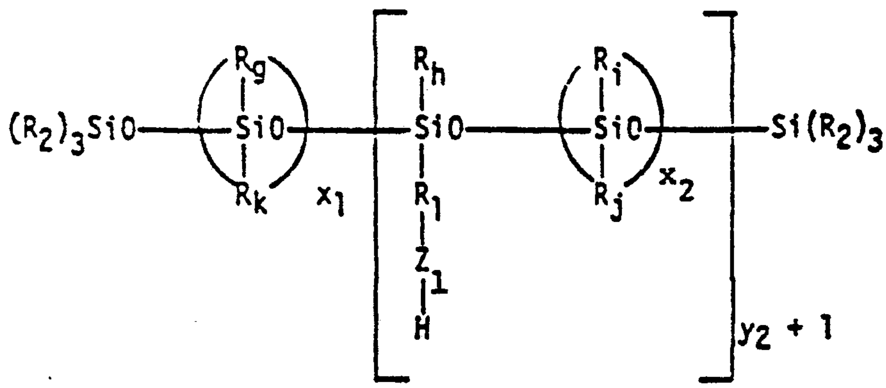

$L_2$ ,

worin

$R_1$, $R_2$, $R_a$, $R_b$, $R_c$, $R_d$, $R_e$, $R_f$, $R_g$, $R_h$, $R_i$, $R_j$, $R_k$, $x_1$, $x_2$, $y_1$, $y_2$ und $Z_1$ wie vorstehend beschrieben definiert sind.

Die zur Reaktion mit den Polysiloxanen der Struktur $L_1$ oder $L_2$ brauchbare Isocyanato-funktionelle Vinylverbindung ist ein NCO-substituiertes Alkylacrylat oder -methacrylat der allgemeinen Struktur

$$H_2C=\underset{R_6}{\underset{|}{C}}-COOR_8-NCO\ ,$$

worin

$R_6$ wie vorstehend definiert ist und

$R_8$ eine Alkylengruppe mit 2 bis 6 Kohlenstoffatomen ist.

Beispiele umfassen:

2-Isocyanatoethyl-methacrylat, 2-Isocyanoethyl-acrylat, 3-Isocyanatopropylmethacrylat, 1-Methyl-2-isocyanatoethyl-methacrylat und 1,1-Dimethyl-2-isocyanatoethylacrylat, wobei 2-Isocyanatoethyl-methacrylat bevorzugt ist. Geeignete Methoden zur Herstellung dieser Isocyanatoester sind bekannt, z.B. wie in der US-PS 2 718 516 und der GB-PS 1 252 099 gezeigt.

Das bevorzugte Monomere ist 2-Isocyanatoethyl-methacrylat (IEM). Andere Monomere umfassen Isocyanatoalkylvinylether, wie 2-Isocyanatobutylvinylether, und Ester, wie 2-Isocyanatoethylfumarat und Vinylisocyanat. Ebenfalls brauchbar sind Monoisocyanate, erhalten durch die Reaktion von 1 Mol eines Hydroxy- oder eines Amino-funktionellen Alkylvinylmonomeren mit 1 Mol Diisocyanat, beispielsweise die Reaktionsprodukte von 2-Hydroxyethylmethacrylat, 2-Hydroxyethylacrylat, 3-Hydroxypropylmethacrylat, 3-Hydroxyethylvinylether oder t-Butylaminoethylmethacrylat mit Isophoron-diisocyanat, (3,3,4)-Trimethylhexan-1,6-diisocyanat, Toluol-diisocyanat oder Diphenylmethan-4,4'-diisocyanat.

Wenn das polyfunktionelle Polysiloxan der Struktur $L_1$ oder $L_2$mehr als zwei funktionelle Gruppen enthält, so ist es auch möglich, eine dieser Gruppen mit Säurechloriden, wie Benzoylchlorid, oder mit Anhydriden, wie Maleinsäure-, Phthalsäure- oder Norbornyl anhydrid, oder mit Monoisocyanaten, wie Butyl- oder Phenyl-isocyanat zu Verkappen, und zwar vor der Durchführung jeder weiteren Polykondensations- und Kettenverlängerungsreaktion oder dem Verkappen mit dem Isocyanato-substituierten Vinylmonomeren, wie nachstehend beschrieben.

Die Reaktion des Polysiloxan-polyols, -polyamins oder -polythiols wird unter Bedingungen durchgeführt, die ausreichen, um die Reaktion der Isocyanatgruppe mit der Gruppe -OH,

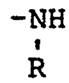

oder -SH des Polysiloxans unter Bildung einer Urethan-, Harnstoff- oder Thiourethanbindung zu bewirken. Vorteilhaft wird die Polyurethanbildung in Anwesenheit eines Katalysators, vorzugsweise eines organometallischen Katalysators, wie Zinn-II-octoat oder Dibutylzinndilaurat, durchgeführt. Bei der Durchführung der Reaktion ist es zweckmässig, das Reaktionsgemisch aus reaktivem Polysiloxan und Isocyanato-alkylester, vorzugsweise rein oder auch gelöst in einem nicht-reaktiven Lösungsmittel, wie Ether, Ethylacetat, Toluol oder Cellosolveacetat, in einem Gefäss während einer Reaktionszeit von etwa 1 bis etwa 24 h bei einer Temperatur von Umgebungstemperatur bis 140 °C zu halten. Die Polyharnstoffbildung aus einem Polysiloxan-polyamin mit entweder primären oder sekundären Aminogruppen verläuft rasch ohne zusätzlichen Katalysator bei Raumtemperatur. Die Menge des Isocyanato-alkylesters kann stöchiometrisch oder leicht im Ueberschuss zu den seitenständigen funktionellen Gruppen des Polysiloxans sein. Die Menge des benötigten IEM ist jedoch vorzugsweise weniger als die stöchiometrische Menge, insbesondere wenn nur eine teilweise Verkappung des Polyols gewünscht wird.

Mindestens eine der reaktionsfähigen Gruppen an Polysiloxanen $L_1$ oder $L_2$ wird mit dem Isocyanato-funktionellen ungesättigten Monomeren umgesetzt, und man erhält ein mono-, di-, tri- oder poly-ungesättigtes Polysiloxan mit einer Molekulargewichtsverteilung, die identisch mit der des Ausgangspolysiloxans ist, und das, in Abhängigkeit von dem Ausmaß der Vinylsubstitution, null bis mehrere verbleibende Hydroxyl-, Amino- oder Thiolgruppen enthält.

Wenn alle verfügbaren reaktiven Gruppen an $L_1$ oder $L_2$ durch eine Vinylgruppe ersetzt werden, so können die resultierenden Di- oder Polyvinyl-polysiloxane direkt mit oder ohne zusätzliche Vinylmonomere für Radikalpolymerisationen unter Bildung vernetzter Polymerer verwendet werden. Wenn eine oder mehrere der reaktionsfähigen Gruppen unsubstituiert bleiben, so können die resultierenden Mono- oder Polyvinylpolysiloxane entweder als solche für die Radikalpolymerisation oder für zusätzliche Reaktionen verwendet werden, wie Polykondensationsreaktionen mit Diisocyanaten, Anhydriden, Disäurechloriden, Disäuren, Diestern, Epoxiden, sowie Kettenverlängerungsreaktionen mit Diisocyanaten und Diaminen oder Diolen.

Kettenverlängerungsreaktionen, insbesondere mit Polysiloxandialkanolen und -diisocyanaten, lassen sich leicht vor der Reaktion mit dem Isocyanatoalkyl-vinylmonomeren durchführen und bieten einen Weg zur Einstellung der Vernetzungsdichte des endgültigen Polymeren. Es ist auch möglich, zusätzliche Vinylgruppen einzuführen durch Reaktion der Isocyanat-funktionellen Polysiloxanprepolymeren mit Hydroxyalkyl-(meth)-acrylaten oder N-tert-Butylaminoethyl-methacrylat, wie in der US-PS 4 136 250 beschrieben.

Geeignete aufbauende Blöcke zur Durchführung derartiger Polykondensationen umfassen Maleinsäureanhydrid und 1,4-Butandiol oder 1,4-Butindiol zur Einführung von Unsättigungen, oder Polyethylenoxid-diole oder -diamine, um die Polymeren hydrophil(er) zu machen. Als Diisocyanate zur Durchführung von Kettenverlängerungsreaktionen eignen sich z.B.:
Ethylen-diisocyanat, 1,2-Diisocyanatopropan, 1,3-Diisocyanatopropan, 1,6-Diisocyanatohexan, 1,2-Diisocyanatocyclohexan, 1,3-Diisocyanatocyclohexan, 1,4-Diisocyanatocyclohexan, o-Diisocyanatobenzol, m-Diisocyanatobenzol, p-Diisocyanatobenzol, Bis-(4-isocyanatocyclohexyl)-methan, Bis-(4-isocyanatocyclohexyl)-methan, Bis-(4-isocyanatophenyl)-methan, Toluol-diisocyanat, 3,3-Dichlor-4,4'-diisocyanatobiphenyl, Tris-(4-isocyanatophenyl)-methan, 1,5-Diisocyanatonaphthalin, hydriertes Toluol-diisocyanat, 1-Isocyanatomethyl-5-isocyanato-1,3,3,-tri-methylcyclohexan (= Isophoron-diisocyanat), 1,3,5-Tris-(6-isocyanatohexyl)-biuret, 1,6-Diisocyanato-2,2,4-(4,2,2)-trimethylhexan.

Es ist somit möglich,entweder lineare oder verzweigte mono- oder polyungesättigte Polysiloxane mit Molekulargewichten im Bereich von 400 bis 100000 oder vernetzte ungesättigte PDMSi-Polyurethankautschuke zu bilden.

Die resultierenden Polysiloxane mit seitenständigen ethylenisch ungesättigten Gruppen werden im

allgemeinen ohne weitere Reinigung verwendet. Wenn bei der Reaktion ein Lösungsmittel verwendet wurde, kann es entfernt werden, oder man kann die das Lösungsmittel enthaltende Zusammensetzung, als solche verwenden.

Das Urethan-polysiloxan ist im allgemeinen ein harzartiges (festes oder halbfestes) oder viskoses flüssiges Material, das ein durchschnittliches Molekulargewicht (Zahlenmittel $M_n$) von etwa 400 bis etwa 100000, vorzugsweise von etwa 500 bis etwa 10000 aufweist, je nach dem $M_n$ des als Ausgangsmaterial verwendeten Polysiloxans. Für die erfindungsgemässen Zwecke wird $M_n$ durch Messung der Prozent des aktiven Wasserstoffs des Ausgangspolysiloxans bestimmt, während die Molekulargewichtsverteilung durch Gelpermeationschromatographie bestimmt wird.

Vorzugsweise werden die ungesättigten Polysiloxane der Erfindung in Kombination mit anderen Vinylmonomeren verwendet, um vernetzte Polysiloxan-Polyvinyl-Blockcopolymere herzustellen.

Die große Vielzahl monomerer Reaktionskomponenten macht es möglich,entweder harte, hochvernetzte Copolymere mit geeigneten acrylischen, methacrylischen oder anderen Vinyl-Monomeren herzustellen, oder weiche, kautschukartige Polymere mit geringer Vernetzungsdichte bereitzustellen.

Es ist auch möglich,Polysiloxan-hydrogels mit Wassergehalten im Bereich bis zu 80% durch Copolymerisation mit hydrophilen Monomeren herzustellen; derartige Zusammensetzungen sind besonders geeignet als hoch sauerstoffdurchlässige weiche Kontaktlinsen.

Reaktive Monomer, die zusammen mit dem ungesättigten Polysiloxan verwendet werden können, umfassen mono- oder polyethylenisch ungesättigte Monomere, die bei Belichtung mit UV-Strahlung oder durch chemisches Initiieren eine weitere Polymerisation eingehen.

Wenn die polyungesättigten Polysiloxane in bioverträglichen Materialien verwendet werden sollen, insbesondere entweder in harten oder weichen Kontaktlinsen, so ist ein Gleichgewicht zwischen hydrophilen und hydrophoben Eigenschaften erforderlich; es können wasserlösliche sowie wässerunlösliche Comonomere verwendet werden.

Als wasserunlösliche Vinylmonomere ($B_1$), die erfindungsgemäss brauchbar sind, kommen in Betracht:

Acrylate und Methacrylate der allgemeinen Struktur:

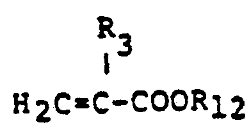

Acrylamide und Methacrylamide der Struktur:

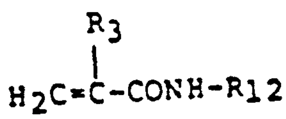

Maleate und Fumarate der Strukturen:

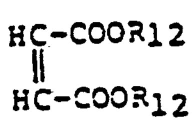

Itaconate:

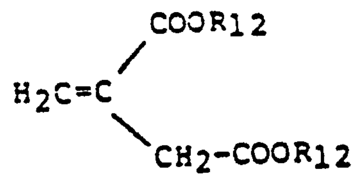

Vinylester:

$R_{12}$-COO-CH = $CH_2$

Vinylether:

$H_2C$ = CH-O-$R_{12}$ ,

worin $R_{12}$ eine lineare oder verzweigte aliphatische, eine cycloaliphatische oder eine aromatische Gruppe mit 1 bis 21 Kohlenstoffatomen ist, und die Ether- oder Thioetherverbindungen oder eine Gruppe -CO-enthalten kann; $R_{12}$ kann auch eine heterocyclische Gruppe sein, die Sauerstoff-, Schwefel- oder Stickstoffatome enthält, oder eine Polypropylenoxid- oder Poly-n-butylenoxid-Gruppe mit 2 bis 50 wiederkehrenden Alkoxyeinheiten.

Ausserdem kann die Gruppe $R_{12}$ Halogenatome, insbesondere Fluor in Form von perfluorierten Alkylgruppen mit 1-12 Kohlenstoffatomen, Siloxangruppen mit 1 bis 6 Si-Atomen oder Gruppen -SO- und -$SO_2$- enthalten.

Beispiele geeigneter Monomerer sind: Methyl-, Ethyl-, Propyl-, Isopropyl-, Butyl-, Isobutyl-, tert-Butyl-, Ethoxyethyl-, Methoxyethyl-, Benzyl-, Phenyl-, Cyclohexyl-, Trimethylcyclohexyl-, Isobornyl-, Dicyclopentadienyl-, Norbornylmethyl-, Cyclododecyl-, 1,1,3,3-Tetramethylbutyl-, n-Butyl-, n-Octyl-, 2-Ethylhexyl-, Decyl-, Dodecyl-, Tridecyl-, Octadecyl-, Glycidyl-, Ethylthioethyl-, Furfuryl-, Hexafluorisopropyl-, 1,1,2,2-Tetrahydroperfluordodecyl-, Tri-, Tetra- oder Pentasiloxanylpropyl-acrylate und -methacrylate, sowie die entsprechenden Amide; N-(1,1-Dimethyl-3-oxobutyl)-acrylamid; Mono- und Dimethyl-fumarat, -maleat und -itaconat; Diethylfumarat; Isopropyl- und Diisopropyl-fumarat und -itaconat; Mono- und Diphenyl- und Methylphenyl-fumarat und -itaconat; Methylvinylether und Methoxyethylvinylether; Vinylacetat, Vinylpropionat, Vinylbenzoat, Acrylnitril, Styrol, α-Methylstyrol und tert-Butylstyrol.

Um die für die Anwendung für Kontaktlinsen benötigte hohe Klarheit zu erzielen, ist es besonders günstig, Comonomere oder Comonomergemische zu verwenden, deren jeweilige Polymere in ihrem Löslichkeitsparameter ($\delta$) und/oder Brechungsindex (RI) den Werten von Polydimethylsiloxan ($\delta$ = 15; RI = 1,43) nahe - kommen. Derartige Monomere sind beispielsweise Isobornylmethacrylat, tert-Butylmethacrylat und Gemische von Kohlenwasserstoffmethacrylaten (RI 1,46) mit Fluor enthaltenden Monomeren, wie Hexafluorisopropylmethacrylat, Trifluorethylmethacrylat, 1,1,2,2-Tetrahydroperfluoralkylmethacrylat oder 4-Thia-6-perfluoralkylhexylmethacrylat, worin das Alkyl eine Kohlenstoffkette mit 5-12 C-Atomen ist (RI-Werte von 1,38-1,40) ($\delta$ < 15). Außerdem erhöhen Perfluoralkylgruppen enthaltende Monomere die Sauerstoffpermeabilität der Polymeren in synergistischer Weise mit dem Polysiloxan stark; als solche sind sie dementsprechend besonders bevorzugte Comonomere.

Zur Herstellung harter Linsen ist der bevorzugte Comonomergehalt 50-85 Gew.-% des gesamten Polymers,wobei bevorzugte Comonomere Methylmethacrylat, Cyclohexylmethacrylat, Isobornylmethacrylat, Isopropylmethacrylat, Isobutylmethacrylat, tert-Butylmethacrylat oder Hexafluorisopropylmethacrylat, Styrol oder Gemische davon sind.

Am bevorzugtesten ist das Comonomere Methylmethacrylat, Isobornylmethacrylat, Isopropylmethacrylat, Isobutylmethacrylat oder Cyclohexylmethacrylat oder ein Gemisch davon. Ebenfalls besonders bevorzugt sind Gemische von Methylmethacrylat und/oder Isobornylmethacrylat mit 1 bis 35 Gew.-%, bezogen auf die Gesamtmonomeren, eines kurzkettigen Vernetzungsmittels, wie Neopentylenglykoldiacrylat oder Ethylenglykol-dimethacrylat oder das Reaktionsprodukt von 1 Mol Isophorondiisocyanat und 2 Mol 2-Hydroxyethylmethacrylat.

Ein anderes besonders bevorzugtes Comonomersystem zur Herstellung harter Linsen ist Vinylacetat/Dimethylmaleat (Molverhältnisse 2/1 bis 5/1) plus ein vorstehend aufgeführtes bevorzugtes Methacrylatmonomeres.

Zur Herstellung weicher Linsen werden Comonomere 2-Ethylhexylacrylat, 2-Ethylhexylmethacrylat, n-Butylacrylat, n-Butylmethacrylat, n-Octylacrylat, n-Octylmethacrylat, n-Decylacrylat, n-Decylmethacrylat,

Perfluoralkyl-($C_6$-$C_{10}$)-substituiertes-Alkyl-acrylat oder -methacrylat, 2-Ethoxyethylacrylat, 2-Ethoxyethylmethacrylat, 2-Methoxyethylacrylat, 2-Methoxyethylmethacrylat, 2-Butoxyethylacrylat, 2-Butoxyethylmethacrylat, 2-(2-Ethoxyethoxy)-ethylacrylat, 2-(2-Ethoxyethoxy)-ethylmethacrylat oder Gemische davon bevorzugt.

Als wasserlösliche Monomere ($B_2$), die erfindungsgemäss eingesetzt werden können, eignen sich: Acrylate und Methacrylate der allgemeinen Struktur:

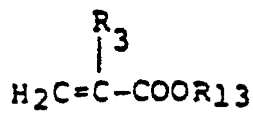 .

$R_{13}$ ist ein Kohlenwasserstoffrest mit 1 bis 10 Kohlenstoffatomen, substituiert durch eine oder mehrere wasserlöslichmachende Gruppen, wie Carboxy, Hydroxy oder tert-Amino, oder eine Polyethylenoxidgruppe mit 2-100 wiederkehrenden Einheiten, oder eine Gruppe, die Sulfat-, Phosphat-, Sulfonat- oder Phosphonatgruppen enthält;

Acrylamide und Methacrylamide der Struktur

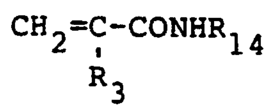 ,

worin $R_{14}$ $R_{13}$ oder $R_5$ ist;

Acrylamide und Methacrylamide der Struktur

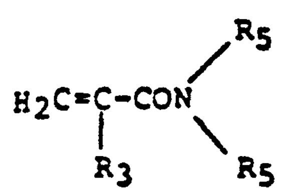 ;

Maleate und Fumarate der Struktur:

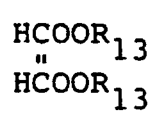 ;

Vinylether der Struktur:

$H_2C=CH\text{-}OR_{13}$ ;

N-Vinyllactame, wie N-Vinyl-2-pyrrolidon.

Beispiele geeigneter wasserlöslicher Monomerer sind:
2-Hydroxyethyl-, 2- und 3-Hydroxypropyl-, 2,3-Dihydroxypropyl-, Polyethoxyethyl- und Polyethoxypropylacrylate und -methacrylate, sowie die entsprechenden Acrylamide und Methacrylamide. Saccharose-, Mannose-, Glucose-, Sorbit-acrylate und -methacrylate.

Acrylamid und Methacrylamid; N-Methylacrylamid und -methacrylamid, Bisacetonacrylamid; 2-Hydroxyethylacrylamid; Dimethylacrylamid und -methacrylamid; Methylolacrylamid und -methacrylamid.

N,N-Dimethyl- und N,N-Diethylaminoethyl-acrylat und -methacrylat, sowie die entsprechenden Acrylamide und Methacrylamide; N-tert-Butylaminoethyl-methacrylat und -methacrylamid; 2- und 4-Vinylpyridin; 4-und 2-Methyl-5-vinylpyridin; N-Methyl-4-vinylpiperidin; 1-Vinyl- und 2-Methyl-1-vinylimidazol; Dimethylallylamin und Methyldiallylamin. Para- und ortho-Aminostyrol; Dimethylaminoethyl-vinylether; N-Vinylpyrrolidon; 2-Pyrrolidinoethyl-methacrylat.

Acrylsäure und Methacrylsäure;

Itaconsäure; Zimtsäure, Krotonsäure, Fumarsäure, Maleinsäure und niedrig-Hydroxyalkyl-mono- und -diester davon, wie 2-Hydroxyethyl- und Di-(2-hydroxyethyl)-fumarat, -maleat und -itaconat, 3-Hydroxypropylbutylfumarat und Di-polyalkoxyalkyl-fumarate, -maleate und -itaconate.

Maleinsäureanhydrid;

Natriumacrylat und -methacrylat, 2-Methacryloyl-oxyethylsulfonsäure, 2-Acrylamido-2-methyl-propansulfonsäure, 2-Phosphatoethyl-methacrylat, Vinylsulfonsäure, Natriumvinylsulfonat, p-Styrolsulfonsäure, Natrium-p-styrolsulfonat und Allylsulfonsäure.

Geeignet sind auch die quaternisierten Derivate kationischer Monomerer: erhalten durch Quaternisieren mit ausgewählten Alkylierungsmitteln, wie halogenierten Kohlenwasserstoffen, wie Methyljodid, Benzylchlorid oder Hexadecylchlorid; Epoxiden, wie Glycidol, Epichlorhydrin, Ethylenoxid; Acrylsäure, Dimethylsulfat; Methylsulfat; Propansulton.

Eine vollständigere Liste von wasserlöslichen Monomeren, die im Rahmen dieser Erfindung brauchbar sind, ist enthalten in:

R.H. Yocum, E.B. Nyquist, Functional Monomers; Band 1, Seiten 424-440 (M. Dekker, N.Y. 1973).

Bevorzugte Monomere sind:

($B_1$) = Methylmethacrylat, Cyclohexylmethacrylat, Isobornylmethacrylat; t-Butyl- und Isobutylmethacrylat, Isopropylmathacrylat, Hexafluorisopropylmethacrylat, 2-Ethylhexylacrylat, n-Butylacrylat, n-Butylmethacrylat, n-Octylacrylat, 2-Ethoxyethylacrylat, Styrol;

($B_2$) = 2-Hydroxyethylmethacrylat; N,N-Dimethylacrylamid; Acrylsäure und Methacrylsäure; N-Vinyl-2-pyrrolidon.

Es kann eine Vielzahl von Divinylverbindungen zusätzlich zu den Monovinylverbindungen verwendet werden. Tatsächlich können 0 bis 50 Gew.-% des Gesamtmonomeren B ein diolefinisches Monomeres ($B_x$) sein. Beispiele für diolefinische Monomere sind:

Allylacrylat und -methacrylat, Ethylenglykol-, Diethylenglykol-, Triethylenglykol-, Tetraethylenglykol- und allgemein Polyethylenoxidglykol-diacrylate und -dimethacrylate; 1,4-Butandiol- und Poly-n-butylenoxidglykol-diacrylate und -dimetharcylate; Propylenglykol- und Polypropylenoxidglykol-diacrylate und -dimethacrylate; Thiodiethylenglykol-diacrylat und -dimethacrylat; Di-(2-hydroxyethyl)-sulfon-diacrylat und -dimethacrylat; Neopentylenglykol-diacrylat und -dimethacrylat; Trimethylolpropan-tri- und -tetraacrylat; Pentaerythrit-tri- und -tetraacrylat; Divinylbenzol; Divinylether; Divinylsulfon; Disiloxanyl-bis-3-hydroxypropyl-diacrylat oder -methacrylat und verwandte Verbindungen.

Bisphenol A-diacrylat oder -dimethacrylat, ethoxyliertes Bisphenol A-diacrylat oder -dimethacrylat; Methylen-bis-acrylamid oder -methacrylamid, Dimethylen-bis-acrylamid oder -methacrylamid; N,N'-Dihydroxyethylen-bis-acrylamid oder -methacrylamid; Hexamethylen-bis-acrylamid oder -methacrylamid; Decamethylen-bis-acrylamid oder -methacrylamid; Allyl- und Diallylmaleat, Triallylmelamin, Diallylitaconat, Diallylphthalat, Triallylphosphit, Polyallylsaccharose, Saccharosediacrylat, Glucosedimethacrylat; und auch ungesättigte Polyester, wie Poly-(alkylenglykolmaleate) und Poly-(alkylenglykolfumarate), wie Poly-(propylenglykolmaleat) und Poly-(polyalkylenoxidglykolmaleat).

Ebenfalls brauchbare Vernetzungsmittel sind die Reaktionsprodukte, erhalten durch Reaktion von 1 Mol Di- oder Triisocyanat der Struktur $OCN-R_4-(NCO)_1$ oder $OCN-R_4-(NCO)_2$, worin $R_4$ wie vorstehend beschrieben ist, mit 2 oder 3 Mol eines Hydroxyalkylacrylats oder -methacrylats, eines Hydroxyalkylvinylethers, Allylalkohols, N-tert-Butylaminoethylmethacrylat oder Bishydroxyethylmaleat oder einer beliebigen aktiven Wasserstoff enthaltenden Verbindung, die vorstehend unter den wasserlöslichen Comonomeren aufgeführt wurden. Wenn ein Überschuß des Isocyanat-funktionellen (Meth)-acrylats zur Verkappung des Polysiloxanpolyalkanols verwendet wird, so kann das nicht-umgesetzte Isocyanat zur Reaktion mit einem Hydroxy- oder Amino-funktionellen Monomeren verwendet werden; so sind auch die Reaktionsprodukte von Isocyanatoethylmethacrylat mit beispielsweise Hydroxyethylmethacrylat oder t-Butylaminoethylmethacrylat bevorzugte Vernetzungsmittel.

Bevorzugt ist das diolefinische Monomere ($B_x$) das Acrylat oder Methacrylat von Allylalkohol, einem gerad- oder verzweigtkettigen Alkylenglykol mit 2 bis 6 Kohlenstoffatomen, von Poly-(ethylenoxid)-glykolen, von Poly-(n-butylenoxid)-glykolen, von Poly-(n-butylenoxid)-glykolen, von Thiodiethylenglykol, von Neopentylenglykol, von Trimethylolpropan oder Pentaerythrit; bevorzugt sind auch Reaktionsprodukte, erhalten durch Reaktion von 1 Mol eines Di- oder Triisocyanats der Struktur $OCN-R_4-(NCO)_v$, worin $R_4$ wie vorstehend definiert ist, und v 1 oder 2 ist, mit 2 oder 3 Mol Hydroxyalkylacrylat oder -methacrylat.

Besonders bevorzugte difunktionelle Comonomere ($B_x$) sind 0 bis 30 Gew.-%, bezogen auf die

Gesamtmonomeren, Neopentylenglykoldiacrylat, das Reaktionsprodukt von 1 Mol Isophorondiisocyanat und 2 Mol 2-Hydroxyethylmethacrylat oder Ethylenglykoldimethacrylat.

Die Monomeren können allein oder in Kombination miteinander verwendet werden, wobei ihren Copolymerisationsparametern die notwendige Aufmerksamkeit gewidmet wird, um sicherzustellen, dass eine Random-Copolymerisation (statistische Copolymerisation) erfolgt. Wenn ausserdem die Polymeren für Kontaktlinsen verwendet werden sollen, so sind ein hoher Klarheitsgrad und die Abwesenheit von Farbe erforderlich, um eine geeignete Monomerkombination zu wählen.

Eine bevorzugte Ausführungsform der Erfindung ist ein Polymeres, worin die Komponente A ein Polysiloxan der Struktur $A_1$, $A_2$, $A_3$, $A_4$ ist, $R_1$ Alkylen mit 3 oder 4 Kohlenstoffatomen ist, $R_2$, $R_a$, $R_b$, $R_c$, $R_d$, $R_e$, $R_f$, $R_g$, $R_h$, $R_i$, $R_j$ und $R_k$ jeweils Methyl sind, $x_1 + x_2$ 10 bis 100 ist, $Y_1$ 0 bis 2 ist, $Y_2$ 1 bis 3 ist, $Z_1$ -O-, -S- oder -NH- ist und $R_4$ ein zweiwertiger Rest eines aliphatischen oder cycloaliphatischen Diisocyanats mit 6 bis 10 Kohlenstoffatomen ist, $Y_1$ oder Y

$$-R_8-Z_2-CO-\underset{R_3}{\underset{|}{C}}=\underset{R_6}{\underset{|}{CH}}$$

ist,

$R_8$ Ethylen ist, $Z_2$ -O- oder $-NC(CH_3)_3-$ ist, $R_3$ Wasserstoff oder Methyl ist und $R_6$ Wasserstoff ist.

Die erfindungsgemäßen transparenten, harten und Sauerstoff-durchlässigen Polymeren werden in einer Synthese-Endstufe durch Copolymerisation, mit freien Radikalen initiert, erzeugt, entweder in der Masse oder in Anwesenheit einem geringen Menge von Lösungsmitteln. Die Polymerisation wird zweckmässig mit einem Initiator, der freien Radikale erzeugt, bei einer Temperatur im Bereich von etwa 40 °C bis etwa 105 °C durchgeführt, wobei die bevorzugte Temperatur im Bereich zwischen etwa 50 °C und etwa 100 °C liegt. Diese Initiatoren sind vorzugsweise Peroxide oder Azokatalysatoren mit einer Halbwertszeit bei der Polymerisationstemperatur von mindestens 20 min. Typische brauchbare Peroxyverbindungen umfassen: Isopropylpercarbonat, tert-Butylperoctoat, Benzoylperoxid, Lauroylperoxid, Decanoylperoxid, Acetylperoxid, Bernsteinsäureperoxid, Methylethylketonperoxid, tert-Butylperoxyacetat, Propionylperoxid, 2,4-Dichlorbenzoylperoxid, tert-Butylperoxypivalat, Pelargonylperoxid, 2,5-Dimethyl-2,5-bis-(2-ethylhexanoylperoxy)-hexan, p-Chlorbenzoylperoxid, tert-Butylperoxybutyrat, tert-Butylperoxymaleinsäure, tert-Butylperoxyisopropylcarbonat, Bis-(1-hydroxycyclohexyl)-peroxid. Azoverbindungen umfassen: 2,2-Azo-bis-isobutyronitril; 2,2'-Azo-bis-(2,4-dimethylvaleronitril); 1,1'-Azo-bis-(cyclohexancarbonitril), 2,2'-Azo-bis-(2,4-dimethyl-4-methoxyvaleronitril).

Andere freie Radikale erzeugende Mechanismen können angewendet werden, wie Röntgenstrahlen, Elektronenstrahlen und UV-Strahlung. Die Herstellung von Kontaktlinsen-Rohlingen durch UV-Bestrahlung, in Anwesenheit eines Photoinitiators, wie Diethoxyacetophenon, 1-Hydroxycyclohexyl-phenylketon, 2,2-Dimethoxy-2-phenylacetophenon, Phenothiazin, Diisopropylxanthrogendisulfid, Benzoin und Benzoinderivaten, ist eine bevorzugte Methode.

Die Initiatormenge kann von 0,002 bis 1 Gew.-%, bezogen auf die Monomeren und Makromeren variieren, beträgt jedoch vorzugsweise 0,03 bis 0,3 Gew.-% davon.

Nach einer bevorzugten Labormethode zur Herstellung des Polymeren in der Form eines Zylinders wird ein flexibler Polymerschlauch mit der Zusammensetzung von Makromer, Monomeren und Katalysator gefüllt, worauf man das Gemisch während etwa 2 h bei 80 °C reagieren lässt. Der fertiggestellte Gegenstand wird durch Längsaufschlitzen des Schlauchs und Abstreifen von dem Polymerkörper entfernt.

Eine andere bevorzugte Methode zur Herstellung des Polymeren besteht in der Bestrahlung mit Ultraviolettlicht in Anwesenheit eines Photoinitiators und unter Verwendung von Kunststoff-Formen, die UVtransparent sind, wie Formen aus Polypropylen oder anderen UV-durchlässigen Kunststoffen.

Vorzugsweise wird die Reaktion in einer inerten Atmosphäre durchgeführt, wenn sie in offenen Formen erfolgt. Es ist bekannt, daß Sauerstoff die Polymerisation inhibiert und zu verlängerten Polymerisationszeiten Anlass gibt. Werden zur Herstellung von Gegenständen geschlossene Formen verwendet, so bestehen die Formen aus inerten Materialien mit einer geringen Sauerstoffdurchlässigkeit und nicht-Klebrigkeits-Eigenschaften. Beispiele für geeignete Formmaterialien sind Poly-(tetrafluorethylen), wie Teflon®, Silikonkautschuk, Polyethylen, Polypropylen und Polyester, wie Mylar®. Glas- und Metallformen können verwendet werden, wenn ein geeignetes Entformungsmittel eingesetzt wird.

Die vorliegende Erfindung betrifft auch eine Polymerisationszusammensetzung, umfassend:

(A) etwa 5 bis etwa 75 Gew.-% der Komponenten (A) und (B) eines linearen oder verzweigten Polysiloxanmakromeren mit einem Molekulargewicht von etwa 400 bis etwa 100000, gemessen durch

Endgruppenanalyse oder Gelpermeationschromatographie, wobei das Makromere mindestens zwei endständige oder seitliche polymerisierbare olefinische Gruppen je Molekulargewichtseinheit des Polysiloxans von 5000 aufweist, wobei diese Gruppen an das Polysiloxan durch eine Urethan-, Thiourethan- oder Harnstoffbindung gebunden sind, und das Makromere die Struktur $A_1$, $A_2$, $A_3$, $A_4$ (genauer vorstehend beschrieben) hat und

(B) 95 bis 25 Gew.-% von einem oder mehreren mono-, di- oder trifunktionellen Vinylmonomeren, das durch Polymerisation mit freien Radikalen polymerisierbar ist.

Insbesondere betrifft die vorliegende Erfindung eine polymerisierbare Zusammensetzung, umfassend:

(A) 15 bis 60 Gew.-% eines linearen oder verzweigten Polysiloxanmakromeren mit einem Molekulargewicht von etwa 400 bis etwa 100000, gemessen durch Endgruppenanalyse oder Gelpermeationschromatographie, wobei das Makromere mindestens zwei endständige oder seitliche polymerisierbare olefinische Gruppen je Molekulargewichtseinheit des Polysiloxans von 5000 hat, wobei diese Gruppen an das Polysiloxan durch eine Urethan-, Thiourethan- oder Harnstoffbindung gebunden sind, und das Makromere die Struktur $A_1$, $A_2$, $A_3$ oder $A_4$ (genauer vorstehend beschrieben) hat, und

(B) etwa 85 bis 40 Gew.-%, eines Gemisches aus wasserlöslichen und wasserunlöslichen Monomeren oder eines wasserunlöslichen Monomeren, wobei die Monomeren monoolefinisch, diolefinisch oder ein Gemisch von monoolefinischen und diolefinischen Monomeren sind, 0 bis 100 Gew.-% der Gesamtmonomeren wasserunlöslich sind, 100 bis 0 Gew.-% der Gesamtmonomeren wasserlöslich sind und 50 bis 0 %, insbesondere 30 bis 0 % der Gesamtmonomeren durch ein diolefinisches Monomeres ($B_x$) ersetzt sind.

Die erfindungsgemässen Zusammensetzungen und die Polymeren daraus können so aufgebaut werden, dass sie entweder als hartes Kontaktlinsenmaterial oder als weiches Kontaktlinsenmaterial verwendet werden können. Es sind verschiedene Comonomere und verschiedene Gehalte von Polysiloxanmakromer erforderlich, um eine optimale Leistungsfähigkeit in jedem der beiden Kontaktlinsentypen zu erzielen.

Bei der Wahl der Polysiloxankomponente und des Vinylmonomeren für eine harte Kontaktlinsenzusammensetzung ist es wichtig,zu einem Gemisch zu gelangen, das klare Polymere mit ausreichender Dimensionsstabilität und Sauerstoffpermeabilität ergibt. Manchmal ist ein Gemisch von Comonomeren vorteilhaft, um eine Phasentrennung und dadurch Trübung zu vermeiden. Es ist auch leichter, klare Produkte mit Polysiloxanen mit relativ niedrigem Molekulargewicht zu erzielen als mit Polysiloxanen mit hohem Molekulargewicht. Polysiloxane mit einer kurzen Kettenlänge zwischen den Vernetzungen ergeben auch härtere dimensionsstabilere Polymere; ihre Sauerstoffdurchlässigkeit ist jedoch im Vergleich mit Polysiloxanen mit längerer Kettenlänge und daher niedrigerer Vernetzungsdichte verringert. Durch geeignete Wahl der Monomer(en) und des Polysiloxanmakromers ist es somit möglich, die physikalischen Eigenschaften und die Sauerstoffpermeabilität der vorliegenden Silikonpolymeren von hart bis starr zu kautschukartig und weich in einem beträchtlichen Ausmass zu variieren. Zusätzlich zu harten und weichen Kontaktlinsen sind die erfindungsgemässen Polymeren wegen ihrer guten Gewebeverträglichkeit und Sauerstoffdurchlässigkeit sowie ihrer Festigkeit und Elastizität. Auch besonders zur Verwendung als intramuskuläre und subkutane Implantate in Warmblüter-Tieren und als Kontaktlinsenmaterial geeignet. Aus den gleichen Gründen können die erfindungsgemässen Materialien zu Blutgefässersatz oder ausserkörperlichen Blutbahnen geformt werden.

Für die Herstellung harter Kontaktlinsen umfaßt die bevorzugte Zusammensetzung (A) 15 bis 40 Gew.-% eines Polysiloxanmakromeren und (B) 85 bis 60 Gew.-% eines Gemischs von wasserunlöslichen Monomeren ($B_1$), wasserlöslichen Monomeren ($B_2$) und einem Diolefinmonomeren ($B_x$), worin, basierend auf den Gew.-% des Gesamtgewichts der Monomeren, $B_1$ 60 bis 95% ist, $B_2$ 20 bis 0% ist und $B_x$ 20 bis 5% ist. Die bevorzugten wasserunlöslichen Monomeren $B_1$ sind Methylmethacrylat, Isopropylmethacrylat, Isobutylmethacrylat, tert-Butylmethacrylat, Cyclohexylmethacrylat, Isobornylmethacrylat und Gemische davon. Die bevorzugten wasserlöslichen Monomeren $B_2$ sind 2-Hydroxyethylmethacrylat, N,N-Dimethylacrylamid, Acrylsäure, Methacrylsäure oder N-Vinyl-2-pyrrolidon oder Gemische davon. Das bevorzugte diolefinische Monomere $B_x$ ist Neopentylenglykoldiacrylat, Ethylenglykoldimethacrylat oder das Reaktionsprodukt von 1 Mol Isophorondiisocyanat und 2 Mol 2-Hydroxyethylmethacrylat.

Zur Herstellung weicher Kontaktlinsen mit niedriger Wasserabsorbtion umfaßt die bevorzugte Zusammensetzung (A) 40 bis 60 Gew.-% eines Polysiloxanmakromeren und (B) 60 bis 40 Gew.-% einem Gemischs von wasserunlöslichem Monomeren ($B_1$), wasserlöslichem Monomeren ($B_2$) und einem diolefinischen Monomeren ($B_x$), worin, basierend auf den Gew.-% des Gesamtgewichts der Monomeren, $B_1$ 70 bis 100%, $B_2$ 25 bis 0% und $B_x$ 5 bis 0% ist. Die bevorzugten wasserunlöslichen Monomeren ($B_1$) sind Ethylacrylat oder -methacrylat, n-Butylacrylat oder -methacrylat, n-Hexylacrylat oder -methacrylat, 2-Ethylhexylacrylat oder -methacrylat, n-Octylacrylat oder -methacrylat, n-Decylacrylat oder -methacrylat oder Gemische davon mit Methyl- oder Isobornylmethacrylat. Die bevorzugten wasserlöslichen Monomeren ($B_2$)

und diolefinischen Monomeren ($B_x$) sind solche, die vorstehend bei der Herstellung harter Kontaktlinsen aufgeführt wurden.

Zur Herstellung von Hydrogel-Kontaktlinsen umfaßt die bevorzugte Zusammensetzung (A) 20 bis 60 Gew.-% eines Polysiloxanmakromeren und (B) 80 bis 40 Gew.-% eines Gemischs von wasserunlöslichem Monomerem ($B_1$), von wasserlöslichem Monomerem ($B_2$) und einem diolefinischen Monomeren ($B_x$), worin, basierend auf den Gew.-% des Gesamtgewichts der Monomeren, $B_1$ 80 bis 0%, $B_2$ 15 bis 100% und $B_x$ 5 bis 0% ist. Die bevorzugten wasserlöslichen Monomeren ($B_2$) sind N,N-Dimethylacrylamid, N-Vinyl-2-pyrrolidon,2-Hydroxyethylmethacrylat, Acrylamid oder Gemische davon. Die bevorzugten wasserunlöslichen Monomeren ($B_1$) und diolefinischen Monomeren ($B_x$) sind solche, die vorstehend bei der Herstellung harter oder weicher Kontaktlinsen aufgeführt wurden.

Ein Beispiel für eine bevorzugte Zusammensetzung zur Herstellung einer harten Kontaktlinse umfaßt (A) 30 Gew.-% des Polysiloxans der Struktur $A_2$, $Z_1$ und $Z_2$ sind jeweils -O- und $y_2$ ist 2, und 70 Gew.-% Monomeres (B), worin, basierend auf Gew.-% der Gesamtmonomeren, $B_1$ 71,4% Methylmethacrylat ist, $B_2$ 5,7% 2-Hydroxyethylmethacrylat ist und $B_x$ 22,9% Neopentylenglykoldiacrylat ist.

Ein Beispiel für eine bevorzugte Zusammensetzung zur Herstellung einer weichen Kontaktlinse umfaßt (A) 50 Gew.-% des Polysiloxans der Struktur $A_1$, worin $x_1$ 25-30 ist, $Z_1$ und $Z_2$ jeweils -O-sind und y 0 ist, und 50 Gew.-% Monomere (B), worin $B_1$ 80% eines 50/50 Gemischs von Methylmethacrylat/2-Ethylhexylacrylat ist und $B_2$ 20% N,N-Dimethylacrylamid ist.

Ein Beispiel für eine bevorzugte Zusammensetzung zur Herstellung von Kontaktlinsen vom Hydrogeltyp umfaßt (A) 30 Gew.-% des Polysiloxans der Struktur $A_2$, worin $Z_1$ und $Z_2$ jeweils -O- sind und $Y_2$ 2 ist,und 70 Gew.-% von Monomeren (B), worin $B_1$ 20% Methylmethacrylat und $B_2$ 50% N,N-Dimethylacrylamid ist.

Die Erfindung betrifft auch ein Polymeres, das das Copolymerisationsprodukt der Zusammensetzungen der Komponenten (A) und (B) umfaßt. Die bevorzugten Ausführungsformen der Zusammensetzungen gelten auch für die Polymeren.

Obwohl die Erfindung vorwiegend auf die Herstellung von Kontaktlinsen ausgerichtet ist, liegt es auch im Rahmen der Erfindung, ein beliebiges der vorstehend erwähnten Monomeren zu verwenden, um starke $O_2$-durchlässige Polymere mit einem weiten Bereich physikalischer Eigenschaften, von hart und starr bis kautschukartig und weich, herzustellen, die beispielsweise brauchbar sind als Bandagen, Körperimplantate und Katheter.

Die erfindungsgemässen Polysiloxancopolymeren können auch üblichen Behandlungen zur Verbesserung der Benetzbarkeit von hydrophoben Oberflächen, wie Plasmabehandlung, Strahlungspfropfen und Oxidation, unterworfen werden.

Die aus den erfindungsgemässen Polymeren hergestellten Kontaktlinsen sind frei von Füllstoffen, hydrolytisch stabil, biologisch inert, transparent und durchlässig für Sauerstoff, um den Sauerstofftransport für die Erfordernisse der menschlichen Hornhaut ausreichend zu machen.

Die folgenden Beispiele dienen nur zu Zwecken der Erläuterung.

In den folgenden Beispielen wird die spezifische Sauerstoffpermeabilität ($O_2DK$) bestimmt durch Messen der Permeabilität für aufgelösten Sauerstoff bei 35° C mit einer polarographischen Elektrode in einer mit Luft gesättigten wäßrigen Umgebung, und wird ausgedrückt in Einheiten

$$O_2DK = \frac{cm^3(STP) x\ cm}{cm^2 x\ sec\ x\ mbar} \quad x\ 7,6923076x10^9$$

Die Benetzbarkeit wird bestimmt durch Messen des Kontaktwinkels eines n-Octantröpfchens, das sich auf der unteren Oberfläche einer 1 mm dicken Folienprobe gebildet hatte, die in mit Octan gesättigtes destilliertes Wasser bei 36° C getaucht worden war. Bei dieser Messung bedeuten hohe Ziffern eine hohe Benetzbarkeit.

Als Bezugsmaterialien für $O_2$-DK-Messungen wurden mit Wasser gequollenes Poly-(2-hydroxyethylmethacrylat) (Polyhema; 39% Wassergehalt; das häufigste weiche Linsenmaterial) und CAB, Cellulose-acetatbutyrat (ein Sauerstoff-durchlässiges hartes Linsenmaterial) verwendet; zur Benetzbarkeit und Härte wurden Polyhema und Poly-(methylmethacrylat) als Bezugsmaterialien verwendet. Die $O_2$.DK-, Shore-D- und Kontaktwinkel-Werte für diese Materialien sind nachstehend aufgeführt.

Die Härte wurde bestimmt unter Verwendung eines Shore-D-Durometers auf polierten Oberflächen von aus dem Zentrum geschnittenen Knöpfen von 10 mm Durchmesser und 8 mm Höhe.

| Bezugsmaterialien | $O_2$.DK | Shore-D | Octan/Wasser Kontaktwinkel |
|---|---|---|---|
| Polyhema (39% $H_2O$) | 12 | - | 151 |
| Poly-(methylmethacrylat) | <0,1 | 92 | 92 |
| Celluloseacetat-butyrat . | 8,2 | 80 | 161 |

Zusammenstellung der Abkürzungen

| | |
|---|---|
| P-D-M-S- | Polydimethylsiloxan |
| IEM - | 2-Isocyanatoethylmethacrylat |
| DBTL - | Dibutylzinn-dilaurat |
| HEMA - | 2-Hydroxyethylmethacrylat |
| IPDI - | Isophorondiisocyanat |
| NPDA - | Neopentylenglykoldiacrylat |

Die folgenden beiden Beispiele zeigen, daß ein überlegenes Polydimethylsiloxan-trimethacrylat mit der gleichen engen MG-Verteilung wie das Ausgangs-Polysiloxantriolmaterial in einer einstufigen Reaktion im Beispiel 1 erhalten wird, im Vergleich mit einem multidispersen MG eines PDMS-Methacrylats nach dem Stand der Technik, erhalten in einer Zweistufenreaktion, wie im Beispiel 2 ersichtlich.

Beispiel 1

Synthese von PDMS-Trimethacrylat aus PDMS-Triol und IEM.

Ein 3-Halskolben, ausgerüstet mit Rührer, Thermometer, Kühler und Stickstoffeinlaßrohr wird mit 91,5 g (0,015 Mol) eines trihydroxyalkyl-funtionellen Polydimethylsiloxans (Dow Corning Fluid '1248', MG 6100) beschickt, das von flüchtigen Anteilen durch zweimaliges Hindurchleiten durch einen Wischfilmverdampfer bei 120 °C/0,013 mbar befreit worden war. Der Kolben wird mit Stickstoff bespült und 7,68 g (0,0495 Mol) 2-Isocyanatoethylmethacrylat (IEM) werden zugesetzt, gefolgt von 0,028 g (0,028 % des Gesamten) Dibutylzinn-dilaurat (DBTL) als Katalysator. Das Gemisch wird bei 25 °C gerührt und das Verschwinden der NCO-Gruppe wird durch Infarot (IR)-Spektroskopie verfolgt. Nach 4 h verblieb nur eine geringe Menge an NCO, und dieses überschüssige Isocyanat wird durch vollständige Umsetzung mit 0,62 g (0,0047 Mol) 2-Hydroxyethylmethacrylat (HEMA) entfernt. Das resultierende Produkt ist ein klares, farbloses, viskoses Harz. Die Gelpermeationschromatographie (GPC) zeigt eine enge Ein-Peak-Molekulargewichts(MG)-Verteilung, identisch mit der des Ausgangs-PDMS-Triols, und eine geringe MG-Fraktion, die aus dem HEMA-IEM-Addukt besteht.

Schematische Struktur:

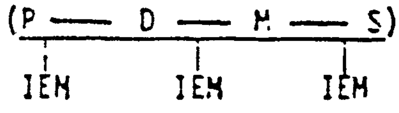

Beispiel 2 (Vergleich)

Synthese von PDMA-Trimethylacrylat aus PDMS-Triol, Isophorondiisocyanat und HEMA.

Nach der Verfahrensweise von Beispiel 1 werden 91,5 g (0,015 Mol) des gleichen PDMS-Triols ('1248', Dow Corning) unter Stickstoff mit 10.5 g (0,0473 Mol) 1-(Isocyanatomethyl-5-isocyanato-1,3,3-trimethylcyclohexan (Isophorondiisocyanat, IPDI) und 0,0125 g DBTL als Katalysator gerührt. Das Gemisch wird 4 h bei 25 °C gerührt, wonach der NCO-Gehalt auf 1,98% abgesunken ist (2% wären der theoretische Endpunkt). Zu diesem Zeitpunkt werden 11 g HEMA zugesetzt und das Gemisch wird unter Stickstoff bei 25 °C

gerührt, bis alle NCO-Gruppen reagiert haben, was durch IR-Spektroskopie bestimmt wird. Das resultierende Produkt ist ein klares, farbloses, viskoses Harz, dessen GPC-Prüfung im Gegensatz zum Harz des Beispiels 1 4 Peaks mit 4 unterschiedlichen MGs zeigt als Ergebnis der Kettenverlängerung, sowie eine Fraktion mit niedrigem Molekulargewicht, die aus dem IPDI-HEMA-Diaddukt besteht.

Beispiel 3

Synthese von PDMS-Dimethacrylat aus PDMA-Triol und IEM.

Nach der Verfahrensweise des Beispiels 1 wird ein PDMS-Dimethacrylat unter Verwendung von 123 g (0,02 Mol) des '1248'-PDMS-Triols und 6,206 g (0,04 Mol) IEM hergestellt. Man erhält ein klares, viskoses Harz mit der gleichen MG-Verteilung wie das Ausgangsmaterial PDMS. Das Produkt von Beispiel 3 enthält noch 1/3 der ursprünglichen Hydroxygruppen.

Schematische Struktur:

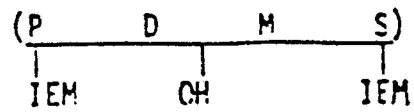

Beispiel 4

Synthese von PDMA-Dimethacrylat aus einem teilweise verkappten PDMS-Triol und IEM.

Nach der Arbeitsweise von Beispiel 1 werden 100 g (0,0143 Mol) trihydroxyalkyl-funktionelles Polydimethylsiloxan (Dow Corning Fluid '1248'; MG 6986) mit 1,42 g (0,0143 Mol) n-Butylisocyanat, unter Verwendung von 0,025% Dibutylzinn-dilaurat als Katalysator bei 25 °C 4 h umgesetzt. Das resultierende Produkt ist ein PDMS mit im Durchschnitt 2 Hydroxylgruppen pro Molekül.

3,33 g (0,0048 Mol) dieses PDMS-Diols werden mit 1,55 g (0,0101 Mol) 2-Isocyanatoethylmethacrylat umgesetzt, um die verbliebenen Hydroxygruppen zu verkappen. Das Verschwinden der Isocyanatfunktionalität wird durch Infrarot-Spektroskopie verfolgt.

Man erhält ein klares viskoses Harz mit einer Molekulargewichtsverteilung identisch zu den Harzen der Beispiele 1 und 3 und dem Ausgangsmaterial PDMS.

Schematische Struktur:

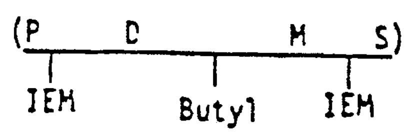

Beispiel 5

Synthese von kettenverlängerten Polysiloxan-polymethacrylaten aus teilweise blockierten PDMS-Triolen.

Nach der Verfahrensweise von Beispiel 1 werden 123 g (0,02 Mol, MG = 6150) Trihydroxyalkylpolydimethylsiloxan (Dow Corning Fluid '1248') mit 3,103 g (0,02 Mol) 2-Isocyanatoethylmethacrylat umgesetzt.

24,8 g (0,004 Mol) dieses mono-IEM-substituierten PDMS werden mit 0,467 g (0,002 Mol + 5% Überschuß) Isophorondiisocyanat umgesetzt. Das Verschwinden der NCO-Funktionalität wird durch IR-Spektroskopie verfolgt. Die verbliebenen Hydroxygruppen werden dann mit 0,62 g (0,004 Mol) IEM umgesetzt. Das resultierende klare, viskose Harz hat ein wesentlich höheres MG als das Harz von Beispiel 1, bestimmt durch Gelpermeationschromatographie.

Schematische Struktur:

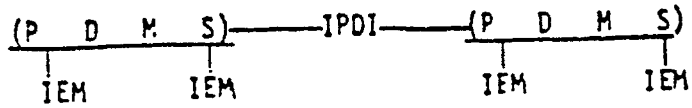

Die folgenden Beispiele wurden durchgeführt,um ein PDMS-Methacrylat mit höherem Molekulargewicht zur Synthese eines weniger vernetzten und weicheren Kontaktlinsenmaterials zu schaffen.

Beispiele 6-14 (Vergleich)

Versuche zur Steuerung der Kettenverlängerung von PDMS-Triol durch Reaktion mit verschiedenen Mengen an Diisocyanat.

Nach der Verfahrensweise von Beispiel 2, werden PDMS-Triol '1248' und Isophorondiisocyanat (IPDI) in folgenden Mengen und Verhältnissen umgesetzt.

| Beispiel | PDMS-Triol '1248'/IPDI g/g | | Mol/Mol | | Äqv./Äqv. | Produkt |
|---|---|---|---|---|---|---|
| 6 | 61 | 11.1 | 1 | 0.5 | 3/1.0 | alle Materialien vernetzt |
| 7 | 61 | 16.6 | 1 | 0.75 | 2/1.0 | |
| 8 | 61 | 19.4 | 1 | 0.875 | 1.7/1.0 | |
| 9 | 30.5 | 11.1 | 1 | 1.00 | 1.5/1.0 | |
| 10 | 30.5 | 14.7 | 1 | 1.33 | 1.13/1.0 | |
| 11 | 30.5 | 16.7 | 1 | 1.5 | 1.0/1.0 | |
| 12 | 30.5 | 22.2 | 1 | 2 | 1.33/1 | |
| 13 | 30.5 | 27.8 | 1 | 2.5 | 2/1 | |
| 14 | 30.5 | 33.3 | 1 | 3.0 | 2.5/1.0 | klares, sehr viskoses Harz |

Nur Beispiel 14 führt zu einem PDMS-Isocyanatzwischenprodukt, das zur weiteren Synthese von mit Methacrylat verkapptem PDMS durch Reaktion mit 2-Hydroxyethylmethacrylat verwendet werden kann. Das mit Methacrylat verkappte PDMS-Makromere ist äußerst viskos, und bei der Analyse durch GPC ist ersichtlich, daß es aus mindestens vier verschiedenen MG-Fraktionen, verglichen mit der gleichmässigen MG-Verteilung des Makromeren von Beispiel 1, besteht.

Beispiel 15

Synthese von PDMS-Dimethacrylaten aus PDMS-Diolen und IEM.

21,94 g (0,005 Mol) eines Polydimethylsiloxan-dialkanols (Shin-Etsu X-61-504A; MG = 4388) werden mit 0,555 g (0,0025 Mol) Isophorondiisocyanat (IPDI) bei 25°C während 6 h unter Verwendung von 0,009 g Dibutylzinn-dilaurat als Katalysator umgesetzt. Die restlichen Hydroxygruppen werden in einer zweiten Stufe durch Reaktion mit 0,776 g (0,005 Mol) 2-Isocyanatoethylmethacrylat während 5 h verkappt. Das so

erhaltene modifizierte Polysiloxanmakromere mit endständigen Methacrylatgruppen ist ein klares und viskoses Harz mit einem MG von etwa 9000.

Schematische Struktur:

IEM-(PDMS)-IPDI-(PDMS)-IEM

Beispiel 16

Unter Verwendung der gleichen Verfahrensweise wie im Beispiel 15 wird ein stärker kettenverlängertes PDMS-Dimethacrylat hergestellt aus 21,94 g (0,005 Mol) PDMS-Diol (Shin-Etsu X61-504A), 0,860 g (0,00375 Mol) IPDI und 0,387 g (0,0025 Mol) IEM. Das resultierende Harz ist farblos und sehr viskos mit einem MG von etwa 18500.

Schematische Struktur:

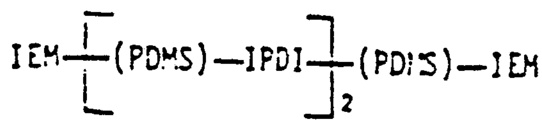

Beispiel 17

Unter Verwendung der gleichen Verfahrensweise wie im Beispiel 15 wird ein Polydimethylsiloxandimethacrylat hergestellt durch Reaktion von 12,19 g (0,005 Mol) eines PDMS-Dialkanols (Shin-Etsu X-61-504A 1000, MG = 2438) mit 1,552 g (0,01 Mol) 2-Isocyanatoethylmethacrylat in Anwesenheit von 0,01 g Dibutylzinn-dilaurat. Man erhält ein klares, leicht viskoses Harz mit einem MG von 2749.

Schematische Struktur:

IEM - (PDMS) - IEM

Beispiel 18

Unter Verwendung der gleichen Verfahrensweise wie im Beispiel 15 wird ein Polydimethylsiloxandimethacrylat hergestellt durch Reaktion von 24,59 g (0,005 Mol) eines PDMS-Dialkanols (Shin-Etsu X-61-504A 2000, MG = 4918) mit 1,552 g (0,01 Mol) 2-Isocyanatoethylmethacrylat in Anwesenheit von 0,01 g Dibutylzinn-dilaurat. Man erhält ein klares, leicht viskoses Harz mit einem MG von 5228.

Schematische Struktur:

IEM - (PDMS) - IEM

Beispiel 19

Synthese von PDMS-Dimethacrylat aus PDMS-Diamin und IEM.

21,9 g (0,01 Mol) eines Bis-3-aminopropyl-terminierten Polydimethylsiloxans (MG 2190, Petrarch Systems, Inc. PS-510) werden mit 3,1 g (0,02 Mol + 5% Überschuß) 2-Isocyanatoethylmethacrylat, gelost in 6 g wasserfreiem Diethylether, umgesetzt. Die Temperatur des Gemischs wird bei 25° C gehalten, und es wird weitere 3 h gerührt. Das Verschwinden von OCN-Gruppen wird durch IR-Spektroskopie verfolgt. Das Lösungsmittel wird bei 50° C/0,026 mbar unter Verwendung eines Rotationsverdampfers, verdampft. Man erhält ein klares, viskoses Harz mit einem MG von etwa 2500.

Schematische Struktur:

IEM{PDMS}IEM

Beispiel 20

Nach der gleichen Verfahrensweise wie im Beispiel 15 wird ein kettenverlängertes Polyharnstoff-PDMS hergestellt aus 21,9 g (0,01 Mol) Bis-3-aminopropyl-endständigem PDMS, indem man es zuerst mit 1,48 g (0,0067 Mol) IPDI in 10 ml Diethylether umsetzt und anschliessend die restlichen $NH_2$-Gruppen mit 1,08 g (0,0067 Mol + 5 % Ueberschuss) IEM verkappt. Man erhält ein klares, viskoses Harz mit einem MG von etwa 8000.

Schematische Struktur:

IEM{(PDMS)-IPDI}$_2$-(PDMS)-IEM

Beispiel 21

Synthese von PDMS-Dimethacrylat aus PDMS-Dithiolen und IEM.

27,3 g (0,01 Mol) eines Polydimethylsiloxan-dialkylethanthiols (Dow Corning Fluid x 2-8024, MG 2730) werden mit 3,1 g (0,022 Mol) 2-Isocyanatoethylmethacrylat bei 25 °C 4 h unter Verwendung von 0,066% Triethylamin als Katalysator umgesetzt. Das überschüssige Isocyanat wird mit tert-Butylaminoethylmethacrylat (0,002 Mol) verkappt. Das Verschwinden der Isocyanatfuntionalität wird durch Infrarot-Spektroskopie verfolgt. Man erhält ein klares, viskoses Harz, das aus einem PDMS-Dimethacrylat mit einem MG von etwa 3100 besteht, und eine kleinere Menge des Reaktionsprodukts von IEM mit t-Butylaminoethylmethacrylat.

Schematische Struktur:

IEM{PDMS}IEM

Beispiele 22-27

Synthese von Materialien, die für harte Kontaktlinsen geeignet sind.

30 g des Trimethacrylat-PDMS gemäss Beispiel 1 werden mit 4 g HEMA, 16 g Neopentylenglykoldiacrylat (NPDA) und 50 g Methylmethacrylat vermischt. 0,2 g 1-Hydroxycyclohexylphenylketon, Photoinitiator A, werden zugesetzt und das Gemisch wird gerührt, bis es klar ist. Nach dreimaligem Entgasen im Vakuum und Abdecken mit Stickstoff wird das Gemisch durch UV-Strahlung polymerisiert und zwar in Form von Kontaktlinsenrohlingen (runde Knöpfe, 13 mm Durchmesser, 9 mm Höhe) in einer Polypropylenform für die Härtemessung und Untersuchungen der Verarbeitbarkeit, und in Form von 0,1 mm dicken Folien zwischen mit Mylar ausgekleideten Glasplatten zur Messung der Sauerstoffdurchlässigkeit.

Unter Verwendung der gleichen Verfahrensweise werden Monomergemische mit den nachstehenden Zusammensetzungen hergestellt und polymerisiert; man erhält klare und harte Polymere mit den folgenden physikalischen Eigenschaften. Alle Polymeren können zu harten bis halbharten Kontaktlinsen mit ausgezeichneter Sauerstoffdurchlässigkeit geschnitten und poliert werden.

| Bsp. Nr. | Verbindung von Beispiel | PDMS-IEM-Addukt | | | Comonomeres[2)] % | | | | | Shore D Härte | $O_2$.DK 34°C |
|---|---|---|---|---|---|---|---|---|---|---|---|
| | | L[1)] | MG | % | MMA | IBMA | NPDA | GMA | HEMA | | |
| 22 | 1 | 3 | 6500 | 30 | 50 | - | 16 | - | 4 | 76 | |
| 23 | 1 | 3 | 6500 | 30 | - | 54 | 16 | - | 4 | 78 | 33 |
| 24 | 1 | 3 | 6500 | 30 | - | 50 | 16 | 4 | 4 | 78 | 30 |
| 25 | 4 | 2 | 6500 | 30 | 50 | - | 16 | - | 4 | 63 | 35 |
| 26 | 17 | 2 | 3000 | 30 | 50 | - | 16 | - | 4 | 78 | 17 |
| 27 | 17 | 2 | 2749 | 25 | 55 | - | 16 | | 4 | 80 | 25 |

1) L = theoretische Funktionalität

2) MMA: Methylmethacrylat
IBMA: Isobornylmethacrylat
NPDA: Neopentylglykoldiacrylat
GMA: Glycidylmethacrylat
HEMA: 2-Hydroxyethylmethacrylat

Beispiele 28-34

Synthese von Materialien, geeignet für weiche, hydrophobe Kontaktlinsen (Silikonkautschuktyp).

Unter Verwendung der gleichen Verfahrensweise wie im Beispiel 22 werden PDMS-Methacrylatmakromere mit Comonomeren und Photoinitiator A vermischt und wie beschrieben polymerisiert. Die Zusammensetzung und die physikalischen Eigenschaften der Materialien sind in der folgenden Tabelle aufgeführt.

| Bsp. Nr. | PDMS-IEM von Beispiel | $L^{3)}$ | MG | % | Comonomere 1) | Shore-A Härte | Zugfestigkeit $N/mm^2$ x$10^2$ | Dehnung % | Biegungswinkel 2) ∡ | $O_2$·DK |
|---|---|---|---|---|---|---|---|---|---|---|
| 28 | 1 | 3 | 6500 | 50 | EHA 30 GMA 20 | 60 | 72.5 | 45.3 | 36 | - |
| 29 | | | " | 40 | " 40 " 20 | 51 | 36.12 | 43.6 | 40 | 74.8 |
| 30 | 5 | 4 | 13000 | 50 | BEHA 40 GMA 40 | 48 | 53.79 | 55 | 42 | |
| 31 | | | " | 50 | EHA 30 " 20 | 56 | 91.2 | 72.7 | 38 | - |
| 32 | | | " | 50 | SiMA 50 | 47 | 126.34 | 127.8 | 62 | 97.5 |
| 33 | 13 | 2 | 9000 | 50 | EEHA 50 | 39 | 30.5 | - | 56 | 62.8 |
| 34 | 18 | 2 | 5228 | 50 | GMA 30 GMA 20 | 48 | 89.23 | 92.3 | 33 | 63.0 |

1)
EHA: 2-Ethylhexylacrylat
GMA: Glycidylmethacrylat
BEHA: 2-Butoxyethylacrylat
EEHA: 2-Ethoxyethylacrylat
SiMA: 3-Methacrylpropyl-pentamethyl-disiloxan

2) Der Biegungswinkel ist ein Mass für die Weichheit des Polymeren. Man erhält ihn, indem man eine Probe von 2 1/2 x 1/2 Inch (6,35 x 1,27 cm) aus einer 1 mm dicken Folie ausscheidet, diese auf 1/2 Inch (1,27 cm) ihrer Länge horizontal zwischen zwei Glasplatten festklammert und den Winkel misst, der durch die Linie vom Ende des Trägers bis zum Ende der überhängenden Probe gebildet wird.

3) L = theoretische Funktionalität

Beispiele 35-36

Synthese von Polymeren, geeignet für weiche Kontaktlinsen aus PDMS-Methacrylaten, die von PDMS-Diaminen abgeleitet sind.

Nach der allgemeinen Verfahrensweise des Beispiels 22 werden 60 g PDMS-Methacrylate der Beispiele 15 und 16 jeweils vermischt mit 40 g 2-Ethylhexylacrylat, 0,2% Photoinitiator A, und durch UV-Licht polymerisiert, unter Bildung von Knöpfen, Folien und Filmen mit hoher optischer Klarheit.

Die folgende Tabelle enthält die physikalischen Eigenschaften der hergestellten Copolymeren. Die verbesserten Eigenschaften zeigen die Nützlichkeit dieser Arten von funktionellen Siloxanen für die Synthese von wasserfreien, weichen Kontaktlinsenmaterialien, die im Vergleich zu mit Wasser gequollenem Polyhydroxyethylmethacrylat vorteilhafte Eigenschaften zeigen.

| | Beispiel 35 | Beispiel 36 | Poly-HEMA[1)] Kontrollpolymeres |
|---|---|---|---|
| Shore-A-Härte | 53 | 46 | 31 |
| Zugfestigkeit $N/mm^2$ | 0,391 | 0,653 | 0,224 |
| Young-Modul $N/mm^2$ | 2,26 | 0,91 | 0,53 |
| Dehnung zum Bruch, % | 22,6 | 151 | 89 |
| Biegungswinkel | 30° | 60° | 66° |
| $O_2$DK | 38,2 | 42,2 | 24,7 |

[1)] Das verwendete Poly-HEMA war ein Copolymeres aus 99,45% 2-Hydroxyethylmethacrylat, 0,25% Ethylenglykoldimethacrylat und 0,3% Methacrylsäure, getestet im gequollenen Zustand (38,5% Wasser).

Die folgenden Beispiele zeigen die Brauchbarkeit des neuen PDMS-Methacrylats für die Synthese von Silikon enthaltenden Hydrogels.

Beispiele 37-40

30 g des PDMS-Makromeren von Beispiel 1 werden mit Methylmethacrylat (MMA) und Dimethylacrylamid (DMA) in den in der Tabelle angezeigten Anteilen vermischt. Zu jeder Lösung werden 0,2 g Photoinitiator A gefügt, und das Gemisch wird im Vakuum entgast und unter Stickstoff gehalten. Jedes Gemisch wird zu 1 mm dicken Folien, 0,1 mm dicken Folien, 0,11 mm dicken Folien und runden Knöpfen von 13 mm Durchmesser und 9 mm Höhe, wie im Beispiel 22 beschrieben, gegossen und durch UV-Bestrahlung polymerisiert. Alle Proben sind vollständig klar. Für jedes Material werden die Trockenhärte, der Gleichgewichtswassergehalt, die Zugfestigkeit (Nasszustand) und $O_2$-Durchlässigkeit (Nasszustand) bestimmt, wie in der Tabelle aufgeführt.

| Bsp. | Zusammensetzung % PDMS-IEM | MMA | DMA | Shore-Härte D trocken | % $H_2O$ | Zugfestigkeit ($N/mm^2$) | Dehnung % | $O_2$·DK |
|---|---|---|---|---|---|---|---|---|
| 37 | 30 | 20 | 50 | 82 | 51.8 | 1.451 | 63 | 64.4 |
| 38 | 30 | 30 | 40 | 79 | 37 | 9.347 | 49 | 56.5 |
| 39 | 30 | 40 | 30 | 78 | 22 | 23.984 | 49 | 40.3 |
| 40 | 30 | 50 | 20 | 80 | 11 | 29.61 | 28 | 39.3 |

Beispiele 41-42

Vergleich von IEM und IPDI/HEMA-verkappten Makromeren

Die vorliegenden Polysiloxanmakromeren enthalten die Gruppe X, die $-Z_1-CO-NH-$ ist, wohingegen in

den Polysiloxanmakromeren der US-PSen 4 136 250, 4 130 708 und 4 486 577 X die verbindende Gruppe $-Z_1$-CO-NH-$R_4$-NHCO- ist.

Um zu demonstrieren, daß die Abwesenheit des Teils -$R_4$-NHCO- der Gruppe X in den vorliegenden Makromeren einen Unterschied bewirkt, wird ein vorliegendes Polysiloxanmakromeres hergestellt, worin ein Polysiloxandiol mit einem Äquivalentgewicht von 1219 (Molekulargewicht 2438) mit zwei Äquivalenten 2-Isocyanatoethylmethacrylat (IEM) gemäß der vorliegenden Erfindung nach der allgemeinen Verfahrensweise der Beispiele 1 und 17 verkappt wird.

Das Polysiloxanmakromere des nächstkommenden Stands der Technik wird hergestellt, indem das gleiche Polysiloxandiol zuerst mit zwei Äquivalenten Isophorondiisocyanat (IPDI) verkappt wird, gefolgt von der Reaktion mit zwei Äquivalenten 2-Hydroxyethylmethacrylat (HEMA) nach der allgemeinen Verfahrensweise des Beispiels 2.

Jedes Polysiloxanmakromere wird nach der allgemeinen Verfahrensweise der Beispiele 22-27 zur Herstellung von Polymeren zur Verwendung in harten Kontaktlinsen copolymerisiert.

Diese Polymeren werden hergestellt aus den folgenden Monomeren (alle Prozente sind in Gew.-% des fertigen Polymeren):

| | |
|---|---|
| Polysiloxanmakromeres | 25 |
| Methylmethacrylat | 55 |
| Neopentylenglykolacrylat | 16 |
| 2-Hydroxyethylmethacrylat | 4 |

Die physikalischen Eigenschaften der hergestellten Polymeren sind in der nachstehenden Tabelle aufgeführt.

Tabelle

Vergleich von IEM und IPDI/HEMA-verkappten Makromeren

| Makromeres und Polymeres gemäß Beispiel* | Verkappungsmethode | Aussehen | Quellen % $H_2O$ / Eth. | % Si in Makromerem | % Si in Polymerem | Shore-D-Härte | $O_2$.DK |
|---|---|---|---|---|---|---|---|
| 41 | IEM | klar | 2.42/28.07 | 33.5 | 8.38 | 79 | 8.1 |
| 42 | IPDI/ HEMA | " | 2.60/21.45 | 29.3 | 7.33 | 81 | 5.7 |

* Das Polysiloxanmakromere im Beispiel 41 wird erfindungsgemäß hergestellt.

Das Polysiloxanmakromere im Beispiel 42 wird nach dem Stand der Technik hergestellt.

Das erfindungsgemässe Polysiloxanmakromere mit der gleichen Polymerzusammensetzung ergibt einen höheren Siliciumgehalt in dem fertigen Polymeren, zusammen mit einer merkbar höheren Sauerstoffpermeabilität, die auf dem Gebiet von Kontaktlinsen so wichtig ist.

Beispiel 43

Makromereigenschaften

Die Dispersität, das mittlere Molekulargewicht, die Anzahl der Peaks, die bei der Gelpermeationschromatographie (GPC) beobachtet werden, und die Viskosität der Polysiloxanmakromeren, hergestellt gemäss den Beispielen 1 und 2, werden verglichen um zu zeigen, dass beträchtliche Unterschiede bei diesen Eigenschaften auftreten, in Abhängigkeit davon, ob das Polysiloxanmakromere gemäss der Erfindung

hergestellt wurde (wie im Beispiel 1) oder gemäss dem Stand der Technik (wie im Beispiel 2).

| Polysiloxan-makromeres gemäß Beispiel | Dispersität* | mittleres Molekular-gewicht | GPC-Peaks | Viskosität |
|---|---|---|---|---|
| 1 | 6 | $1.4 \times 10^4$ | 1 | niedrig |
| 2 | 29 | $8.9 \times 10^4$ | 4 | hoch |
| Ausgangs-siloxan-triol ('1248') | 2.2 | $1.4 \times 10^4$ | 1 | niedrig |

* Die Dispersität ist das Verhältnis des gewichtsmittleren Molekulargewichts zum zahlenmittleren Molekulargewicht. Eine breitere Molekulargewichtsverteilung entspricht einem höheren Dispersitätswert.

Das erfindungsgemässe Polysiloxanmakromere hat eine enge Molekulargewichtsverteilung, ergibt nur einen Peak im GPC und hat eine geringe Viskosität. Das Polysiloxanmakromere nach dem Stand der Technik hat eine wesentlich breitere Molekulargewichtsverteilung, eine Anzahl von Peaks im GPC und eine hohe Viskosität.

Das vorliegende Polysiloxanmakromere stellt ein besser reproduzierbares Produkt, mit enger definierten Struktur mit allen sich daraus ergebenden Vorteilen dar.

**Patentansprüche**

**Patentansprüche für folgende Vertragsstaaten: DE, FR, GB, IT, SE**

1. Lineares oder verzweigtes Polysiloxanmakromeres mit einem Molekulargewicht von etwa 400 bis 100000, gemessen durch Endgruppenanalyse oder Gelpermeationschromatographie, wobei das Makromere mindestens eine endständige oder seitliche polymerisierbare olefinische Gruppe und mindestens eine derartige polymerisierbare olefinische Gruppe pro Molekulargewichtseinheit des Polysiloxans von 5000 hat, wobei die Gruppe an das Polysiloxan durch eine Urethan-, Thiourethan- oder Harnstoffbindung gebunden ist, und das Makromere die Struktur $A_1$, $A_2$, $A_3$ oder $A_4$ hat

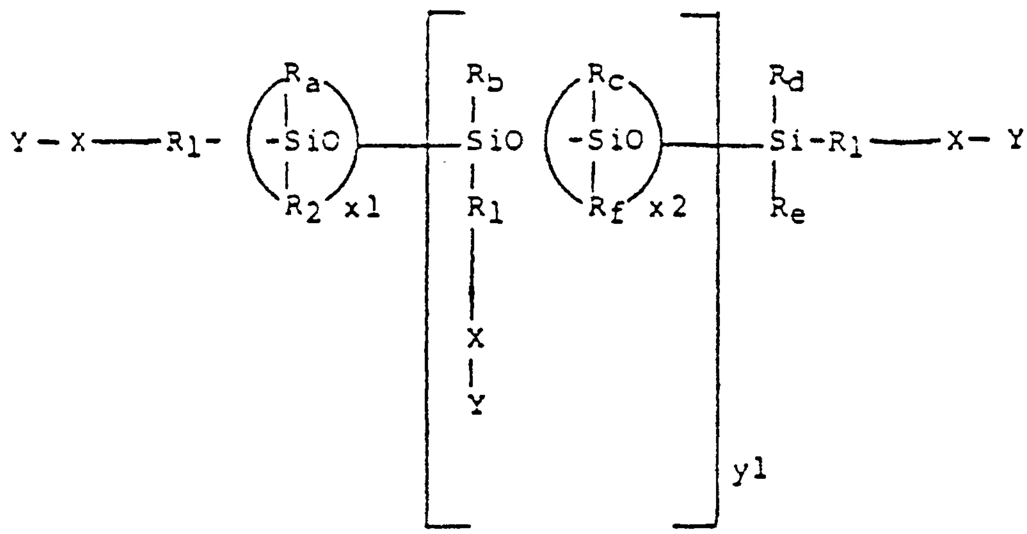

(A1)

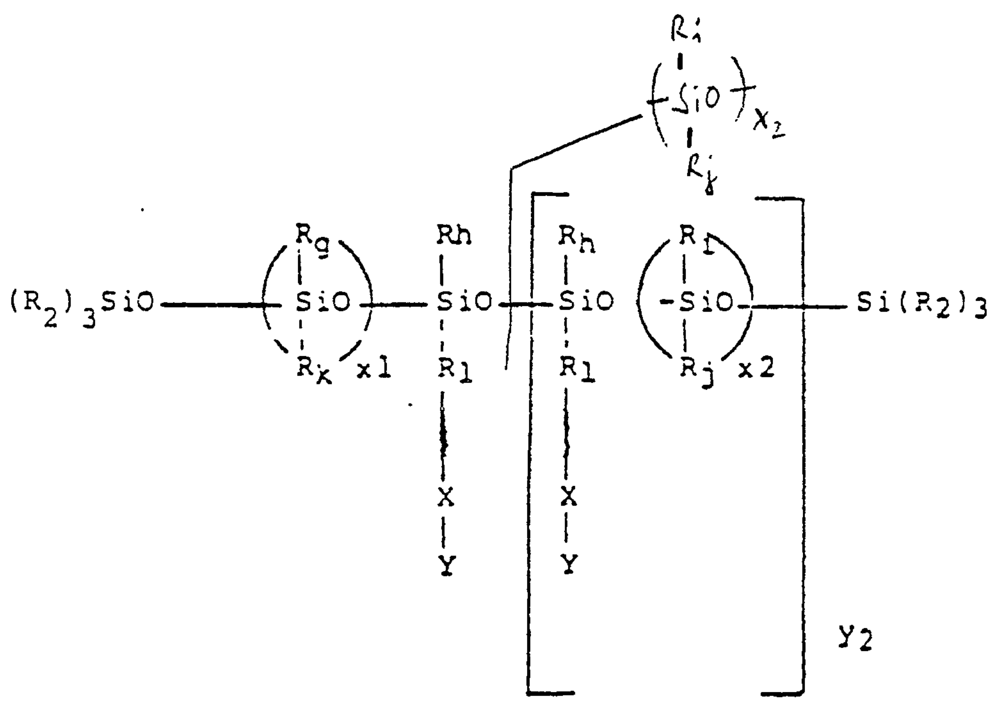

(A2)

$Y_1-(T - R_4)_n-T-Y_1$ , (A3) oder

$Y_1-(T_1 - R_4)_n-T_1-Y_1$ , (A4) ,

worin:

$R_1$ eine lineare oder verzweigte Alkylengruppe mit 2-6 Kohlenstoffatomen oder eine Polyoxyalkylengruppe der Struktur G oder $G_1$ ist

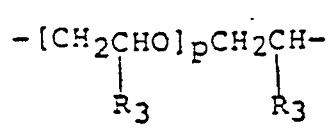

(G)

$-[CH_2CH_2CH_2CH_2O]_pCH_2CH_2CH_2CH_2-$ ($G_1$) ,

worin $R_3$ Wasserstoff oder Methyl ist und p eine ganze Zahl von 1-50 ist, $R_2$, $R_a$, $R_b$, $R_c$, $R_d$, $R_e$, $R_f$, $R_g$, $R_h$, $R_i$, $R_j$ und $R_k$ unabhängig Methyl oder Phenyl sind, $x_1$, $x_2$ ganze Zahlen von 1 bis 500 sind, mit der Maßgabe, daß die Summe von $x_1 + x_2$ 7 bis 1300 ist, $y_1$ 0 bis 14 und $y_2$ 1 bis 13 ist, mit der Maßgabe, daß das Verhältnis von

$$\frac{x_1 + x_2}{y_1 + 2}$$

oder

$$\frac{x_1 + x_2}{y_2 + 1}$$

nicht größer als 70 ist,

X $-Z_1$ - CO - NH- ist,

$Z_1$ Sauerstoff, Schwefel oder $-NR_5-$ ist, worin $R_5$ Wasserstoff oder $C_1$-$C_4$-Alkyl ist, $Z_1$ an $R_1$ gebunden ist; mit der Massgabe dass $Z_1$ in Makromeren der Struktur $A_1$ von Sauerstoff verschieden ist;

$Y_1$

$$-R_8-Z_2-CO-\underset{R_3}{\underset{|}{C}}=CH-R^6$$

oder
$-R_7-O-CH=CH_2$ ist,

worin:
$R_6$ ist: Wasserstoff, Methyl, $-COOR_5$ oder $-COOR_7OH$,

$Z_2$ = Sauerstoff oder $-NR_5-$

Y gleich wie $Y_1$ ist oder Y H, Alkyl mit 1 bis 8 Kohlenstoffatomen, Cyclohexyl, Phenyl, o-Tolyl, m-Tolyl oder p-Tolyl, ist, mit der Maßgabe, daß mindestens eines von Y die gleiche Bedeutung wie $Y_1$ haben muß,

$R_7$ lineares oder verzweigtes Alkylen mit 2 bis 10 Kohlenstoffatomen, Phenylen oder Phenylalkylen mit 2 bis 10 Kohlenstoffatomen im Alkylen, oder Polyoxyalkylen mit der Struktur G oder $G_1$ ist;

$R_8$ eine Alkylengruppe mit 2 bis 6 Kohlenstoffatomen ist,

$R_4$ ein zweiwertiger Rest ist, erhalten durch Entfernen der NCO-Gruppen von einem aliphatischen, cycloaliphatischen, araliphatischen oder aromatischen Diisocyanat;

T die Gruppe

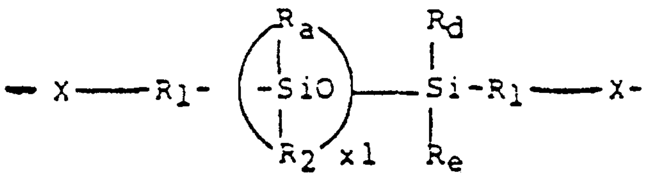

ist,

$T_1$ die Gruppe

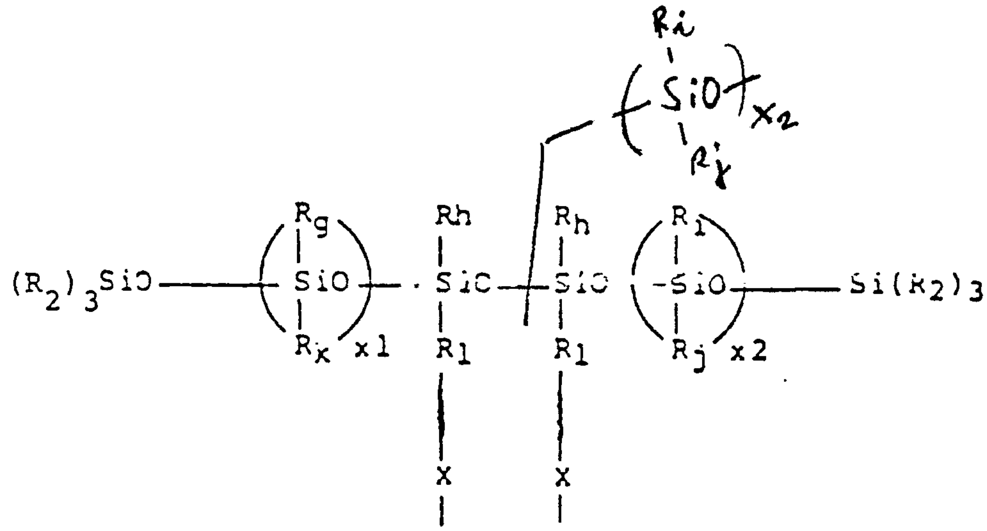

ist,

n 1 bis 10 ist.

2. Ein Polysiloxanmakromeres nach Anspruch 1, worin $R_1$ Alkylen mit 3 oder 4 Kohlenstoffatomen ist, $R_2$, $R_a$, $R_b$, $R_c$, $R_d$, $R_e$, $R_f$, $R_g$, $R_h$, $R_i$, $R_j$ und $R_k$ jeweils Methyl sind, $x_1 + x_2$ 10 bis 100 ist, $y_1$ 0 bis 2 ist, $y_2$ 1 bis 3 ist, $Z_1$ -O- oder -NH- ist und $R_4$ ein zweiwertiger Rest eines aliphatischen oder cycloaliphatischen Diisocyanats mit 6 bis 10 Kohlenstoffatomen ist und Y gleich wie $Y_1$ ist, $R_6$ Wasserstoff ist, $R_8$ Ethylen ist und $Z_2$ -O- oder $-NC(CH_3)_3-$ ist.

3. Ein Polysiloxanmakromeres nach Anspruch 2, worin das Polysiloxan die Struktur $A_2$ hat, $Z_1$ und $Z_2$ jeweils -O- sind und $y_2$ 1 oder 2 ist.

4. Ein Polysiloxanmakromeres nach Anspruch 1, worin das Polysiloxan die Struktur $A_3$ oder $A_4$ hat, worin $R_4$ der von Isophorondiisocyanat abgeleitete zweiwertige Rest ist.

5. Eine polymerisierbare Zusammensetzung, umfassend
(A) 5 bis 75 Gew.-%, bezogen auf die Komponenten (A) und (B), eines Polysiloxanmakromeren gemäss Anspruch 1, und
(B) 95 bis 25 Gew.-% von einem oder mehreren mono-, di- oder trifunktionellen vinylmonomeren, polymerisierbar durch Polymerisation mit freien Radikalen.

6. Zusammensetzung nach Anspruch 5, umfassend
(A) 15 bis 60 Gew.-% des linearen oder verzweigten Polysiloxanmakromeren und
(B) 85 bis 40 Gew.-% eines Gemischs von wasserlöslichen und wasserunlöslichen Monomeren oder eines wasserunlöslichen Monomeren, wobei die Monomeren monoolefinisch, diolefinisch oder ein Gemisch von monoolefinischen und diolefinischen Monomeren sind, 0 bis 100 Gew.-% der Gesamt-

monomeren wasserunlöslich sind ($B_1$), 100 bis 0 Gew.-% der Gesamtmonomeren wasserlöslich sind ($B_2$), und 50 bis 0 Gew.-% der Gesamtmonomeren durch ein diolefinisches Monomeres ($B_x$) ersetzt sind.

7. Zusammensetzung nach Anspruch 5, worin $R_1$ Alkylen mit 3 oder 4 Kohlenstoffatomen ist, $R_2$, $R_a$, $R_b$, $R_c$, $R_d$, $R_e$, $R_f$, $R_g$, $R_h$, $R_i$, $R_j$ und $R_k$ jeweils Methyl sind, $x_1 + x_2$ 10 bis 100 sind, $y_1$ 0 bis 2 ist, $y_2$ 1 bis 3 ist, $Z_1$ -O- oder -NH- ist und $R_4$ der zweiwertige Rest eines aliphatischen oder cycloaliphatischen Diisocyanats mit 6 bis 10 Kohlenstoffatomen ist, und Y gleich wie $Y_1$ ist, $R_6$ Wasserstoff ist, $R_8$ Ethylen ist und $Z_2$ -O- oder $-NC(CH_3)_3$-ist.

8. Zusammensetzung nach Anspruch 7, worin das Polysiloxan die Struktur $A_2$ hat, $Z_1$ und $Z_2$ jeweils -O-sind und $Y_2$ 1 oder 2 ist.

9. Zusammensetzung nach Anspruch 5, worin das Polysiloxan die Struktur $A_3$ oder $A_4$ hat, worin $R_4$ der von Isophorondiisocyanat abgeleitete zweiwertige Rest ist.

10. Zusammensetzung nach Anspruch 6, worin das Monomere B ein wasserunlösliches Monomeres $B_1$ ist, das ein Acrylat oder Methacrylat der Formel $CH_2=CR_3COOR_{12}$, ein Acrylamid oder Methacrylamid der Formel $CH_2=CR_3CONHR_{12}$, ein Maleat oder Fumarat der Formel $R_{12}OCOCH=CHCOOR_{12}$, ein Itaconat der Formel $R_{12}OCOC(=CH_2)CH_2COOR_{12}$, ein Vinylester der Formel $R_{12}COOCH=CH_2$, ein Vinylether der Formel $CH_2=CHOR_{12}$ oder ein Gemisch dieser Monomeren ist, worin $R_3$ Wasserstoff oder Methyl ist und $R_{12}$ eine lineare oder verzweigte aliphatische, cycloaliphatische oder aromatische Gruppe mit 1 bis 21 Kohlenstoffatomen ist und Ether- oder Thioetherbindungen oder eine -CO-, -SO- oder $-SO_2$-Gruppeenthalten kann, oder worin $R_{12}$ eine heterocyclische Gruppe, die Sauerstoff-, Schwefel- oder Stickstoffatome enthält, eine Polypropylenoxid- oder Poly-n-butylenoxidgruppe mit 2 bis 50 wiederkehrenden Alkoxyeinheiten, eine perfluorierte Alkylgruppe mit 1-12 Kohlenstoffatomen oder eine Alkyl enthaltende Siloxangruppe mit 1 bis 6 Si-Atomen ist.

11. Eine Zusammensetzung nach Anspruch 10, worin das wasserunlösliche Monomere $B_1$ ausgewählt ist aus der Gruppe bestehend aus Methylmethacrylat, Isopropylmethacrylat, Isobutylmethacrylat, tert-Butylmethacrylat, Isobornylmethacrylat, Cyclohexylmethacrylat, Hexafluorisopropylmethacrylat und Gemischen davon.

12. Eine Zusammensetzung nach Anspruch 11, worin das wasserunlösliche Monomere $B_1$ ausgewählt ist aus der Gruppe bestehend aus Methylmethacrylat, Cyclohexylmethacrylat, Isobornylmethacrylat und Gemischen davon.

13. Eine Zusammensetzung nach Anspruch 6, worin die Komponente (B) 1 bis 30%, basierend auf dem Gesamtgewicht der Monomeren, eines diolefinischen Monomeren ($B_x$) enthält.

14. Eine Zusammensetzung nach Anspruch 6, worin das diolefinische Monomere ($B_x$) der Komponente B das Acrylat oder Methacrylat von Allylalkohol, einem gerad- oder verzweigtkettigen Alkylenglykol mit 2 bis 6 Kohlenstoffatomen, von Poly-(ethylenoxid)-glykolen, von Poly-(propylenoxid)-glykolen, von Poly-(n-butylenoxid)-glykolen, von Thiodiethylenglykol, von Neopentylenglykol, von Trimethylolpropan oder von Pentaerythrit ist; oder das Reaktionsprodukt, erhalten durch Reaktion von 1 Mol eines Di- oder Triisocyanats der Struktur $OCN\text{-}R_4(NCO)v$ mit 2 oder 3 Molen eines Hydroxyalkylacrylats oder -methacrylats ist, wobei $R_4$ der von diesem Isocyanat abgeleitete Rest nach dem Entfernen der NCO-Gruppe(n) ist und v 1 oder 2 darstellt.

15. Eine Zusammensetzung nach Anspruch 6, worin die Komponente B ein Gemisch aus Methylmethacrylat und 1 bis 25 Gew.-%, bezogen auf die Gesamtmonomeren, Neopentylenglykoldiacrylat, Ethylenglykoldimethacrylat oder des Reaktionsprodukts von 1 Mol von Isophorondiisocyanat und 2 Mol 2-Hydroxethylmethacrylat ist.

16. Eine Zusammensetzung nach Anspruch 10, worin das wasserunlösliche Monomere $B_1$ ein Gemisch von Vinylacetat und Dimethylmaleat in einem 2/1 bis 5/1-Molverhältnis plus Methylmethacrylat, Isopropylmethacrylat, Isobutylmethacrylat, tert-Butylmethacrylat, Cyclohexylmethacrylat oder Hexafluorisopropylmethacrylat oder Gemischen davon ist.

17. Eine Zusammensetzung nach Anspruch 10, worin das wasserunlösliche Monomere $B_1$ ausgewählt ist aus der Gruppe bestehend aus 2-Ethylhexylacrylat, 2-Ethylhexylmethacrylat, n-Butylacrylat, n-Butylmethacrylat, n-Octylacrylat, n-Octylmethacrylat, n-Decylacrylat, n-Decylmethacrylat, Perfluoralkyl-($C_6$-$C_{10}$)-substituiertes Alkylacrylat oder Methacrylat und Gemischen davon.

18. Eine Zusammensetzung nach Anspruch 6, worin in dem Monomeren B das wasserlösliche Monomere $B_2$ ein Acrylat oder Methacrylat der Formel $CH_2=CR_3COOR_{13}$, ein Acrylamid oder Methacrylamid der Formel $CH_2=CR_3CONHR_{14}$ oder $CH_2=CR_3CON(R_5)_2$, ein Maleat oder Fumarat der Formel $R_{13}OCOCH=CHCOOR_{13}$, ein Vinylether der Formel $CH_2=CHOR_{13}$, ein N-Vinyllactam; oder ein Gemisch dieser Monomeren ist,

worin $R_3$ Wasserstoff oder Methyl ist, $R_5$ Wasserstoff oder $C_1$-$C_4$-Alkyl ist, $R_{13}$ ein Kohlenwasserstoffrest mit 1 bis 10 Kohlenstoffatomen, substituiert durch eine oder mehrere wasserlöslich-machende Gruppen, wie Carboxy, Hydroxy oder tert-Amino, oder eine Polyethylenoxidgruppe mit 2-100 wiederkehrenden Einheiten oder eine Gruppe, die Sulfat-, Phosphat-, Sulfonat- oder Phosphonatgruppen enthält, ist und $R_{14}$ die für $R_{13}$ oder $R_5$ angegebene Bedeutung hat.

19. Eine Zusammensetzung nach Anspruch 18, worin das wasserlösliche Monomere $B_2$ ausgewählt ist aus der Gruppe bestehend aus 2-Hydroxethylmethacrylat, N,N-Dimethylacrylamid, Acrylsäure, Methacrylsäure und N-Vinyl-2-pyrrolidon.

20. Eine Zusammensetzung nach Anspruch 6, worin die Komponente A eine Polysiloxanstruktur ist, worin $R_1$ Alkylen mit 3 oder 4 Kohlenstoffatomen ist, $R_2$, $R_a$, $R_b$, $R_c$, $R_d$, $R_e$, $R_f$, $R_g$, $R_h$, $R_i$, $R_j$ und $R_k$ jeweils Methyl sind, $x_1 + x_2$ 10 bis 100 ist, $y_1$ 0 bis 2 ist, $Y_2$ 1 bis 3 ist, $Z_1$ -O- oder -NH- ist und $R_4$ der zweiwertige Rest eines aliphatischen oder cycloaliphatischen Diisocyanats mit 6 bis 10 Kohlenstoffatomen ist und Y gleich wie $Y_1$ ist, $R_6$ Wasserstoff ist, $R_8$ Ethylen ist und $Z_2$ -O- oder -$NC(CH_3)_3$- ist und die Komponente B 0 bis 30 %, basierend auf den Gesamtmonomeren, eines diolefinischen Monomeren ($B_x$) enthält, das das Acrylat oder Methacrylat von Allylalkohol, einem gerad- oder verzweigtkettigen Alkylenglykol mit 2 bis 6 Kohlenstoffatomen, von Poly-(ethylenoxid)-glykolen, von Poly-(propylenoxid)-glykolen, von Poly-(n-butylenoxid)-glykolen, von Thiodiethylenglykol, von Neopentylenglykol, von Trimethylolpropan oder von Pentaerythrit ist; oder das Reaktionsprodukt, erhalten durch Reaktion von 1 Mol eines Di- oder Triisocyanats der Struktur $OCN$-$R_4$-$(NCO)_v$mit 2 oder 3 Molen eines Hydroxyalkylacrylats oder -methacrylats, wobei $R_4$ der von diesem Isocanat abgeleitete Rest nach dem Entfernen der NCO-Gruppe(n) ist und v 1 oder 2 darstellt.

21. Eine Zusammensetzung nach Anspruch 20, worin $B_x$ Neopentylenglykoldiacrylat, Ethylenglykoldimethacrylat oder das Reaktionsprodukt von 1 Mol Isophorondiisocyanat und 2 Mol 2-Hydroxyethylmethacrylat ist.

22. Eine Zusammensetzung nach Anspruch 20, worin die Komponente B das wasserunlösliche Monomere $B_1$, ausgewählt aus der Gruppe bestehend aus Methylmethacrylat, Isopropylmethacrylat, Isobutylmethacrylat, tert-Butylmethacrylat, Isobornylmethacrylat, Cyclohexylmethacrylat, Hexafluorisopropylmethacrylat und Gemischen davon, enthält.

23. Eine Zusammensetzung nach Anspruch 22, worin die Komponente B das wasserunlösliche Monomere $B_1$, ausgewählt aus der Gruppe bestehend aus Methylmethacrylat, Isopropylmethacrylat, Isobutylmethacrylat, Cyclohexylmethacrylat, Isobornylmethacrylat und Gemischen davon, enthält.

24. Eine Zusammensetzung nach Anspruch 21, worin die Komponente B als wasserunlösliches Monomeres $B_1$ Methylmethacrylat, Isobornylmethacrylat oder Gemische davon enthält.

25. Eine Zusammensetzung nach Anspruch 20, worin die Komponente B das wasserunlösliche Monomere $B_1$ enthält, das ein Gemisch von Vinylacetat und Dimethylmaleat in einem 2/1 bis 5/1-Molverhältnis plus Methylmethacrylat, Isopropylmethacrylat, Isobutylmethacrylat, tert-Butylmethacrylat, Cyclohexylmethacrylat oder Hexafluorisopropylmethacrylat und Gemischen davon ist.

26. Eine Zusammensetzung nach Anspruch 20, worin die Komponente B das wasserunlösliche Monomere $B_1$ enthält, ausgewählt aus der Gruppe bestehend aus 2-Ethylhexylacrylat, n-Butylacrylat, n-Butylmethacrylat, n-Octylacrylat, n-Octylmethacrylat, n-Decylacrylat, n-Decylmethacrylat, Perfluoralkyl-($C_6$-$C_{10}$)-substituiertes-alkylacrylat oder -methacrylat und Gemischen davon.

**27.** Eine Zusammensetzung nach Anspruch 20, worin die Komponente B das wasserlösliche Monomere $B_2$ enthält, ausgewählt aus der Gruppe bestehend aus 2-Hydroxyethylmethacrylat, N,N-Dimethylacrylamid, Acrylsäure, Methacrylsäure und N-Vinyl-2-pyrrolidon.

**28.** Eine Zusammensetzung nach Anspruch 20, die umfaßt

(A) 15 bis 40 Gew.-% eines Polysiloxans der Struktur $A_2$, wobei $Z_1$ und $Z_2$ jeweils -O- sind und $y_2$ 1 oder 2 ist, und

(B) 85 bis 60 Gew.-% eines Gemischs aus einem wasserunlöslichen Monomeren ($B_1$), einem wasserlöslichen Monomeren ($B_2$) und einem diolefinischen Monomeren ($B_x$), worin, basierend auf den Gewichtsprozent des Gesamtgewichts der Monomeren,

$B_1$ 60 bis 95% eines wasserunlöslichen Monomeren, ausgewählt aus der Gruppe bestehend aus Methylmethacrylat, Isopropylmethacrylat, Isobutylmethacrylat, tert-Butylmethacrylat, Cyclohexylmethacrylat, Isobornylmethacrylat und Gemischen davon ist,

$B_2$ 20 bis 0% eines wasserlöslichen Monomeren, ausgewählt aus der Gruppe bestehend aus 2-Hydroxyethylmethacrylat, N,N-Dimethylacrylamid, Acrylsäure, Methacrylsäure, N-Vinyl-2-pyrrolidon und Gemischen davon ist, und

$B_x$ 20 bis 5% eines diolefinischen Monomeren, ausgewählt aus der Gruppe bestehend aus Neopentylenglykoldiacrylat, Ethylenglykoldimethacrylat und dem Reaktionsprodukt von 1 Mol Isophorondiisocyanat und 2 Mol 2-Hydroxyethylmethacrylat, ist.

**29.** Eine Zusammensetzung nach Anspruch 20, die umfaßt

(A) 40 bis 60 Gew.-% eines Polysiloxans der Struktur $A_2$, wobei $Z_1$ und $Z_2$ jeweils -O- sind und $y_2$ 1 oder 2 ist, und

(B) 60 bis 40 Gew.-% eines Gemischs eines wasserunlöslichen Monomeren ($B_1$), eines wasserlöslichen Monomeren ($B_2$) und eines diolefinischen Monomeren ($B_x$), worin, basierend auf den Gewichtsprozent des Gesamtgewichts der Monomeren

$B_1$ 70 bis 100% eines wasserunlöslichen Monomeren, ausgewählt aus der Gruppe bestehend aus Ethylacrylat oder -methacrylat, n-Butylacrylat oder -methacrylat, n-Hexylacrylat oder -methacrylat, 2-Ethylhexylacrylat oder -methacrylat, n-Octylacrylat oder -methacrylat, n-Decylacrylat oder -methacrylat und Gemischen davon, und mit Gemischen davon mit Methyl- oder Isobornylmethacrylat ist,

$B_2$ 25 bis 0% eines wasserlöslichen Monomeren, ausgewählt aus der Gruppe bestehend aus 2-Hydroxyethylmethacrylat, N,N-Dimethylacrylamid, Acrylsäure, Methacrylsäure, N-Vinyl-2-pyrrolidon und Gemischen davon ist, und

$B_x$ 5 bis 0% eines diolefinischen Monomeren, ausgewählt aus der Gruppe bestehend aus Neopentylenglykoldiacrylat, Ethylenglykoldimethacrylat und dem Reaktionsprodukt von 1 Mol Isophorondiisocyanat und 2 Mol 2-Hydroxyethylmethacrylat, ist.

**30.** Eine Zusammensetzung nach Anspruch 20, die umfaßt

(A) 20 bis 60 Gew.-% eines Polysiloxans der Struktur $A_2$, wobei $Z_1$ und $Z_2$ jeweils -O- sind, und $y_2$ 1 oder 2 ist, und

(B) 80 bis 40 Gew.-% eines Gemischs eines wasserunlöslichen Monomeren ($B_1$), eines wasserlöslichen Monomeren ($B_2$) und eines diolefinischen Monomeren ($B_x$), worin, basierend auf den Gewichtsprozent des Gesamtgewichts der Monomeren, und

$B_1$ 0 bis 80% eines wasserunlöslichen Monomeren, ausgewählt aus der Gruppe bestehend aus Methylmethacrylat, 2-Ethylhexylacrylat, Hexafluorisopropylmethacrylat, Perfluoralkyl-($C_6$-$C_{10}$)-acrylat und -methacrylat, Isopropylmethacrylat, Isobutylmethacrylat, tert-Butylmethacrylat, Cyclohexylmethacrylat, Isobornylmethacrylat und Gemischen davon ist,

$B_2$ 100 bis 15% eines wasserlöslichen Monomeren, ausgewählt aus der Gruppe bestehend aus 2-Hydroxyethylmethacrylat, N,N-Dimethylacrylamid, N-Vinyl-2-pyrrolidonacrylamid und Gemischen davon ist, und

$B_x$ 0 bis 5% eines diolefinischen Monomeren, ausgewählt aus der Gruppe bestehend aus Neopentylenglykoldiacrylat, Ethylenglykoldimethacrylat und dem Reaktionsprodukt von 1 Mol Isophorondiisocyanat und 2 Mol 2-Hydroxyethylmethacrylat ist.

**31.** Eine harte Kontaktlinse, hergestellt aus dem Polymeren der Zusammensetzung nach Anspruch 5.

**32.** Eine harte Kontaktlinse, hergestellt aus dem Polymeren der Zusammensetzung nach Anspruch 28.

**33.** Eine weiche Kontaktlinse, hergestellt aus dem Polymeren der Zusammensetzung nach Anspruch 5.

**34.** Eine weiche Kontaktlinse, hergestellt aus dem Polymeren der Zusammensetzung nach Anspruch 29.

**35.** Eine weiche Hydrogel-Kontaktlinse, hergestellt aus dem Polymeren der Zusammensetzung nach Anspruch 5.

**36.** Eine weiche Hydrogel-Kontaktlinse, hergestellt aus dem Polymeren der Zusammensetzung nach Anspruch 30.

**37.** Ein Polymeres, umfassend das Copolymerisationsprodukt der Zusammensetzung nach Anspruch 5.

**38.** Ein Verfahren zur Herstellung eines Polymeren aus der Zusammensetzung nach Anspruch 5, umfassend die Reaktion der Komponenten (A) und (B), unter Einwirkung von Wärme oder Strahlung.

**Patentansprüche für folgende Vertragsstaaten: BE, CH, LI, LU, NL**

**1.** Lineares oder verzweigtes Polysiloxanmakromeres mit einem Molekulargewicht von etwa 400 bis 100000, gemessen durch Endgruppenanalyse oder Gelpermeationschromatographie, wobei das Makromere mindestens eine endständige oder seitliche polymerisierbare olefinische Gruppe und mindestens eine derartige polymerisierbare olefinische Gruppe pro Molekulargewichtseinheit des Polysiloxans von 5000 hat, wobei die Gruppe an das Polysiloxan durch eine Urethan-, Thiourethan- oder Harnstoffbindung gebunden ist, und das Makromere die Struktur $A_1$, $A_2$, $A_3$ oder $A_4$ hat

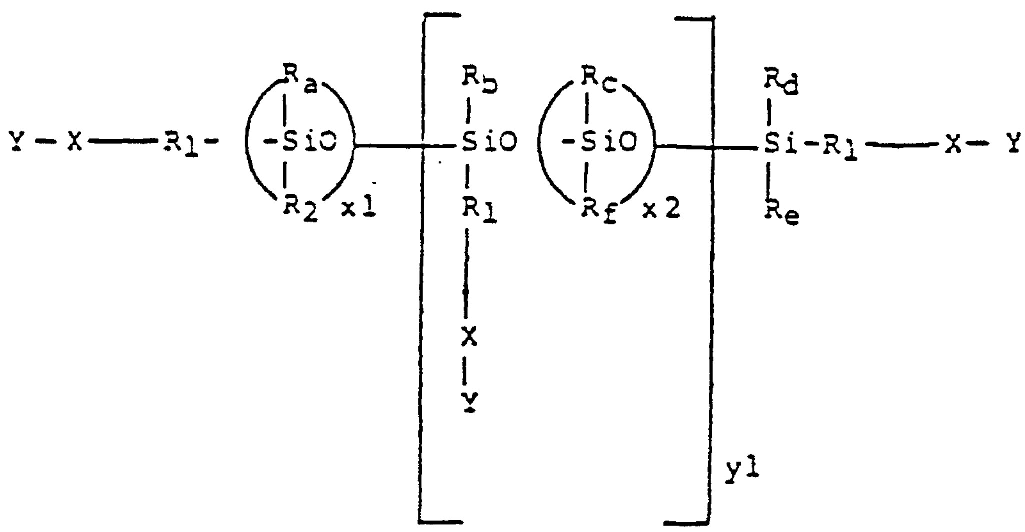

$(A_1)$

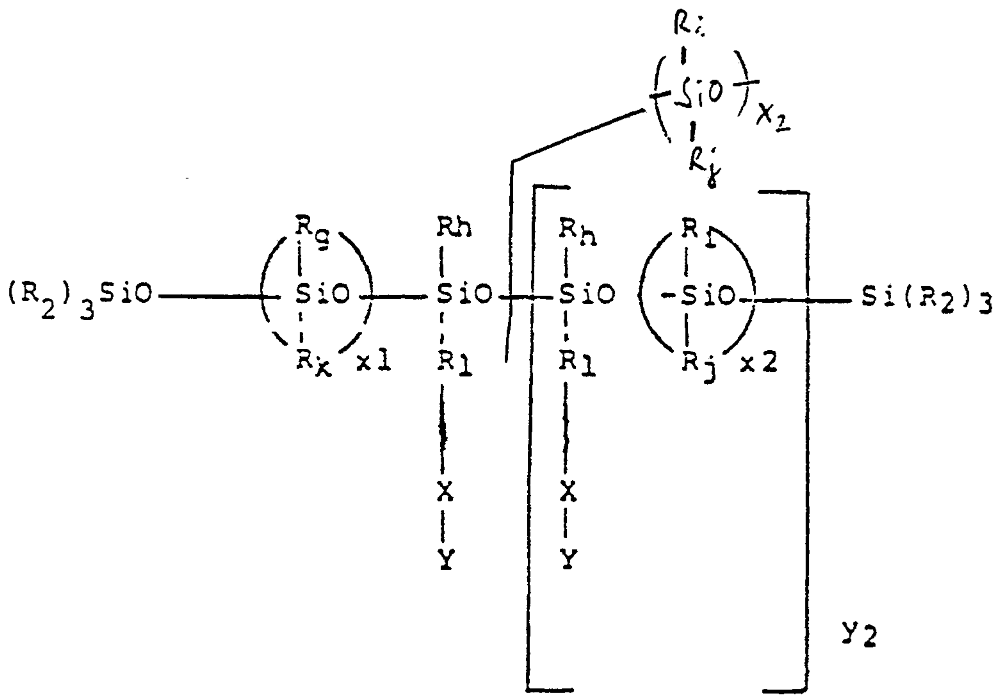

(A2)

$Y_1\text{-}(T - R_4)_n\text{-}T\text{-}Y_1$ , (A3) oder

$Y_1\text{-}(T_1 - R_4)_n\text{-}T_1\text{-}Y_1$ , (A4) ,

worin:

$R_1$ eine lineare oder verzweigte Alkylengruppe mit 2-6 Kohlenstoffatomen oder eine Polyoxyalkylengruppe der Struktur G oder $G_1$ ist

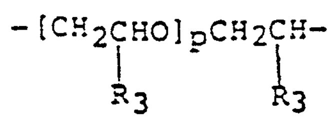

(G)

$-[CH_2CH_2CH_2CH_2O]_pCH_2CH_2CH_2CH_2-$ ($G_1$) ,

worin $R_3$ Wasserstoff oder Methyl ist und p eine ganze Zahl von 1-50 ist, $R_2$, $R_a$, $R_b$, $R_c$, $R_d$, $R_e$, $R_f$, $R_g$, $R_h$, $R_i$, $R_j$ und $R_k$ unabhängig Methyl oder Phenyl sind, $x_1$, $x_2$ ganze Zahlen von 1 bis 500 sind, mit der Maßgabe, daß die Summe von $x_1 + x_2$ 7 bis 1300 ist, $y_1$ 0 bis 14 und $y_2$ 1 bis 13 ist, mit der Maßgabe, daß das Verhältnis von

$$\frac{x_1 + x_2}{y_1 + 2}$$

oder

$$\frac{x_1 + x_2}{y_2 + 1}$$

nicht größer als 70 ist,

X $-Z_1$ - CO - NH- ist,

$Z_1$ Sauerstoff, Schwefel oder $-NR_5-$ ist, worin $R_5$ Wasserstoff oder $C_1$-$C_4$-Alkyl ist, $Z_1$ an $R_1$ gebunden ist;

$Y_1$

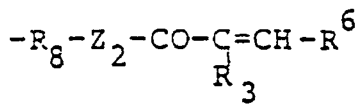

oder
$-R_7-O-CH=CH_2$ ist,

worin:

$R_6$ ist: Wasserstoff, Methyl, $-COOR_5$ oder $-COOR_7OH$,

$Z_2$ = Sauerstoff oder $-NR_5-$

Y gleich wie $Y_1$ ist oder Y H, Alkyl mit 1 bis 8 Kohlenstoffatomen, Cyclohexyl, Phenyl, o-Tolyl, m-Tolyl oder p-Tolyl, ist, mit der Maßgabe, daß mindestens eines von Y die gleiche Bedeutung wie $Y_1$ haben muß,

$R_7$ lineares oder verzweigtes Alkylen mit 2 bis 10 Kohlenstoffatomen, Phenylen oder Phenylalkylen mit 2 bis 10 Kohlenstoffatomen im Alkylen, oder Polyoxyalkylen mit der Struktur G oder $G_1$ ist;

$R_8$ eine Alkylengruppe mit 2 bis 6 Kohlenstoffatomen ist,

$R_4$ ein zweiwertiger Rest ist, erhalten durch Entfernen der NCO-Gruppen von einem aliphatischen, cycloaliphatischen, araliphatischen oder aromatischen Diisocyanat;

T die Gruppe

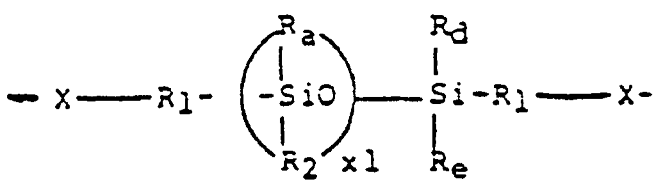

ist,

$T_1$ die Gruppe

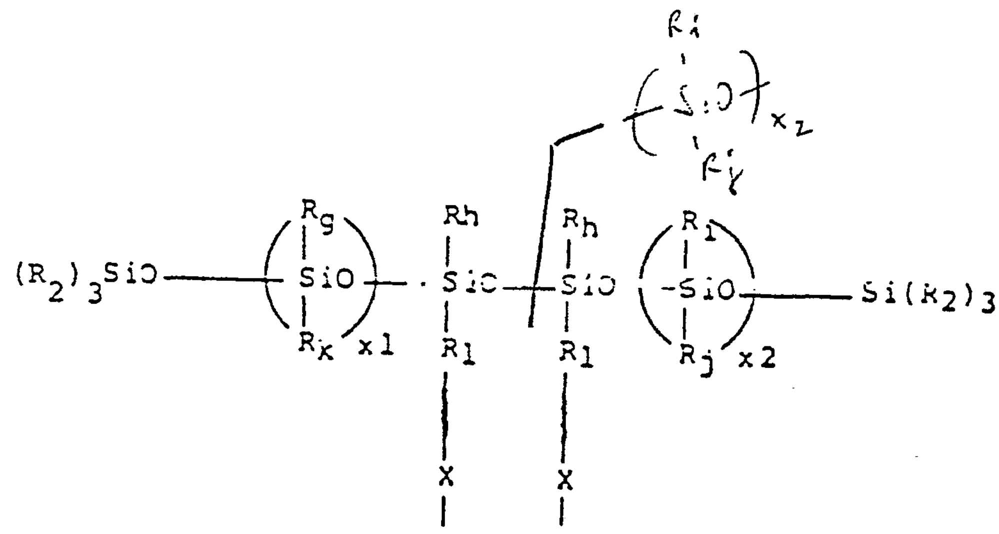

ist,

n 1 bis 10 ist.

2. Ein Polysiloxanmakromeres nach Anspruch 1, worin $R_1$ Alkylen mit 3 oder 4 Kohlenstoffatomen ist, $R_2$, $R_a$, $R_b$, $R_c$, $R_d$, $R_e$, $R_f$, $R_g$, $R_h$, $R_i$, $R_j$ und $R_k$ jeweils Methyl sind, $x_1 + x_2$ 10 bis 100 ist, $y_1$ 0 bis 2 ist, $y_2$ 1 bis 3 ist, $Z_1$ -O- oder -NH- ist und $R_4$ ein zweiwertiger Rest eines aliphatischen oder cycloaliphatischen Diisocyanats mit 6 bis 10 Kohlenstoffatomen ist und Y gleich wie $Y_1$ ist, $R_6$ Wasserstoff ist, $R_8$ Ethylen ist und $Z_2$ -O- oder $-NC(CH_3)_3-$ ist.

3. Ein Polysiloxanmakromeres nach Anspruch 2, worin das Polysiloxan die Struktur $A_2$ hat, $Z_1$ und $Z_2$ jeweils -O- sind und $y_2$ 1 oder 2 ist.

4. Ein Polysiloxanmakromeres nach Anspruch 1, worin das Polysiloxan die Struktur $A_3$ oder $A_4$ hat, worin $R_4$ der von Isophorondiisocyanat abgeleitete zweiwertige Rest ist.

5. Eine polymerisierbare Zusammensetzung, umfassend
(A) 5 bis 75 Gew.-%, bezogen auf die Komponenten (A) und (B), eines Polysiloxanmakromeren gemäss Anspruch 1, und
(B) 95 bis 25 Gew.-% von einem oder mehreren mono-, di- oder trifunktionellen vinylmonomeren, polymerisierbar durch Polymerisation mit freien Radikalen.

6. Zusammensetzung nach Anspruch 5, umfassend
(A) 15 bis 60 Gew.-% des linearen oder verzweigten Polysiloxanmakromeren und
(B) 85 bis 40 Gew.-% eines Gemischs von wasserlöslichen und wasserunlöslichen Monomeren oder eines wasserunlöslichen Monomeren, wobei die Monomeren monoolefinisch, diolefinisch oder ein Gemisch von monoolefinischen und diolefinischen Monomeren sind, 0 bis 100 Gew.-% der Gesamtmonomeren wasserunlöslich sind ($B_1$), 100 bis 0 Gew.-% der Gesamtmonomeren wasserlöslich sind ($B_2$), und 50 bis 0 Gew.-% der Gesamtmonomeren durch ein diolefinisches Monomeres ($B_x$) ersetzt sind.

7. Zusammensetzung nach Anspruch 5, worin $R_1$ Alkylen mit 3 oder 4 Kohlenstoffatomen ist, $R_2$, $R_a$, $R_b$, $R_c$, $R_d$, $R_e$, $R_f$, $R_g$, $R_h$, $R_i$, $R_j$ und $R_k$ jeweils Methyl sind, $x_1 + x_2$ 10 bis 100 sind, $y_1$ 0 bis 2 ist, $y_2$ 1 bis 3 ist, $Z_1$ -O- oder -NH- ist und $R_4$ der zweiwertige Rest eines aliphatischen oder cycloaliphatischen Diisocyanats mit 6 bis 10 Kohlenstoffatomen ist, und Y gleich wie $Y_1$ ist, $R_6$ Wasserstoff ist, $R_8$ Ethylen ist und $Z_2$ -O- oder $-NC(CH_3)_3$-ist.

8. Zusammensetzung nach Anspruch 7, worin das Polysiloxan die Struktur $A_2$ hat, $Z_1$ und $Z_2$ jeweils -O- sind und $Y_2$ 1 oder 2 ist.

9. Zusammensetzung nach Anspruch 5, worin das Polysiloxan die Struktur $A_3$ oder $A_4$ hat, worin $R_4$ der von Isophorondiisocyanat abgeleitete zweiwertige Rest ist.

10. Zusammensetzung nach Anspruch 6, worin das Monomere B ein wasserunlösliches Monomeres $B_1$ ist, das ein Acrylat oder Methacrylat der Formel $CH_2=CR_3COOR_{12}$, ein Acrylamid oder Methacrylamid der Formel $CH_2=CR_3CONHR_{12}$, ein Maleat oder Fumarat der Formel $R_{12}OCOCH=CHCOOR_{12}$, ein Itaconat der Formel $R_{12}OCOC(=CH_2)CH_2COOR_{12}$, ein Vinylester der Formel $R_{12}COOCH=CH_2$, ein Vinylether der Formel $CH_2=CHOR_{12}$ oder ein Gemisch dieser Monomeren ist, worin $R_3$ Wasserstoff oder Methyl ist und $R_{12}$ eine lineare oder verzweigte aliphatische, cycloaliphatische oder aromatische Gruppe mit 1 bis 21 Kohlenstoffatomen ist und Ether- oder Thioetherbindungen oder eine -CO-, -SO- oder -$SO_2$-Gruppeenthalten kann, oder worin $R_{12}$ eine heterocyclische Gruppe, die Sauerstoff-, Schwefel- oder Stickstoffatome enthält, eine Polypropylenoxid- oder Poly-n-butylenoxidgruppe mit 2 bis 50 wiederkehrenden Alkoxyeinheiten, eine perfluorierte Alkylgruppe mit 1-12 Kohlenstoffatomen oder eine Alkyl enthaltende Siloxangruppe mit 1 bis 6 Si-Atomen ist.

11. Eine Zusammensetzung nach Anspruch 10, worin das wasserunlösliche Monomere $B_1$ ausgewählt ist aus der Gruppe bestehend aus Methylmethacrylat, Isopropylmethacrylat, Isobutylmethacrylat, tert-Butylmethacrylat, Isobornylmethacrylat, Cyclohexylmethacrylat, Hexafluorisopropylmethacrylat und Gemischen davon.

12. Eine Zusammensetzung nach Anspruch 11, worin das wasserunlösliche Monomere $B_1$ ausgewählt ist aus der Gruppe bestehend aus Methylmethacrylat, Cyclohexylmethacrylat, Isobornylmethacrylat und Gemischen davon.

13. Eine Zusammensetzung nach Anspruch 6, worin die Komponente (B) 1 bis 30%, basierend auf dem Gesamtgewicht der Monomeren, eines diolefinischen Monomeren ($B_x$) enthält.

14. Eine Zusammensetzung nach Anspruch 6, worin das diolefinische Monomere ($B_x$) der Komponente B das Acrylat oder Methacrylat von Allylalkohol, einem gerad- oder verzweigtkettigen Alkylenglykol mit 2 bis 6 Kohlenstoffatomen, von Poly-(ethylenoxid)-glykolen, von Poly-(propylenoxid)-glykolen, von Poly-(n-butylenoxid)-glykolen, von Thiodiethylenglykol, von Neopentylenglykol, von Trimethylolpropan oder von Pentaerythrit ist; oder das Reaktionsprodukt, erhalten durch Reaktion von 1 Mol eines Di- oder Triisocyanats der Struktur $OCN-R_4(NCO)_v$ mit 2 oder 3 Molen eines Hydroxyalkylacrylats oder -methacrylats ist, wobei $R_4$ der von diesem Isocyanat abgeleitete Rest nach dem Entfernen der NCO-Gruppe(n) ist und v 1 oder 2 darstellt.

15. Eine Zusammensetzung nach Anspruch 6, worin die Komponente B ein Gemisch aus Methylmethacrylat und 1 bis 25 Gew.-%, bezogen auf die Gesamtmonomeren, Neopentylenglykoldiacrylat, Ethylenglykoldimethacrylat oder des Reaktionsprodukts von 1 Mol von Isophorondiisocyanat und 2 Mol 2-Hydroxethylmethacrylat ist.

16. Eine Zusammensetzung nach Anspruch 10, worin das wasserunlösliche Monomere $B_1$ ein Gemisch von Vinylacetat und Dimethylmaleat in einem 2/1 bis 5/1-Molverhältnis plus Methylmethacrylat, Isopropylmethacrylat, Isobutylmethacrylat, tert-Butylmethacrylat, Cyclohexylmethacrylat oder Hexafluorisopropylmethacrylat oder Gemischen davon ist.

17. Eine Zusammensetzung nach Anspruch 10, worin das wasserunlösliche Monomere $B_1$ ausgewählt ist aus der Gruppe bestehend aus 2-Ethylhexylacrylat, 2-Ethylhexylmethacrylat, n-Butylacrylat, n-Butylmethacrylat, n-Octylacrylat, n-Octylmethacrylat, n-Decylacrylat, n-Decylmethacrylat, Perfluoralkyl-($C_6$-$C_{10}$)-substituiertes Alkylacrylat oder Methacrylat und Gemischen davon.

18. Eine Zusammensetzung nach Anspruch 6, worin in dem Monomeren B das wasserlösliche Monomere $B_2$ ein Acrylat oder Methacrylat der Formel $CH_2=CR_3COOR_{13}$, ein Acrylamid oder Methacrylamid der Formel $CH_2=CR_3CONHR_{14}$ oder $CH_2=CR_3CON(R_5)_2$, ein Maleat oder Fumarat der Formel $R_{13}OCOCH=CHCOOR_{13}$, ein Vinylether der Formel $CH_2=CHOR_{13}$, ein N-Vinyllactam; oder ein Gemisch dieser Monomeren ist,

worin $R_3$ Wasserstoff oder Methyl ist, $R_5$ Wasserstoff oder $C_1$-$C_4$-Alkyl ist, $R_{13}$ ein Kohlenwasserstoff-

rest mit 1 bis 10 Kohlenstoffatomen, substituiert durch eine oder mehrere wasserlöslich-machende Gruppen, wie Carboxy, Hydroxy oder tert-Amino, oder eine Polyethylenoxidgruppe mit 2-100 wiederkehrenden Einheiten oder eine Gruppe, die Sulfat-, Phosphat-, Sulfonat- oder Phosphonatgruppen enthält, ist und $R_{14}$ die für $R_{13}$ oder $R_5$ angegebene Bedeutung hat.

**19.** Eine Zusammensetzung nach Anspruch 18, worin das wasserlösliche Monomere $B_2$ ausgewählt ist aus der Gruppe bestehend aus 2-Hydroxethylmethacrylat, N,N-Dimethylacrylamid, Acrylsäure, Methacrylsäure und N-Vinyl-2-pyrrolidon.

**20.** Eine Zusammensetzung nach Anspruch 6, worin die Komponente A eine Polysiloxanstruktur ist, worin $R_1$ Alkylen mit 3 oder 4 Kohlenstoffatomen ist, $R_2$, $R_a$, $R_b$, $R_c$, $R_d$, $R_e$, $R_f$, $R_g$, $R_h$, $R_i$, $R_j$ und $R_k$ jeweils Methyl sind, $x_1 + x_2$ 10 bis 100 ist, $y_1$ 0 bis 2 ist, $Y_2$ 1 bis 3 ist, $Z_1$ -O- oder -NH- ist und $R_4$ der zweiwertige Rest eines aliphatischen oder cycloaliphatischen Diisocyanats mit 6 bis 10 Kohlenstoffatomen ist und Y gleich wie $Y_1$ ist, $R_6$ Wasserstoff ist, $R_8$ Ethylen ist und $Z_2$ -O- oder $-NC(CH_3)_3-$ ist und die Komponente B 0 bis 30 %, basierend auf den Gesamtmonomeren, eines diolefinischen Monomeren ($B_x$) enthält, das das Acrylat oder Methacrylat von Allylalkohol, einem gerad- oder verzweigtkettigen Alkylenglykol mit 2 bis 6 Kohlenstoffatomen, von Poly-(ethylenoxid)-glykolen, von Poly-(propylenoxid)-glykolen, von Poly-(n-butylenoxid)-glykolen, von Thiodiethylenglykol, von Neopentylenglykol, von Trimethylolpropan oder von Pentaerythrit ist; oder das Reaktionsprodukt, erhalten durch Reaktion von 1 Mol eines Di- oder Triisocyanats der Struktur $OCN-R_4-(NCO)_v$mit 2 oder 3 Molen eines Hydroxyalkylacrylats oder -methacrylats, wobei $R_4$ der von diesem Isocanat abgeleitete Rest nach dem Entfernen der NCO-Gruppe(n) ist und v 1 oder 2 darstellt.

**21.** Eine Zusammensetzung nach Anspruch 20, worin $B_x$ Neopentylenglykoldiacrylat, Ethylenglykoldimethacrylat oder das Reaktionsprodukt von 1 Mol Isophorondiisocyanat und 2 Mol 2-Hydroxyethylmethacrylat ist.

**22.** Eine Zusammensetzung nach Anspruch 20, worin die Komponente B das wasserunlösliche Monomere $B_1$, ausgewählt aus der Gruppe bestehend aus Methylmethacrylat, Isopropylmethacrylat, Isobutylmethacrylat, tert-Butylmethacrylat, Isobornylmethacrylat, Cyclohexylmethacrylat, Hexafluorisopropylmethacrylat und Gemischen davon, enthält.

**23.** Eine Zusammensetzung nach Anspruch 22, worin die Komponente B das wasserunlösliche Monomere $B_1$, ausgewählt aus der Gruppe bestehend aus Methylmethacrylat, Isopropylmethacrylat, Isobutylmethacrylat, Cyclohexylmethacrylat, Isobornylmethacrylat und Gemischen davon, enthält.

**24.** Eine Zusammensetzung nach Anspruch 21, worin die Komponente B als wasserunlösliches Monomeres $B_1$ Methylmethacrylat, Isobornylmethacrylat oder Gemische davon enthält.

**25.** Eine Zusammensetzung nach Anspruch 20, worin die Komponente B das wasserunlösliche Monomere $B_1$ enthält, das ein Gemisch von Vinylacetat und Dimethylmaleat in einem 2/1 bis 5/1-Molverhältnis plus Methylmethacrylat, Isopropylmethacrylat, Isobutylmethacrylat, tert-Butylmethacrylat, Cyclohexylmethacrylat oder Hexafluorisopropylmethacrylat und Gemischen davon ist.

**26.** Eine Zusammensetzung nach Anspruch 20, worin die Komponente B das wasserunlösliche Monomere $B_1$ enthält, ausgewählt aus der Gruppe bestehend aus 2-Ethylhexylacrylat, n-Butylacrylat, n-Butylmethacrylat, n-Octylacrylat, n-Octylmethacrylat, n-Decylacrylat, n-Decylmethacrylat, Perfluoralkyl-($C_6$-$C_{10}$)-substituiertes-alkylacrylat oder -methacrylat und Gemischen davon.

**27.** Eine Zusammensetzung nach Anspruch 20, worin die Komponente B das wasserlösliche Monomere $B_2$ enthält, ausgewählt aus der Gruppe bestehend aus 2-Hydroxyethylmethacrylat, N,N-Dimethylacrylamid, Acrylsäure, Methacrylsäure und N-Vinyl-2-pyrrolidon.

**28.** Eine Zusammensetzung nach Anspruch 20, die umfaßt

(A) 15 bis 40 Gew.-% eines Polysiloxans der Struktur $A_2$, wobei $Z_1$ und $Z_2$ jeweils -O- sind und $y_2$ 1 oder 2 ist, und

(B) 85 bis 60 Gew.-% eines Gemischs aus einem wasserunlöslichen Monomeren ($B_1$), einem wasserlöslichen Monomeren ($B_2$) und einem diolefinischen Monomeren ($B_x$), worin, basierend auf

den Gewichtsprozent des Gesamtgewichts der Monomeren,

$B_1$ 60 bis 95% eines wasserunlöslichen Monomeren, ausgewählt aus der Gruppe bestehend aus Methylmethacrylat, Isopropylmethacrylat, Isobutylmethacrylat, tert-Butylmethacrylat, Cyclohexylmethacrylat, Isobornylmethacrylat und Gemischen davon ist,

$B_2$ 20 bis 0% eines wasserlöslichen Monomeren, ausgewählt aus der Gruppe bestehend aus 2-Hydroxyethylmethacrylat, N,N-Dimethylacrylamid, Acrylsäure, Methacrylsäure, N-Vinyl-2-pyrrolidon und Gemischen davon ist, und

$B_x$ 20 bis 5% eines diolefinischen Monomeren, ausgewählt aus der Gruppe bestehend aus Neopentylenglykoldiacrylat, Ethylenglykoldimethacrylat und dem Reaktionsprodukt von 1 Mol Isophorondiisocyanat und 2 Mol 2-Hydroxyethylmethacrylat, ist.

**29.** Eine Zusammensetzung nach Anspruch 20, die umfaßt
(A) 40 bis 60 Gew.-% eines Polysiloxans der Struktur $A_2$, wobei $Z_1$ und $Z_2$ jeweils -O- sind und $y_2$ 1 oder 2 ist, und
(B) 60 bis 40 Gew.-% eines Gemischs eines wasserunlöslichen Monomeren ($B_1$), eines wasserlöslichen Monomeren ($B_2$) und eines diolefinischen Monomeren ($B_x$), worin, basierend auf den Gewichtsprozent des Gesamtgewichts der Monomeren

$B_1$ 70 bis 100% eines wasserunlöslichen Monomeren, ausgewählt aus der Gruppe bestehend aus Ethylacrylat oder -methacrylat, n-Butylacrylat oder -methacrylat, n-Hexylacrylat oder -methacrylat, 2-Ethylhexylacrylat oder -methacrylat, n-Octylacrylat oder -methacrylat, n-Decylacrylat oder -methacrylat und Gemischen davon, und mit Gemischen davon mit Methyl- oder Isobornylmethacrylat ist,

$B_2$ 25 bis 0% eines wasserlöslichen Monomeren, ausgewählt aus der Gruppe bestehend aus 2-Hydroxyethylmethacrylat, N,N-Dimethylacrylamid, Acrylsäure, Methacrylsäure, N-Vinyl-2-pyrrolidon und Gemischen davon ist, und

$B_x$ 5 bis 0% eines diolefinischen Monomeren, ausgewählt aus der Gruppe bestehend aus Neopentylenglykoldiacrylat, Ethylenglykoldimethacrylat und dem Reaktionsprodukt von 1 Mol Isophorondiisocyanat und 2 Mol 2-Hydroxyethylmethacrylat, ist.

**30.** Eine Zusammensetzung nach Anspruch 20, die umfaßt
(A) 20 bis 60 Gew.-% eines Polysiloxans der Struktur $A_2$, wobei $Z_1$ und $Z_2$ jeweils -O- sind, und $y_2$ 1 oder 2 ist, und
(B) 80 bis 40 Gew.-% eines Gemischs eines wasserunlöslichen Monomeren ($B_1$), eines wasserlöslichen Monomeren ($B_2$) und eines diolefinischen Monomeren ($B_x$), worin, basierend auf den Gewichtsprozent des Gesamtgewichts der Monomeren, und

$B_1$ 0 bis 80% eines wasserunlöslichen Monomeren, ausgewählt aus der Gruppe bestehend aus Methylmethacrylat, 2-Ethylhexylacrylat, Hexafluorisopropylmethacrylat, Perfluoralkyl-($C_6$-$C_{10}$)-acrylat und -methacrylat, Isopropylmethacrylat, Isobutylmethacrylat, tert-Butylmethacrylat, Cyclohexylmethacrylat, Isobornylmethacrylat und Gemischen davon ist,

$B_2$ 100 bis 15% eines wasserlöslichen Monomeren, ausgewählt aus der Gruppe bestehend aus 2-Hydroxyethylmethacrylat, N,N-Dimethylacrylamid, N-Vinyl-2-pyrrolidonacrylamid und Gemischen davon ist, und

$B_x$ 0 bis 5% eines diolefinischen Monomeren, ausgewählt aus der Gruppe bestehend aus Neopentylenglykoldiacrylat, Ethylenglykoldimethacrylat und dem Reaktionsprodukt von 1 Mol Isophorondiisocyanat und 2 Mol 2-Hydroxyethylmethacrylat ist.

**31.** Eine harte Kontaktlinse, hergestellt aus dem Polymeren der Zusammensetzung nach Anspruch 5.

**32.** Eine harte Kontaktlinse, hergestellt aus dem Polymeren der Zusammensetzung nach Anspruch 28.

33. Eine weiche Kontaktlinse, hergestellt aus dem Polymeren der Zusammensetzung nach Anspruch 5.

34. Eine weiche Kontaktlinse, hergestellt aus dem Polymeren der Zusammensetzung nach Anspruch 29.

35. Eine weiche Hydrogel-Kontaktlinse, hergestellt aus dem Polymeren der Zusammensetzung nach Anspruch 5.

36. Eine weiche Hydrogel-Kontaktlinse, hergestellt aus dem Polymeren der Zusammensetzung nach Anspruch 30.

37. Ein Polymeres, umfassend das Copolymerisationsprodukt der Zusammensetzung nach Anspruch 5.

38. Ein Verfahren zur Herstellung eines Polymeren aus der Zusammensetzung nach Anspruch 5, umfassend die Reaktion der Komponenten (A) und (B), unter Einwirkung von Wärme oder Strahlung.

**Patentansprüche für folgenden Vertragsstaat: AT**

1. Verfahren zur Herstellung eines Linearen oder verzweigten Polysiloxanmakromeren mit einem Molekulargewicht von etwa 400 bis 100000, gemessen durch Endgruppenanalyse oder Gelpermeationschromatographie, wobei das Makromere mindestens eine endständige oder seitliche polymerisierbare olefinische Gruppe und mindestens eine derartige polymerisierbare olefinische Gruppe pro Molekulargewichtseinheit des Polysiloxans von 5000 hat, wobei die Gruppe an das Polysiloxan durch eine Urethan-, Thiourethan- oder Harnstoffbindung gebunden ist, und das Makromere die Struktur $A_1$, $A_2$, $A_3$ oder $A_4$ hat

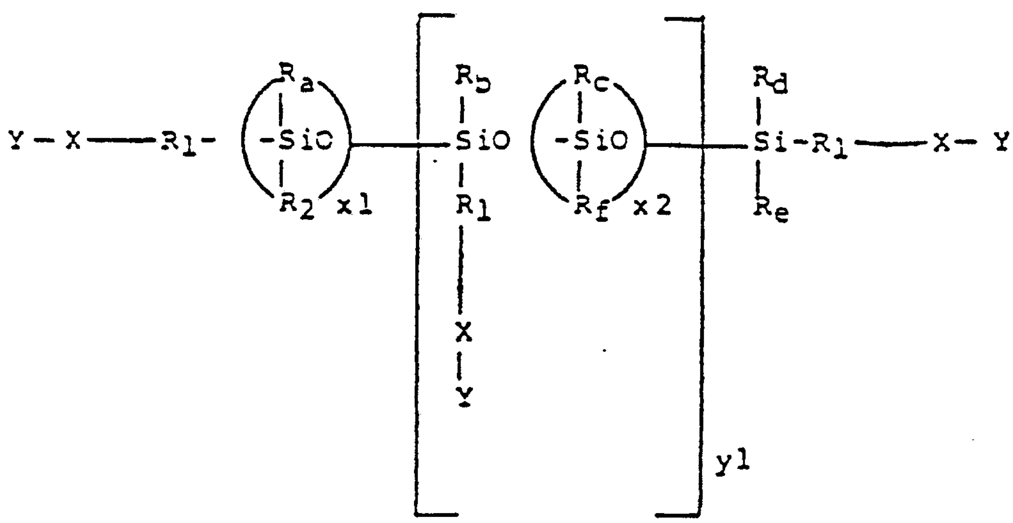

$(A_1)$

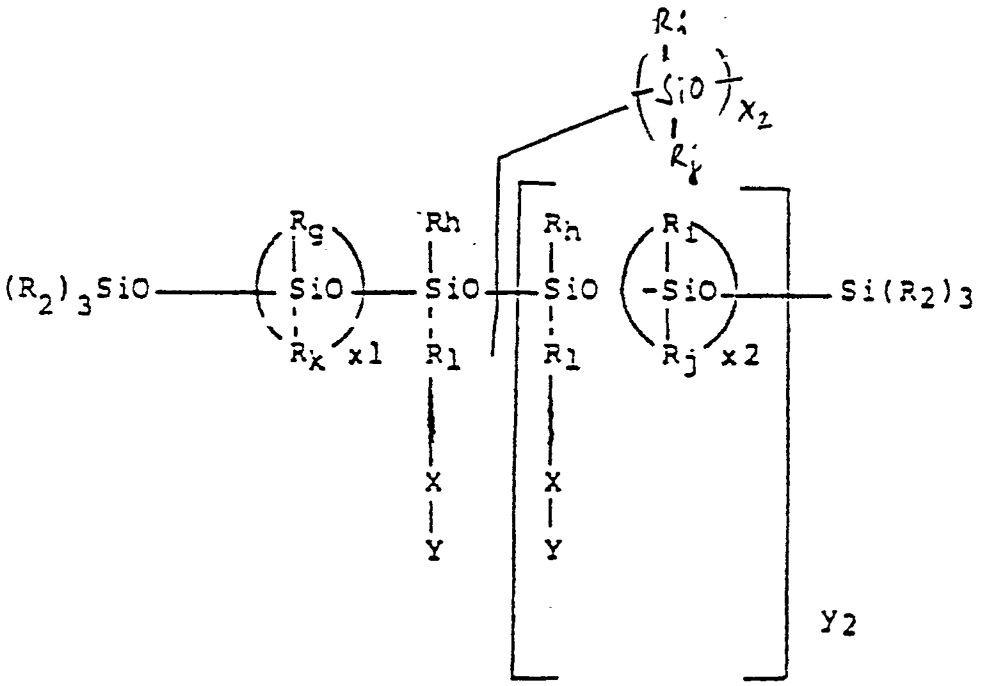

(A2)

$Y_1\text{-}(T - R_4)_n\text{-}T\text{-}Y_1$ ,  ($A_3$) oder

$Y_1\text{-}(T_1 - R_4)_n\text{-}T_1\text{-}Y_1$ ,  (A4) ,

worin:

$R_1$ eine lineare oder verzweigte Alkylengruppe mit 2-6 Kohlenstoffatomen oder eine Polyoxyalkylengruppe der Struktur G oder $G_1$ ist

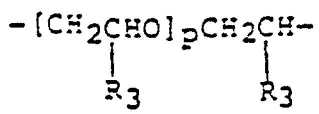

(G)

$-[CH_2CH_2CH_2CH_2O]_pCH_2CH_2CH_2CH_2-$  ($G_1$) ,

worin $R_3$ Wasserstoff oder Methyl ist und p eine ganze Zahl von 1-50 ist, $R_2$, $R_a$, $R_b$, $R_c$, $R_d$, $R_e$, $R_f$, $R_g$, $R_h$, $R_i$, $R_j$ und $R_k$ unabhängig Methyl oder Phenyl sind, $x_1$, $x_2$ ganze Zahlen von 1 bis 500 sind, mit der Maßgabe, daß die Summe von $x_1 + x_2$ 7 bis 1300 ist, $y_1$ 0 bis 14 und $y_2$ 1 bis 13 ist, mit der Maßgabe, daß das Verhältnis von

$$\frac{x_1 + x_2}{y_1 + 2}$$

oder

$$\frac{x_1 \div x_2}{y_2 \div 1}$$

nicht größer als 70 ist,

X -$Z_1$ - CO - NH- ist,

$Z_1$ Sauerstoff, Schwefel oder -$NR_5$- ist, worin $R_5$ Wasserstoff oder $C_1$-$C_4$-Alkyl ist, $Z_1$ an $R_1$ gebunden ist;

$Y_1$

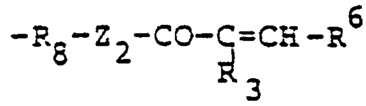

oder
-$R_7$-O-CH = $CH_2$ ist,

worin:

$R_6$ ist: Wasserstoff, Methyl, -$COOR_5$ oder -$COOR_7OH$,

$Z_2$ = Sauerstoff oder -$NR_5$-

Y gleich wie $Y_1$ ist oder Y H, Alkyl mit 1 bis 8 Kohlenstoffatomen, Cyclohexyl, Phenyl, o-Tolyl, m-Tolyl oder p-Tolyl, ist, mit der Maßgabe, daß mindestens eines von Y die gleiche Bedeutung wie $Y_1$ haben muß,

$R_7$ lineares oder verzweigtes Alkylen mit 2 bis 10 Kohlenstoffatomen, Phenylen oder Phenylalkylen mit 2 bis 10 Kohlenstoffatomen im Alkylen, oder Polyoxyalkylen mit der Struktur G oder $G_1$ ist;

$R_8$ eine Alkylengruppe mit 2 bis 6 Kohlenstoffatomen ist,

$R_4$ ein zweiwertiger Rest ist, erhalten durch Entfernen der NCO-Gruppen von einem aliphatischen, cycloaliphatischen, araliphatischen oder aromatischen Diisocyanat;

T die Gruppe

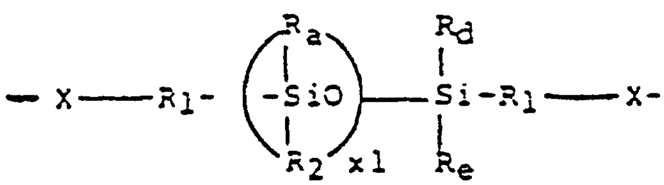

ist,

$T_1$ die Gruppe

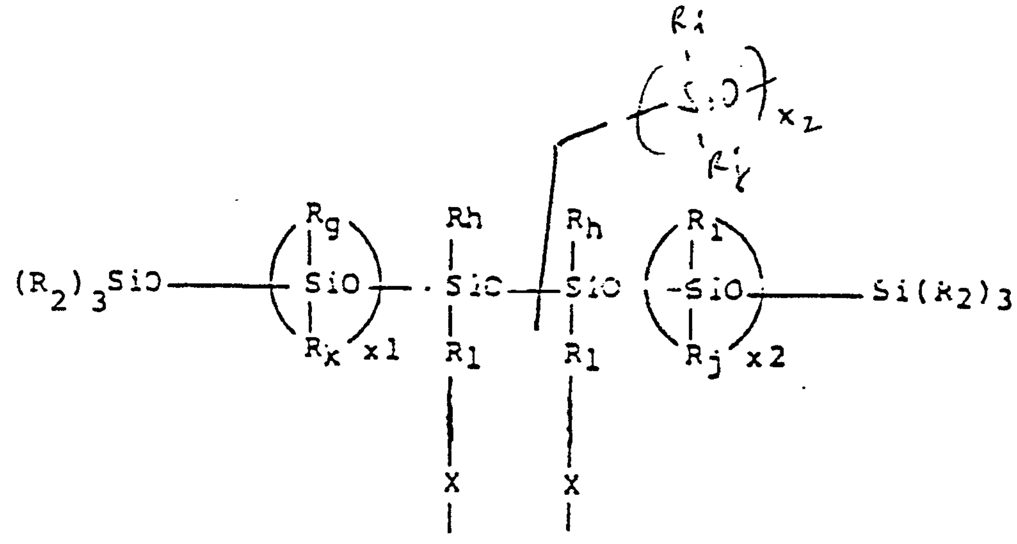

ist,

n 1 bis 10 ist,
dadurch gekennzeichnet, dass man polyfunktionelle Polysiloxane mit den Strukturen $L_1$ oder $L_2$

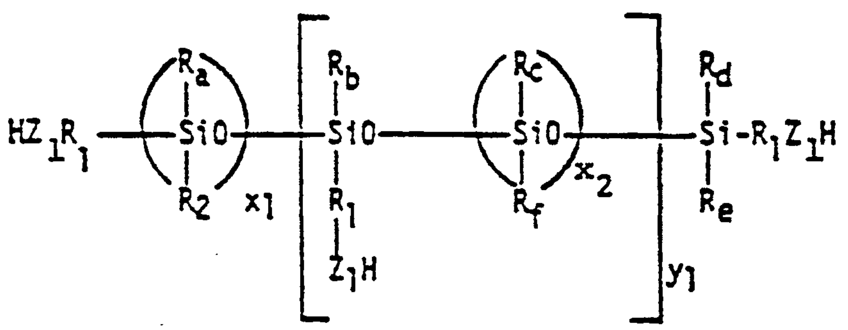

$L_1$

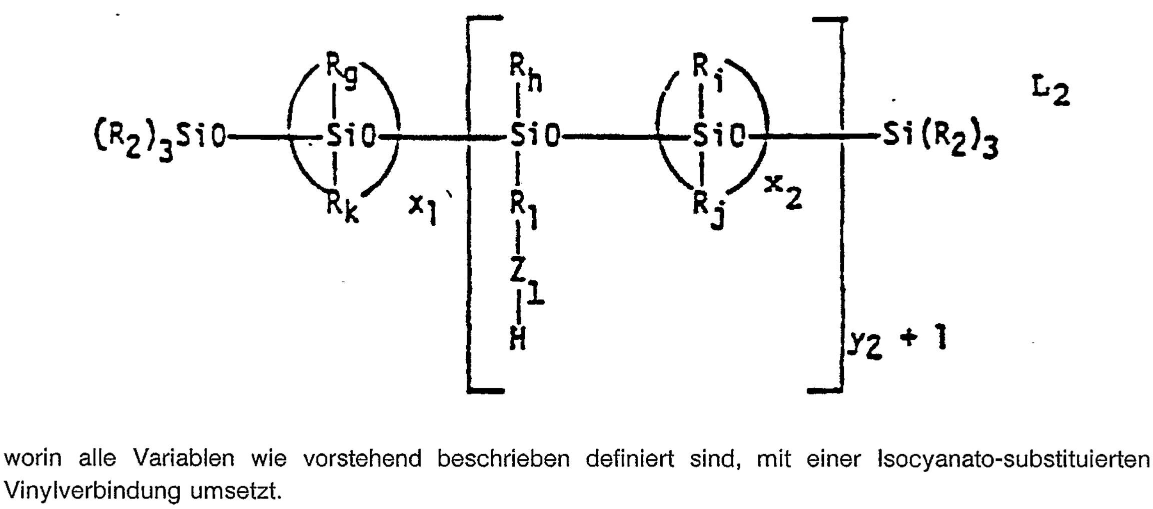

$L_2$

worin alle Variablen wie vorstehend beschrieben definiert sind, mit einer Isocyanato-substituierten Vinylverbindung umsetzt.

2. Verfahren nach Anspruch 1, worin $R_1$ Alkylen mit 3 oder 4 Kohlenstoffatomen ist, $R_2$, $R_a$, $R_b$, $R_c$, $R_d$, $R_e$, $R_f$, $R_g$, $R_h$, $R_i$, $R_j$ und $R_k$ jeweils Methyl sind, $x_1$ + $x_2$ 10 bis 100 ist, $y_1$ 0 bis 2 ist, $y_2$ 1 bis 3 ist, $Z_1$ -O- oder -NH- ist und $R_4$ ein zweiwertiger Rest eines aliphatischen oder cycloaliphatischen Diisocyanats mit 6 bis 10 Kohlenstoffatomen ist und Y gleich wie $Y_1$ ist, $R_6$ Wasserstoff ist, $R_8$ Ethylen ist und $Z_2$ -O-

oder $-NC(CH_3)_3-$ ist.

3. Verfahren nach Anspruch 2, worin das Polysiloxan die Struktur $A_2$ hat, $Z_1$ und $Z_2$ jeweils -O- sind und $y_2$ 1 oder 2 ist.

4. Verfahren nach Anspruch 1, worin das Polysiloxan die Struktur $A_3$ oder $A_4$ hat, worin $R_4$ der von Isophorondiisocyanat abgeleitete zweiwertige Rest ist.

5. Verfahren zur Herstellung einer polymerisierbaren Zusammensetzung, umfassend
(A) 5 bis 75 Gew.-%, bezogen auf die Komponenten (A) und (B), eines Polysiloxanmakromeren gemäss Anspruch 1, und
(B) 95 bis 25 Gew.-% von einem oder mehreren mono-, di- oder trifunktionellen vinylmonomeren, polymerisierbar durch Polymerisation mit freien Radikalen, gekennzeichnet durch herkömmliches Vermischen der Bestandteile (A) und (B) der Zusammensetzung.

6. Verfahren nach Anspruch 5 zur Herstellung einer Zusammensetzung, umfassend
(A) 15 bis 60 Gew.-% des linearen oder verzweigten Polysiloxanmakromeren und
(B) 85 bis 40 Gew.-% eines Gemischs von wasserlöslichen und wasserunlöslichen Monomeren oder eines wasserunlöslichen Monomeren, wobei die Monomeren monoolefinisch, diolefinisch oder ein Gemisch von monoolefinischen und diolefinischen Monomeren sind, 0 bis 100 Gew.-% der Gesamtmonomeren wasserunlöslich sind ($B_1$), 100 bis 0 Gew.-% der Gesamtmonomeren wasserlöslich sind ($B_2$), und 50 bis 0 Gew.-% der Gesamtmonomeren durch ein diolefinisches Monomeres ($B_x$) ersetzt sind.

7. Verfahren nach Anspruch 5, worin $R_1$ Alkylen mit 3 oder 4 Kohlenstoffatomen ist, $R_2$, $R_a$, $R_b$, $R_c$, $R_d$, $R_e$, $R_f$, $R_g$, $R_h$, $R_i$, $R_j$ und $R_k$ jeweils Methyl sind, $x_1 + x_2$ 10 bis 100 sind, $y_1$ 0 bis 2 ist, $y_2$ 1 bis 3 ist, $Z_1$ -O- oder -NH- ist und $R_4$ der zweiwertige Rest eines aliphatischen oder cycloaliphatischen Diisocyanats mit 6 bis 10 Kohlenstoffatomen ist, und Y gleich wie $Y_1$ ist, $R_6$ Wasserstoff ist, $R_8$ Ethylen ist und $Z_2$ -O- oder $-NC(CH_3)_3$-ist.

8. Verfahren nach Anspruch 7, worin das Polysiloxan die Struktur $A_2$ hat, $Z_1$ und $Z_2$ jeweils -O- sind und $Y_2$ 1 oder 2 ist.

9. Verfahren nach Anspruch 5, worin das Polysiloxan die Struktur $A_3$ oder $A_4$ hat, worin $R_4$ der von Isophorondiisocyanat abgeleitete zweiwertige Rest ist.

10. Verfahren nach Anspruch 6, worin das Monomere B ein wasserunlösliches Monomeres $B_1$ ist, das ein Acrylat oder Methacrylat der Formel $CH_2=CR_3COOR_{12}$, ein Acrylamid oder Methacrylamid der Formel $CH_2=CR_3CONHR_{12}$, ein Maleat oder Fumarat der Formel $R_{12}OCOCH=CHCOOR_{12}$, ein Itaconat der Formel $R_{12}OCOC(=CH_2)CH_2COOR_{12}$, ein Vinylester der Formel $R_{12}COOCH=CH_2$, ein Vinylether der Formel $CH_2=CHOR_{12}$ oder ein Gemisch dieser Monomeren ist, worin $R_3$ Wasserstoff oder Methyl ist und $R_{12}$ eine lineare oder verzweigte aliphatische, cycloaliphatische oder aromatische Gruppe mit 1 bis 21 Kohlenstoffatomen ist und Ether- oder Thioetherbindungen oder eine -CO-, -SO- oder $-SO_2$-Gruppeenthalten kann, oder worin $R_{12}$ eine heterocyclische Gruppe, die Sauerstoff-, Schwefel- oder Stickstoffatome enthält, eine Polypropylenoxid- oder Poly-n-butylenoxidgruppe mit 2 bis 50 wiederkehrenden Alkoxyeinheiten, eine perfluorierte Alkylgruppe mit 1-12 Kohlenstoffatomen oder eine Alkyl enthaltende Siloxangruppe mit 1 bis 6 Si-Atomen ist.

11. Verfahren nach Anspruch 10, worin das wasserunlösliche Monomere $B_1$ ausgewählt ist aus der Gruppe bestehend aus Methylmethacrylat, Isopropylmethacrylat, Isobutylmethacrylat, tert-Butylmethacrylat, Isobornylmethacrylat, Cyclohexylmethacrylat, Hexafluorisopropylmethacrylat und Gemischen davon.

12. Verfahren nach Anspruch 11, worin das wasserunlösliche Monomere $B_1$ ausgewählt ist aus der Gruppe bestehend aus Methylmethacrylat, Cyclohexylmethacrylat, Isobornylmethacrylat und Gemischen davon.

13. Verfahren nach Anspruch 6, worin die Komponente (B) 1 bis 30%, basierend auf dem Gesamtgewicht der Monomeren, eines diolefinischen Monomeren ($B_x$) enthält.

**14.** Verfahren nach Anspruch 6, worin das diolefinische Monomere ($B_x$) der Komponente B das Acrylat oder Methacrylat von Allylalkohol, einem gerad- oder verzweigtkettigen Alkylenglykol mit 2 bis 6 Kohlenstoffatomen, von Poly-(ethylenoxid)-glykolen, von Poly-(propylenoxid)-glykolen, von Poly-(n-butylenoxid)-glykolen, von Thiodiethylenglykol, von Neopentylenglykol, von Trimethylolpropan oder von Pentaerythrit ist; oder das Reaktionsprodukt, erhalten durch Reaktion von 1 Mol eines Di- oder Triisocyanats der Struktur $OCN-R_4(NCO)_v$ mit 2 oder 3 Molen eines Hydroxyalkylacrylats oder -methacrylats ist, wobei $R_4$ der von diesem Isocyanat abgeleitete Rest nach dem Entfernen der NCO-Gruppe(n) ist und v 1 oder 2 darstellt.

**15.** Verfahren nach Anspruch 6, worin die Komponente B ein Gemisch aus Methylmethacrylat und 1 bis 25 Gew.-%, bezogen auf die Gesamtmonomeren, Neopentylenglykoldiacrylat, Ethylenglykoldimethacrylat oder des Reaktionsprodukts von 1 Mol von Isophorondiisocyanat und 2 Mol 2-Hydroxethylmethacrylat ist.

**16.** Verfahren nach Anspruch 10, worin das wasserunlösliche Monomere $B_1$ ein Gemisch von Vinylacetat und Dimethylmaleat in einem 2/1 bis 5/1-Molverhältnis plus Methylmethacrylat, Isopropylmethacrylat, Isobutylmethacrylat, tert-Butylmethacrylat, Cyclohexylmethacrylat oder Hexafluorisopropylmethacrylat oder Gemischen davon ist.

**17.** Verfahren nach Anspruch 10, worin das wasserunlösliche Monomere $B_1$ ausgewählt ist aus der Gruppe bestehend aus 2-Ethylhexylacrylat, 2-Ethylhexylmethacrylat, n-Butylacrylat, n-Butylmethacrylat, n-Octylacrylat, n-Octylmethacrylat, n-Decylacrylat, n-Decylmethacrylat, Perfluoralkyl-($C_6$-$C_{10}$)-substituiertes Alkylacrylat oder Methacrylat und Gemischen davon.

**18.** Verfahren nach Anspruch 6, worin in dem Monomeren B das wasserlösliche Monomere $B_2$ ein Acrylat oder Methacrylat der Formel $CH_2=CR_3COOR_{13}$, ein Acrylamid oder Methacrylamid der Formel $CH_2=CR_3CONHR_{14}$ oder $CH_2=CR_3CON(R_5)_2$, ein Maleat oder Fumarat der Formel $R_{13}OCOCH=CHCOOR_{13}$, ein Vinylether der Formel $CH_2=CHOR_{13}$, ein N-Vinyllactam; oder ein Gemisch dieser Monomeren ist,

worin $R_3$ Wasserstoff oder Methyl ist, $R_5$ Wasserstoff oder $C_1$-$C_4$-Alkyl ist, $R_{13}$ ein Kohlenwasserstoffrest mit 1 bis 10 Kohlenstoffatomen, substituiert durch eine oder mehrere wasserlöslich-machende Gruppen, wie Carboxy, Hydroxy oder tert-Amino, oder eine Polyethylenoxidgruppe mit 2-100 wiederkehrenden Einheiten oder eine Gruppe, die Sulfat-, Phosphat-, Sulfonat- oder Phosphonatgruppen enthält, ist und $R_{14}$ die für $R_{13}$ oder $R_5$ angegebene Bedeutung hat.

**19.** Verfahren nach Anspruch 18, worin das wasserlösliche Monomere $B_2$ ausgewählt ist aus der Gruppe bestehend aus 2-Hydroxethylmethacrylat, N,N-Dimethylacrylamid, Acrylsäure, Methacrylsäure und N-Vinyl-2-pyrrolidon.

**20.** Verfahren nach Anspruch 6, worin die Komponente A eine Polysiloxanstruktur ist, worin $R_1$ Alkylen mit 3 oder 4 Kohlenstoffatomen ist, $R_2$, $R_a$, $R_b$, $R_c$, $R_d$, $R_e$, $R_f$, $R_g$, $R_h$, $R_i$, $R_j$ und $R_k$ jeweils Methyl sind, $x_1 + x_2$ 10 bis 100 ist, $y_1$ 0 bis 2 ist, $Y_2$ 1 bis 3 ist, $Z_1$ -O- oder -NH- ist und $R_4$ der zweiwertige Rest eines aliphatischen oder cycloaliphatischen Diisocyanats mit 6 bis 10 Kohlenstoffatomen ist und Y gleich wie $Y_1$ ist, $R_6$ Wasserstoff ist, $R_8$ Ethylen ist und $Z_2$ -O- oder $-NC(CH_3)_3-$ ist und die Komponente B 0 bis 30 %, basierend auf den Gesamtmonomeren, eines diolefinischen Monomeren ($B_x$) enthält, das das Acrylat oder Methacrylat von Allylalkohol, einem gerad- oder verzweigtkettigen Alkylenglykol mit 2 bis 6 Kohlenstoffatomen, von Poly-(ethylenoxid)-glykolen, von Poly-(propylenoxid)-glykolen, von Poly-(n-butylenoxid)-glykolen, von Thiodiethylenglykol, von Neopentylenglykol, von Trimethylolpropan oder von Pentaerythrit ist; oder das Reaktionsprodukt, erhalten durch Reaktion von 1 Mol eines Di- oder Triisocyanats der Struktur $OCN-R_4-(NCO)_v$mit 2 oder 3 Molen eines Hydroxyalkylacrylats oder -methacrylats, wobei $R_4$ der von diesem Isocanat abgeleitete Rest nach dem Entfernen der NCO-Gruppe(n) ist und v 1 oder 2 darstellt.

**21.** Verfahren nach Anspruch 20, worin $B_x$ Neopentylenglykoldiacrylat, Ethylenglykoldimethacrylat oder das Reaktionsprodukt von 1 Mol Isophorondiisocyanat und 2 Mol 2-Hydroxyethylmethacrylat ist.

**22.** Verfahren nach Anspruch 20, worin die Komponente B das wasserunlösliche Monomere $B_1$, ausgewählt

aus der Gruppe bestehend aus Methylmethacrylat, Isopropylmethacrylat, Isobutylmethacrylat, tert-Butylmethacrylat, Isobornylmethacrylat, Cyclohexylmethacrylat, Hexafluorisopropylmethacrylat und Gemischen davon, enthält.

**23.** Verfahren nach Anspruch 22, worin die Komponente B das wasserunlösliche Monomere $B_1$, ausgewählt aus der Gruppe bestehend aus Methylmethacrylat, Isopropylmethacrylat, Isobutylmethacrylat, Cyclohexylmethacrylat, Isobornylmethacrylat und Gemischen davon, enthält.

**24.** Verfahren nach Anspruch 21, worin die Komponente B als wasserunlösliches Monomeres $B_1$ Methylmethacrylat, Isobornylmethacrylat oder Gemische davon enthält.

**25.** Verfahren nach Anspruch 20, worin die Komponente B das wasserunlösliche Monomere $B_1$ enthält, das ein Gemisch von Vinylacetat und Dimethylmaleat in einem 2/1 bis 5/1-Molverhältnis plus Methylmethacrylat, Isopropylmethacrylat, Isobutylmethacrylat, tert-Butylmethacrylat, Cyclohexylmethacrylat oder Hexafluorisopropylmethacrylat und Gemischen davon ist.

**26.** Verfahren nach Anspruch 20, worin die Komponente B das wasserunlösliche Monomere $B_1$ enthält, ausgewählt aus der Gruppe bestehend aus 2-Ethylhexylacrylat, n-Butylacrylat, n-Butylmethacrylat, n-Octylacrylat, n-Octylmethacrylat, n-Decylacrylat, n-Decylmethacrylat, Perfluoralkyl-($C_6$-$C_{10}$)-substituiertes-alkylacrylat oder -methacrylat und Gemischen davon.

**27.** Verfahren nach Anspruch 20, worin die Komponente B das wasserlösliche Monomere $B_2$ enthält, ausgewählt aus der Gruppe bestehend aus 2-Hydroxyethylmethacrylat, N,N-Dimethylacrylamid, Acrylsäure, Methacrylsäure und N-Vinyl-2-pyrrolidon.

**28.** Verfahren nach Anspruch 20 zur Herstellung einer Zusammensetzung, die umfaßt

(A) 15 bis 40 Gew.-% eines Polysiloxans der Struktur $A_2$, wobei $Z_1$ und $Z_2$ jeweils -O- sind und $y_2$ 1 oder 2 ist, und

(B) 85 bis 60 Gew.-% eines Gemischs aus einem wasserunlöslichen Monomeren ($B_1$), einem wasserlöslichen Monomeren ($B_2$) und einem diolefinischen Monomeren ($B_x$), worin, basierend auf den Gewichtsprozent des Gesamtgewichts der Monomeren,

$B_1$ 60 bis 95% eines wasserunlöslichen Monomeren, ausgewählt aus der Gruppe bestehend aus Methylmethacrylat, Isopropylmethacrylat, Isobutylmethacrylat, tert-Butylmethacrylat, Cyclohexylmethacrylat, Isobornylmethacrylat und Gemischen davon ist,

$B_2$ 20 bis 0% eines wasserlöslichen Monomeren, ausgewählt aus der Gruppe bestehend aus 2-Hydroxyethylmethacrylat, N,N-Dimethylacrylamid, Acrylsäure, Methacrylsäure, N-Vinyl-2-pyrrolidon und Gemischen davon ist, und

$B_x$ 20 bis 5% eines diolefinischen Monomeren, ausgewählt aus der Gruppe bestehend aus Neopentylenglykoldiacrylat, Ethylenglykoldimethacrylat und dem Reaktionsprodukt von 1 Mol Isophorondiisocyanat und 2 Mol 2-Hydroxyethylmethacrylat, ist.

**29.** Verfahren nach Anspruch 20 zur Herstellung einer Zusammensetzung, die umfaßt

(A) 40 bis 60 Gew.-% eines Polysiloxans der Struktur $A_2$, wobei $Z_1$ und $Z_2$ jeweils -O- sind und $y_2$ 1 oder 2 ist, und

(B) 60 bis 40 Gew.-% eines Gemischs eines wasserunlöslichen Monomeren ($B_1$), eines wasserlöslichen Monomeren ($B_2$) und eines diolefinischen Monomeren ($B_x$), worin, basierend auf den Gewichtsprozent des Gesamtgewichts der Monomeren

$B_1$ 70 bis 100% eines wasserunlöslichen Monomeren, ausgewählt aus der Gruppe bestehend aus Ethylacrylat oder -methacrylat, n-Butylacrylat oder -methacrylat, n-Hexylacrylat oder -methacrylat, 2-Ethylhexylacrylat oder -methacrylat, n-Octylacrylat oder -methacrylat, n-Decylacrylat oder -methacrylat und Gemischen davon, und mit Gemischen davon mit Methyl- oder Isobornylmethacrylat ist,

$B_2$ 25 bis 0% eines wasserlöslichen Monomeren, ausgewählt aus der Gruppe bestehend aus 2-Hydroxyethylmethacrylat, N,N-Dimethylacrylamid, Acrylsäure, Methacrylsäure, N-Vinyl-2-pyrrolidon und

Gemischen davon ist, und

$B_x$ 5 bis 0% eines diolefinischen Monomeren, ausgewählt aus der Gruppe bestehend aus Neopentylenglykoldiacrylat, Ethylenglykoldimethacrylat und dem Reaktionsprodukt von 1 Mol Isophorondiisocyanat und 2 Mol 2-Hydroxyethylmethacrylat, ist.

**30.** Verfahren nach Anspruch 20 zur Herstellung einer Zusammensetzung, die umfaßt
(A) 20 bis 60 Gew.-% eines Polysiloxans der Struktur $A_2$, wobei $Z_1$ und $Z_2$ jeweils -O- sind, und $y_2$ 1 oder 2 ist, und
(B) 80 bis 40 Gew.-% eines Gemischs eines wasserunlöslichen Monomeren ($B_1$), eines wasserlöslichen Monomeren ($B_2$) und eines diolefinischen Monomeren ($B_x$), worin, basierend auf den Gewichtsprozent des Gesamtgewichts der Monomeren, und

$B_1$ 0 bis 80% eines wasserunlöslichen Monomeren, ausgewählt aus der Gruppe bestehend aus Methylmethacrylat, 2-Ethylhexylacrylat, Hexafluorisopropylmethacrylat, Perfluoralkyl-($C_6$-$C_{10}$)-acrylat und -methacrylat, Isopropylmethacrylat, Isobutylmethacrylat, tert-Butylmethacrylat, Cyclohexylmethacrylat, Isobornylmethacrylat und Gemischen davon ist,

$B_2$ 100 bis 15% eines wasserlöslichen Monomeren, ausgewählt aus der Gruppe bestehend aus 2-Hydroxyethylmethacrylat, N,N-Dimethylacrylamid, N-Vinyl-2-pyrrolidonacrylamid und Gemischen davon ist, und

$B_x$ 0 bis 5% eines diolefinischen Monomeren, ausgewählt aus der Gruppe bestehend aus Neopentylenglykoldiacrylat, Ethylenglykoldimethacrylat und dem Reaktionsprodukt von 1 Mol Isophorondiisocyanat und 2 Mol 2-Hydroxyethylmethacrylat ist.

**31.** Eine harte Kontaktlinse, hergestellt aus dem Polymeren der Zusammensetzung nach Anspruch 5.

**32.** Eine harte Kontaktlinse, hergestellt aus dem Polymeren der Zusammensetzung nach Anspruch 28.

**33.** Eine weiche Kontaktlinse, hergestellt aus dem Polymeren der Zusammensetzung nach Anspruch 5.

**34.** Eine weiche Kontaktlinse, hergestellt aus dem Polymeren der Zusammensetzung nach Anspruch 29.

**35.** Eine weiche Hydrogel-Kontaktlinse, hergestellt aus dem Polymeren der Zusammensetzung nach Anspruch 5.

**36.** Eine weiche Hydrogel-Kontaktlinse, hergestellt aus dem Polymeren der Zusammensetzung nach Anspruch 30.

**37.** Verfahren zur Herstellung eines Polymeren, umfassend das Copolymerisationsprodukt der Zusammensetzung nach Anspruch 5, gekennzeichnet durch herkömmliche Copolymerisation der Zusammensetzung nach Anspruch 5.

**38.** Ein Verfahren nach Anspruch 5, umfassend die Reaktion der Komponenten (A) und (B), unter Einwirkung von Wärme oder Strahlung.

## Claims

### Claims for the following Contracting States: DE, FR, GB, IT, SE

**1.** A linear or branched polysiloxane macromer having a molecular weight from about 400 to 100 000, as measured by end group analysis or gel permeation chromatography, the macromer comprising at least one terminal or pendant polymerizable olefinic group, and at least one such polymerizable olefinic group per 5000 molecular weight unit of polysiloxane, the said group being attached to the polysiloxane by way of a urethane, thiourethane or urea linkage, and the said macromer having the structure $A_1$, $A_2$, $A_3$ or $A_4$

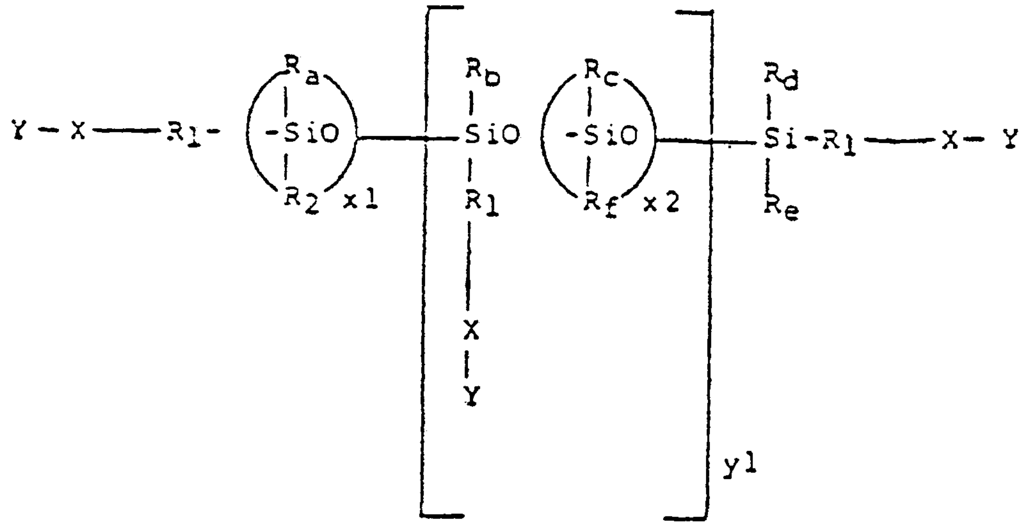

(A1)

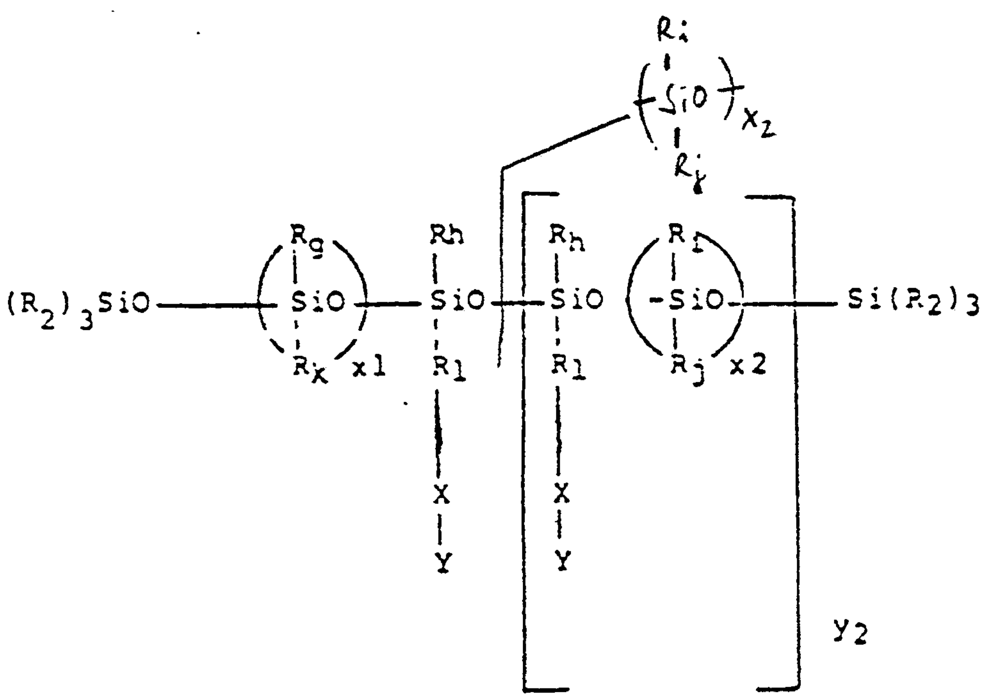

(A2)

$Y_1$-($T$ - $R_4$)$_n$-$T$-$Y_1$ , (A3)

or

$Y_1$-($T_1$ - $R_4$)$_n$-$T_1$-$Y_1$ , (A4) ,

wherein:

$R_1$ is a linear or branched alkylene group having from 2 to 6 carbon atoms or a polyoxyalkylene group of the structure G or $G_1$

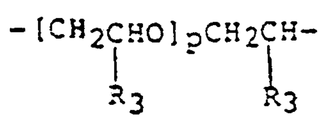

(G)

-$[CH_2CH_2CH_2CH_2O]_pCH_2CH_2CH_2CH_2$- ($G_1$) ,

wherein $R_3$ is hydrogen or methyl and p is an integer from 1-50, $R_2$, $R_a$, $R_b$, $R_c$, $R_d$, $R_e$, $R_f$, $R_g$, $R_h$, $R_i$, $R_j$ and $R_k$ are independently methyl or phenyl, $x_1$, $x_2$ are integers from 1 to 500 with the proviso that the sum of $x_1 + x_2$ is 7 to 1300, $y_1$ is 0 to 14 and $y_2$ is 1 to 13 with the proviso that the ratio of

$$\frac{x_1 + x_2}{y_1 + 2}$$

or

$$\frac{x_1 + x_2}{y_2 + 1}$$

is not greater than 70,
X is $-Z_1-CO-NH-$,
$Z_1$ is oxygen, sulfur or $-NR_5-$, wherein $R_5$ is hydrogen or $C_1$-$C_4$alkyl, $Z_1$ is bonded to $R_1$; with the proviso that $Z_1$ in a macromer of the structure $A_1$ is other than oxygen;

$Y_1$ is

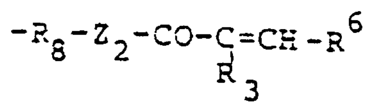

or

$-R_7-O-CH=CH_2$

wherein:
$R_6$ is: hydrogen, methyl, $-COOR_5$ or $-COOR_7OH$,

$Z_2$ = oxygen or $-NR_5-$,

Y is the same as $Y_1$, or Y is H, alkyl having from 1 to 8 carbon atoms, cyclohexyl, phenyl, o-tolyl, m-tolyl or p-tolyl, with the proviso that at least one of the radicals Y must have the same meaning as $Y_1$,

$R_7$ is a linear or branched alkylene having from 2 to 10 carbon atoms, phenylene or phenylalkylene having from 2 to 10 carbon atoms in the alkylene, or polyoxyalkylene of the structure G or $G_1$;

$R_8$ is an alkylene group having from 2 to 6 carbon atoms,

$R_4$ is a divalent radical obtained by removing the NCO groups from an aliphatic, cycloaliphatic, araliphatic or aromatic diisocyanate;

T is the group

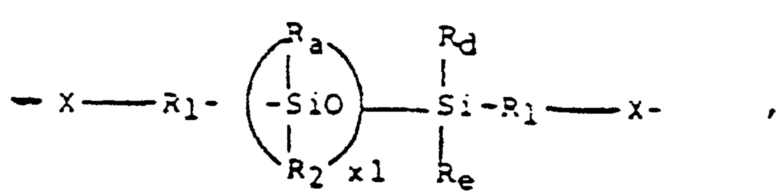

$T_1$ is the group

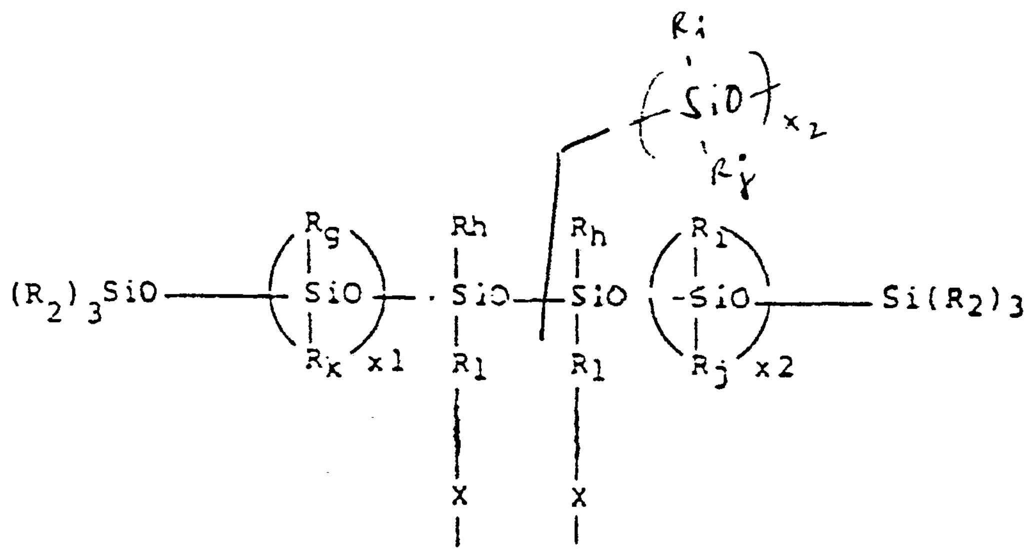

,

and

n is 1 to 10.

2. A polysiloxane macromer according to claim 1, wherein $R_1$ is alkylene having 3 or 4 carbon atoms, $R_2$, $R_a$, $R_b$, $R_c$, $R_d$, $R_e$, $R_f$, $R_g$, $R_h$, $R_i$, $R_j$ and $R_k$ are each methyl, $x_1 + x_2$ is 10 to 100, $y_1$ is 0 to 2, $y_2$ is 1 to 3, $Z_1$ is -O- or -NH- and $R_4$ is a divalent radical of an aliphatic or cycloaliphatic diisocyanate having from 6 to 10 carbon atoms, and Y is the same as $Y_1$, $R_6$ is hydrogen, $R_8$ is ethylene, and $Z_2$ is -O- or $-NC(CH_3)_3-$.

3. A polysiloxane macromer according to claim 2, wherein the polysiloxane has the structure $A_2$, $Z_1$ and $Z_2$ are each -O-, and $y_2$ is 1 or 2.

4. A polysiloxane macromer according to claim 1, wherein the polysiloxane has the structure $A_3$ or $A_4$ wherein $R_4$ is the divalent radical derived from isophorone diisocyanate.

5. A polymerizable composition, comprising
   (A) from 5 to 75 % by weight, based on components (A) and (B), of a polysiloxane macromer according to claim 1, and
   (B) from 95 to 25 % by weight of one or more mono-, di- or tri-functional vinyl monomer(s) polymerizable by free radical polymerization.

6. A composition according to claim 5, comprising
   (A) from 15 to 60 % by weight of the linear or branched polysiloxane macromer, and
   (B) from 85 to 40 % by weight of a mixture of water-soluble and water-insoluble monomers, or of a water-insoluble monomer, the said monomers being monoolefinic, diolefinic or a mixture of monoolefinic and diolefinic monomers, from 0 to 100 % by weight of the total monomer content being water-insoluble ($B_1$), from 100 to 0 % by weight of the total monomer content being water-soluble ($B_2$), and from 50 to 0 % by weight of the total monomer content being replaced by a diolefinic monomer ($B_x$).

7. A composition according to claim 5, wherein $R_1$ is alkylene having 3 or 4 carbon atoms, $R_2$, $R_a$, $R_b$, $R_c$, $R_d$, $R_e$, $R_f$, $R_g$, $R_h$, $R_i$, $R_j$ and $R_k$ are each methyl, $x_1 + x_2$ is 10 to 100, $y_1$ is 0 to 2, $y_2$ is 1 to 3, $Z_1$ is -O- or -NH-and $R_4$ is the divalent radical of an aliphatic or cycloaliphatic diisocyanate having from 6 to 10 carbon atoms, and Y is the same as $Y_1$, $R_6$ is hydrogen, $R_8$ is ethylene, and $Z_2$ is -O- or $-NC(CH_3)_3-$.

8. A composition according to claim 7, wherein the polysiloxane has the structure $A_2$, $Z_1$ and $Z_2$ are each

-O-, and $Y_2$ is 1 or 2.

**9.** A composition according to claim 5, wherein the polysiloxane has the structure $A_3$ or $A_4$ wherein $R_4$ is the divalent radical derived from isophorone diisocyanate.

**10.** A composition according to claim 6, wherein monomer B is a water-insoluble monomer $B_1$ which is an acrylate or methacrylate of formula $CH_2=CR_3COOR_{12}$, an acrylamide or methacrylamide of formula $CH_2=CR_3CONHR_{12}$, a maleate or fumarate of formula $R_{12}OCOCH=CHCOOR_{12}$, an itaconate of formula $R_{12}OCOC(=CH_2)CH_2COOR_{12}$, a vinyl ester of formula $R_{12}COOCH=CH_2$, a vinyl ether of formula $CH_2=CHOR_{12}$, or a mixture of those monomers, wherein $R_3$ is hydrogen or methyl and $R_{12}$ is a linear or branched aliphatic, cycloaliphatic or aromatic group having from 1 to 21 carbon atoms and may comprise ether or thioether linkages or a -CO-, -SO- or $-SO_2-$ group; or $R_{12}$ is a heterocyclic group comprising oxygen, sulfur or nitrogen atoms, or a polypropylene oxide or poly-n-butylene oxide group having from 2 to 50 repeating alkoxy units; or is a perfluorinated alkyl group having from 1 to 12 carbon atoms; or is an alkyl-containing siloxane group having from 1 to 6 silicon atoms.

**11.** A composition according to claim 10, wherein the water-insoluble monomer $B_1$ is selected from the group consisting of methyl methacrylate, isopropyl methacrylate, isobutyl methacrylate, tert-butyl methacrylate, isobornyl methacrylate, cyclohexyl methacrylate, hexafluoroisopropyl methacrylate and mixtures thereof.

**12.** A composition according to claim 11, wherein the water-insoluble monomer $B_1$ is selected from the group consisting of methyl methacrylate, cyclohexyl methacrylate, isobornyl methacrylate and mixtures thereof.

**13.** A composition according to claim 6, wherein component (B) comprises from 1 to 30 %, based on the total weight of monomer, of a diolefinic monomer ($B_x$).

**14.** A composition according to claim 6, wherein the diolefinic monomer ($B_x$) of component B is the acrylate or methacrylate of allyl alcohol, of a straight or branched-chain alkylene glycol having from 2 to 6 carbon atoms, of poly(ethylene oxide)glycols, of poly(propylene oxide)glycols, of poly(n-butylene oxide)glycols, of thiodiethylene glycol, of neopentylene glycol, of trimethylolpropane, or of pentaerythritol; or the reaction product obtained by reacting 1 mol of a di- or tri-isocyanate of the structure $OCN-R_4(NCO)_v$, wherein $R_4$ is the radical derived from the said isocyanate by removing the NCO group(s) and v is 1 or 2, with 2 or 3 mol of a hydroxyalkyl acrylate or methacrylate.

**15.** A composition according to claim 6, wherein component B is a mixture of methyl methacrylate and 1 to 25 % by weight, based on the total monomer content, of neopentylene glycol diacrylate, ethylene glycol dimethacrylate or the reaction product of 1 mol of isophorone diisocyanate and 2 mol of 2-hydroxyethyl methacrylate.

**16.** A composition according to claim 10, wherein the water-insoluble monomer $B_1$ is a mixture of vinyl acetate and dimethyl maleate in a 2/1 to 5/1 molar ratio plus methyl methacrylate, isopropyl methacrylate, isobutyl methacrylate, tert-butyl methacrylate, cyclohexyl methacrylate or hexafluoroisopropyl methacrylate or mixtures thereof.

**17.** A composition according to claim 10, wherein the water-insoluble monomer $B_1$ is selected from the group consisting of 2-ethylhexyl acrylate, 2-ethylhexyl methacrylate, n-butyl acrylate, n-butyl methacrylate, n-octyl acrylate, n-octyl methacrylate, n-decyl acrylate, n-decyl methacrylate, perfluoroalkyl-($C_6$-$C_{10}$)-substituted alkyl acrylate or methacrylate, and mixtures thereof.

**18.** A composition according to claim 6, wherein in monomer B the water-soluble monomer $B_2$ is an acrylate or methacrylate of formula $CH_2=CR_3COOR_{13}$, an acrylamide or methacrylamide of formula $CH_2=CR_3CONHR_{14}$ or $CH_2=CR_3CON(R_5)_2$, a maleate or fumarate of formula $R_{13}OCOCH=CHCOOR_{13}$, a vinyl ether of formula $CH_2=CHOR_{13}$, an N-vinyl lactam, or a mixture of those monomers,

wherein $R_3$ is hydrogen or methyl, $R_5$ is hydrogen or $C_1$-$C_4$alkyl, $R_{13}$ is a hydrocarbon radical having

from 1 to 10 carbon atoms that is substituted by one or more water-solubilizing groups, such as carboxy, hydroxy or tert-amino, or a polyethylene oxide group having from 2 to 100 repeating units, or a group which comprises sulfate, phosphate, sulfonate or phosphonate groups, and $R_{14}$ has the meaning given for $R_{13}$ or $R_5$.

**19.** A composition according to claim 18, wherein the water-soluble monomer $B_2$ is selected from the group consisting of 2-hydroxyethyl methacrylate, N,N-dimethylacrylamide, acrylic acid, methacrylic acid and N-vinyl-2-pyrrolidone.

**20.** A composition according to claim 6, wherein component A is a polysiloxane structure wherein $R_1$ is alkylene having 3 or 4 carbon atoms, $R_2$, $R_a$, $R_b$, $R_c$, $R_d$, $R_e$, $R_f$, $R_g$, $R_h$, $R_i$, $R_j$ and $R_k$ are each methyl, $x_1 + x_2$ is 10 to 100, $y_1$ is 0 to 2, $Y_2$ is 1 to 3, $Z_1$ is -O- or -NH- and $R_4$ is the divalent radical of an aliphatic or cycloaliphatic diisocyanate having from 6 to 10 carbon atoms, and V is the same as $Y_1$, $R_6$ is hydrogen, $R_8$ is ethylene, and $Z_2$ is -O- or $-NC(CH_3)_3-$, and component B comprises from 0 to 30 %, based on the total monomer content, of a diolefinic monomer ($B_x$), which is the acrylate or methacrylate of allyl alcohol, of a straight or branched-chain alkylene glycol having from 2 to 6 carbon atoms, of poly(ethylene oxide)glycols, of poly(propylene oxide)glycols, of poly(n-butylene oxide)glycols, of thiodiethylene glycol, of neopentylene glycol, of trimethylolpropane, or of pentaerythritol; or the reaction product obtained by reacting 1 mol of a di- or tri-isocyanate of the structure $OCN\text{-}R_4\text{-}(NCO)_v$, wherein $R_4$ is the radical derived from the said isocyanate by removing the NCO group(s) and v is 1 or 2, with 2 or 3 mol of a hydroxyalkyl acrylate or methacrylate.

**21.** A composition according to claim 20, wherein $B_x$ is neopentylene glycol diacrylate, ethylene glycol dimethacrylate or the reaction product of 1 mol of isophorone diisocyanate and 2 mol of 2-hydroxyethyl methacrylate.

**22.** A composition according to claim 20, wherein component B comprises a water-insoluble monomer $B_1$ selected from the group consisting of methyl methacrylate, isopropyl methacrylate, isobutyl methacrylate, tert-butyl methacrylate, isobornyl methacrylate, cyclohexyl methacrylate and hexafluoroisopropyl methacrylate and mixtures thereof.

**23.** A composition according to claim 22, wherein component B comprises a water-insoluble monomer $B_1$ selected from the group consisting of methyl methacrylate, isopropyl methacrylate, isobutyl methacrylate, cyclohexyl methacrylate, isobornyl methacrylate and mixtures thereof.

**24.** A composition according to claim 21, wherein component B comprises as the water-insoluble monomer $B_1$ methyl methacrylate, isobornyl methacrylate or a mixture thereof.

**25.** A composition according to claim 20, wherein component B comprises a water-insoluble monomer $B_1$ which is a mixture of vinyl acetate and dimethyl maleate in a 2/1 to 5/1 molar ratio plus methyl methacrylate, isopropyl methacrylate, isobutyl methacrylate, tert-butyl methacrylate, cyclohexyl methacrylate or hexafluoroisopropyl methacrylate or a mixture thereof.

**26.** A composition according to claim 20, wherein component B comprises a water-insoluble monomer $B_1$ selected from the group consisting of 2-ethylhexyl acrylate, n-butyl acrylate, n-butyl methacrylate, n-octyl acrylate, n-octyl methacrylate, n-decyl acrylate, n-decyl methacrylate, perfluoroalkyl-($C_6$-$C_{10}$)-substituted alkyl acrylate or methacrylate, and mixtures thereof.

**27.** A composition according to claim 20, wherein component B comprises a water-soluble monomer $B_2$ selected from the group consisting of 2-hydroxyethyl methacrylate, N,N-dimethylacrylamide, acrylic acid, methacrylic acid and N-vinyl-2-pyrrolidone.

**28.** A composition according to claim 20, which comprises

(A) from 15 to 40 % by weight of a polysiloxane of the structure $A_2$, wherein $Z_1$ and $Z_2$ are each -O- and $y_2$ is 1 or 2, and

(B) from 85 to 60 % by weight of a mixture of a water-insoluble monomer ($B_1$), of a water-soluble monomer ($B_2$), and of a diolefinic monomer ($B_x$), wherein, based on the percentage by weight of the total weight of monomers,

$B_1$ is from 60 to 95 % of a water-insoluble monomer selected from the group consisting of methyl methacrylate, isopropyl methacrylate, isobutyl methacrylate, tert-butyl methacrylate, cyclohexyl methacrylate, isobornyl methacrylate and mixtures thereof,

$B_2$ is from 20 to 0 % of a water-soluble monomer selected from the group consisting of 2-hydroxyethyl methacrylate, N,N-dimethylacrylamide, acrylic acid, methacrylic acid, N-vinyl-2-pyrrolidone and mixtures thereof, and

$B_x$ is from 20 to 5 % of a diolefinic monomer selected from the group consisting of neopentylene glycol diacrylate, ethylene glycol dimethacrylate and the reaction product of 1 mol of isophorone diisocyanate and 2 mol of 2-hydroxyethyl methacrylate.

**29.** A composition according to claim 20, which comprises
(A) from 40 to 60 % by weight of a polysiloxane of the structure $A_2$, wherein $Z_1$ and $Z_2$ are each -O- and $y_2$ is 1 or 2, and
(B) from 60 to 40 % by weight of a mixture of a water-insoluble monomer ($B_1$), of a water-soluble monomer ($B_2$), and of a diolefinic monomer ($B_x$), wherein, based on the percentage by weight of the total weight of monomers,

$B_1$ is from 70 to 100 % of a water-insoluble monomer selected from the group consisting of ethyl acrylate or methacrylate, n-butyl acrylate or methacrylate, n-hexyl acrylate or methacrylate, 2-ethylhexyl acrylate or methacrylate, n-octyl acrylate or methacrylate, n-decyl acrylate or methacrylate and mixtures thereof and with mixtures thereof with methyl or isobornyl methacrylate,

$B_2$ is from 25 to 0 % of a water-soluble monomer selected from the group consisting of 2-hydroxyethyl methacrylate, N,N-dimethylacrylamide, acrylic acid, methacrylic acid, N-vinyl-2-pyrrolidone and mixtures thereof, and

$B_x$ is from 5 to 0 % of a diolefinic monomer selected from the group consisting of neopentylene glycol diacrylate, ethylene glycol dimethacrylate and the reaction product of 1 mol of isophorone diisocyanate and 2 mol of 2-hydroxyethyl methacrylate.

**30.** A composition according to claim 20, which comprises
(A) from 20 to 60 % by weight of a polysiloxane of the structure $A_2$ wherein $Z_1$ and $Z_2$ are each -O-, and $y_2$ is 1 or 2, and
(B) from 80 to 40 % by weight of a mixture of a water-insoluble monomer ($B_1$), of a water-soluble monomer ($B_2$), and of a diolefinic monomer ($B_x$), wherein, based on the percentage by weight of the total weight of monomers,

$B_1$ is from 0 to 80 % of a water-insoluble monomer selected from the group consisting of methyl methacrylate, 2-ethylhexyl acrylate, hexafluoroisopropyl methacrylate, perfluoroalkyl-($C_6$-$C_{10}$) acrylate or methacrylate, isopropyl methacrylate, isobutyl methacrylate, tert-butyl methacrylate, cyclohexyl methacrylate, isobornyl methacrylate and mixtures thereof,

$B_2$ is from 100 to 15 % of water-soluble monomer selected from the group consisting of 2-hydroxyethyl methacrylate, N,N-dimethylacrylamide, N-vinyl-2-pyrrolidone acrylamide and mixtures thereof, and

$B_x$ is from 0 to 5 % of a diolefinic monomer selected from the group consisting of neopentylene glycol diacrylate, ethylene glycol dimethacrylate and the reaction product of 1 mol of isophorone diisocyanate and 2 mol of 2-hydroxyethyl methacrylate.

**31.** A hard contact lens prepared from the polymer of the composition according to claim 5.

**32.** A hard contact lens prepared from the polymer of the composition according to claim 28.

**33.** A soft contact lens prepared from the polymer of the composition according to claim 5.

**34.** A soft contact lens prepared from the polymer of the composition according to claim 29.

**35.** A soft hydrogel contact lens prepared from the polymer of the composition according to claim 5.

**36.** A soft hydrogel contact lens prepared from the polymer of the composition according to claim 30.

**37.** A polymer comprising the copolymerization product of the composition according to claim 5.

**38.** A process for the production of a polymer from the composition according to claim 5, comprising the reaction of components (A) and (B) under the action of heat or irradiation.

**Claims for the following Contracting States: BE, CH, LI, LU, NL**

**1.** A linear or branched polysiloxane macromer having a molecular weight from about 400 to 100 000, as measured by end group analysis or gel permeation chromatography, the macromer comprising at least one terminal or pendant polymerizable olefinic group, and at least one such polymerizable olefinic group per 5000 molecular weight unit of polysiloxane, the said group being attached to the polysiloxane by way of a urethane, thiourethane or urea linkage, and the said macromer having the structure $A_1$, $A_2$, $A_3$ or $A_4$

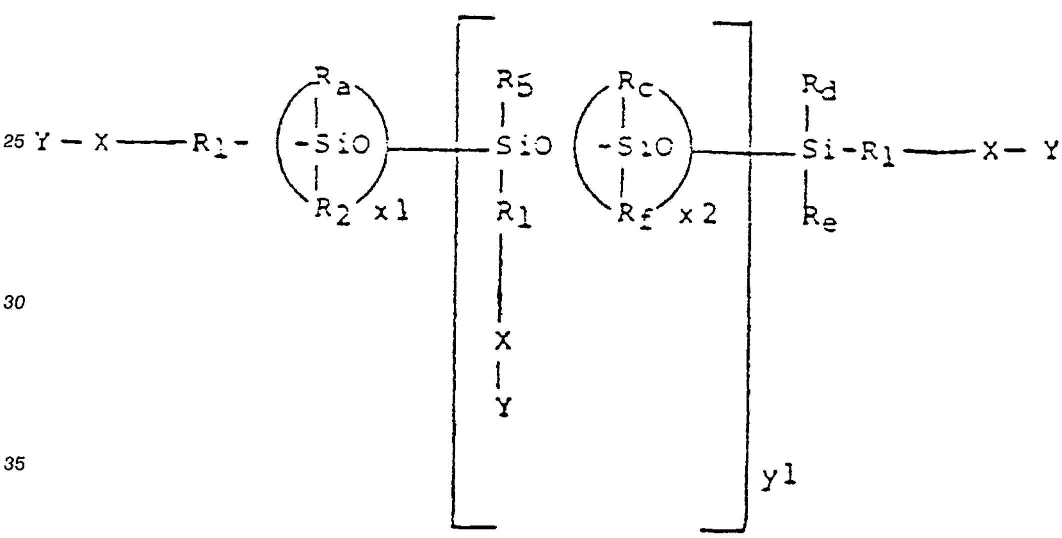

($A_1$)

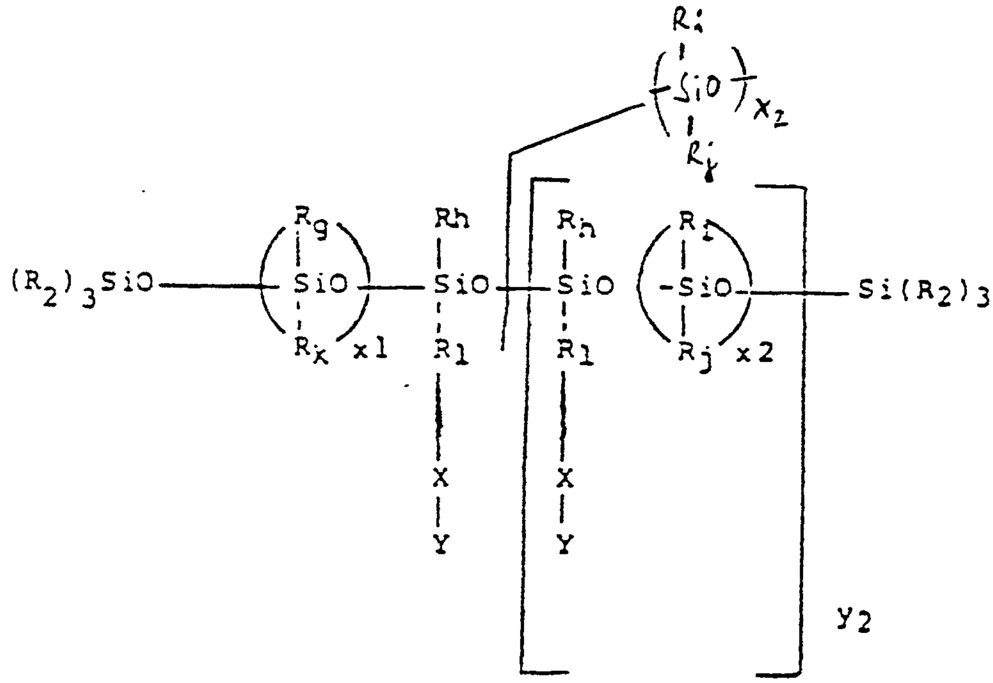

(A2)

$Y_1$-(T - $R_4$)$_n$-T-$Y_1$ , ($A_3$)

or

$Y_1$-($T_1$ - $R_4$)$_n$-$T_1$-$Y_1$ , ($A_4$) ,

wherein:

$R_1$ is a linear or branched alkylene group having from 2 to 6 carbon atoms or a polyoxyalkylene group of the structure G or $G_1$

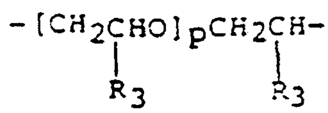

(G)

$-[CH_2CH_2CH_2CH_2O]_pCH_2CH_2CH_2CH_2-$ ($G_1$) ,

wherein $R_3$ is hydrogen or methyl and p is an integer from 1-50, $R_2$, $R_a$, $R_b$, $R_c$, $R_d$, $R_e$, $R_f$, $R_g$, $R_h$, $R_i$, $R_j$ and $R_k$ are independently methyl or phenyl, $x_1$, $x_2$ are integers from 1 to 500 with the proviso that the sum of $x_1$ + $x_2$ is 7 to 1300, $y_1$ is 0 to 14 and $y_2$ is 1 to 13 with the proviso that the ratio of

$$\frac{x_1 + x_2}{y_1 + 2}$$

or

$$\frac{x_1 + x_2}{y_2 + 1}$$

is not greater than 70,

X is - $Z_1$ - CO - NH -,
$Z_1$ is oxygen, sulfur or $-NR_5-$, wherein $R_5$ is hydrogen or $C_1$-$C_4$alkyl, $Z_1$ is bonded to $R_1$;
$Y_1$ is

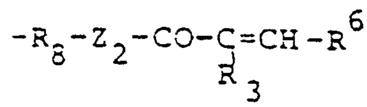

or
$-R_7-O-CH=CH_2$

wherein:

$R_6$ is: hydrogen, methyl, $-COOR_5$ or $-COOR_7OH$,

$Z_2$ = oxygen or $-NR_5-$,

Y is the same as $Y_1$, or Y is H, alkyl having from 1 to 8 carbon atoms, cyclohexyl, phenyl, o-tolyl, m-tolyl or p-tolyl, with the proviso that at least one of the radicals Y must have the same meaning as $Y_1$,

$R_7$ is a linear or branched alkylene having from 2 to 10 carbon atoms, phenylene or phenylalkylene having from 2 to 10 carbon atoms in the alkylene, or polyoxyalkylene of the structure G or $G_1$;

$R_8$ is an alkylene group having from 2 to 6 carbon atoms,

$R_4$ is a divalent radical obtained by removing the NCO groups from an aliphatic, cycloaliphatic, araliphatic or aromatic diisocyanate;

T is the group

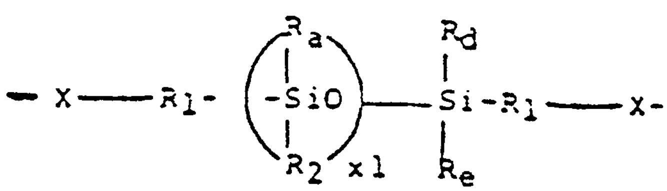

,

$T_1$ is the group

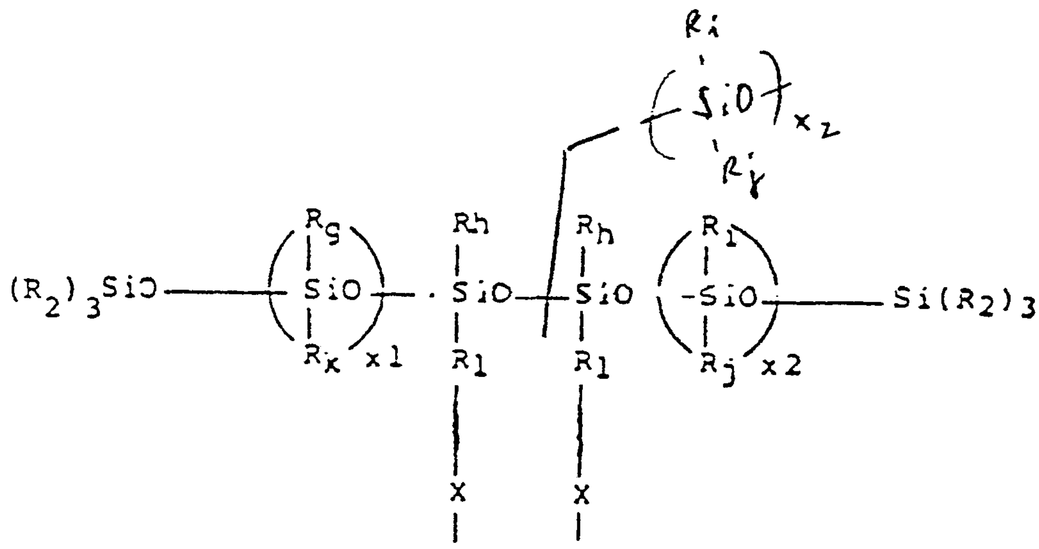

,

and

n is 1 to 10.

2. A polysiloxane macromer according to claim 1, wherein $R_1$ is alkylene having 3 or 4 carbon atoms, $R_2$, $R_a$, $R_b$, $R_c$, $R_d$, $R_e$, $R_f$, $R_g$, $R_h$, $R_i$, $R_j$ and $R_k$ are each methyl, $x_1 + x_2$ is 10 to 100, $y_1$ is 0 to 2, $y_2$ is 1 to 3, $Z_1$ is -O- or -NH- and $R_4$ is a divalent radical of an aliphatic or cycloaliphatic diisocyanate having from 6 to 10 carbon atoms, and Y is the same as $Y_1$, $R_6$ is hydrogen, $R_8$ is ethylene, and $Z_2$ is -O- or $-NC(CH_3)_3-$.

3. A polysiloxane macromer according to claim 2, wherein the polysiloxane has the structure $A_2$, $Z_1$ and $Z_2$ are each -O-, and $y_2$ is 1 or 2.

4. A polysiloxane macromer according to claim 1, wherein the polysiloxane has the structure $A_3$ or $A_4$ wherein $R_4$ is the divalent radical derived from isophorone diisocyanate.

5. A polymerizable composition, comprising
(A) from 5 to 75 % by weight, based on components (A) and (B), of a polysiloxane macromer according to claim 1, and
(B) from 95 to 25 % by weight of one or more mono-, di- or tri-functional vinyl monomer(s) polymerizable by free radical polymerization.

6. A composition according to claim 5, comprising
(A) from 15 to 60 % by weight of the linear or branched polysiloxane macromer, and
(B) from 85 to 40 % by weight of a mixture of water-soluble and water-insoluble monomers, or of a water-insoluble monomer, the said monomers being monoolefinic, diolefinic or a mixture of monoolefinic and diolefinic monomers, from 0 to 100 % by weight of the total monomer content being water-insoluble ($B_1$), from 100 to 0 % by weight of the total monomer content being water-soluble ($B_2$), and from 50 to 0 % by weight of the total monomer content being replaced by a diolefinic monomer ($B_x$).

7. A composition according to claim 5, wherein $R_1$ is alkylene having 3 or 4 carbon atoms, $R_2$, $R_a$, $R_b$, $R_c$, $R_d$, $R_e$, $R_f$, $R_g$, $R_h$, $R_i$, $R_j$ and $R_k$ are each methyl, $x_1 + x_2$ is 10 to 100, $y_1$ is 0 to 2, $y_2$ is 1 to 3, $Z_1$ is -O- or -NH-and $R_4$ is the divalent radical of an aliphatic or cycloaliphatic diisocyanate having from 6 to 10 carbon atoms, and Y is the same as $Y_1$, $R_6$ is hydrogen, $R_8$ is ethylene, and $Z_2$ is -O- or $-NC(CH_3)_3-$.

8. A composition according to claim 7, wherein the polysiloxane has the structure $A_2$, $Z_1$ and $Z_2$ are each -O-, and $Y_2$ is 1 or 2.

9. A composition according to claim 5, wherein the polysiloxane has the structure $A_3$ or $A_4$ wherein $R_4$ is the divalent radical derived from isophorone diisocyanate.

10. A composition according to claim 6, wherein monomer B is a water-insoluble monomer $B_1$ which is an acrylate or methacrylate of formula $CH_2=CR_3COOR_{12}$, an acrylamide or methacrylamide of formula $CH_2=CR_3CONHR_{12}$, a maleate or fumarate of formula $R_{12}OCOCH=CHCOOR_{12}$, an itaconate of formula $R_{12}OCOC(=CH_2)CH_2COOR_{12}$, a vinyl ester of formula $R_{12}COOCH=CH_2$, a vinyl ether of formula $CH_2=CHOR_{12}$, or a mixture of those monomers, wherein $R_3$ is hydrogen or methyl and $R_{12}$ is a linear or branched aliphatic, cycloaliphatic or aromatic group having from 1 to 21 carbon atoms and may comprise ether or thioether linkages or a -CO-, -SO- or $-SO_2-$ group; or $R_{12}$ is a heterocyclic group comprising oxygen, sulfur or nitrogen atoms, or a polypropylene oxide or poly-n-butylene oxide group having from 2 to 50 repeating alkoxy units; or is a perfluorinated alkyl group having from 1 to 12 carbon atoms; or is an alkyl-containing siloxane group having from 1 to 6 silicon atoms.

11. A composition according to claim 10, wherein the water-insoluble monomer $B_1$ is selected from the group consisting of methyl methacrylate, isopropyl methacrylate, isobutyl methacrylate, tert-butyl methacrylate, isobornyl methacrylate, cyclohexyl methacrylate, hexafluoroisopropyl methacrylate and mixtures thereof.

12. A composition according to claim 11, wherein the water-insoluble monomer $B_1$ is selected from the group consisting of methyl methacrylate, cyclohexyl methacrylate, isobornyl methacrylate and mixtures thereof.

13. A composition according to claim 6, wherein component (B) comprises from 1 to 30 %, based on the total weight of monomer, of a diolefinic monomer ($B_x$).

14. A composition according to claim 6, wherein the diolefinic monomer ($B_x$) of component B is the acrylate or methacrylate of allyl alcohol, of a straight or branched-chain alkylene glycol having from 2 to 6 carbon atoms, of poly(ethylene oxide)glycols, of poly(propylene oxide)glycols, of poly(n-butylene oxide)glycols, of thiodiethylene glycol, of neopentylene glycol, of trimethylolpropane, or of pentaerythritol; or the reaction product obtained by reacting 1 mol of a di- or tri-isocyanate of the structure $OCN-R_4(NCO)_v$, wherein $R_4$ is the radical derived from the said isocyanate by removing the NCO group(s) and v is 1 or 2, with 2 or 3 mol of a hydroxyalkyl acrylate or methacrylate.

15. A composition according to claim 6, wherein component B is a mixture of methyl methacrylate and 1 to 25 % by weight, based on the total monomer content, of neopentylene glycol diacrylate, ethylene glycol dimethacrylate or the reaction product of 1 mol of isophorone diisocyanate and 2 mol of 2-hydroxyethyl methacrylate.

16. A composition according to claim 10, wherein the water-insoluble monomer $B_1$ is a mixture of vinyl acetate and dimethyl maleate in a 2/1 to 5/1 molar ratio plus methyl methacrylate, isopropyl methacrylate, isobutyl methacrylate, tert-butyl methacrylate, cyclohexyl methacrylate or hexafluoroisopropyl methacrylate or mixtures thereof.

17. A composition according to claim 10, wherein the water-insoluble monomer $B_1$ is selected from the group consisting of 2-ethylhexyl acrylate, 2-ethylhexyl methacrylate, n-butyl acrylate, n-butyl methacrylate, n-octyl acrylate, n-octyl methacrylate, n-decyl acrylate, n-decyl methacrylate, perfluoroalkyl-($C_6$-$C_{10}$)-substituted alkyl acrylate or methacrylate, and mixtures thereof.

18. A composition according to claim 6, wherein in monomer B the water-soluble monomer $B_2$ is an acrylate or methacrylate of formula $CH_2=CR_3COOR_{13}$, an acrylamide or methacrylamide of formula $CH_2=CR_3CONHR_{14}$ or $CH_2=CR_3CON(R_5)_2$, a maleate or fumarate of formula $R_{13}OCOCH=CHCOOR_{13}$, a vinyl ether of formula $CH_2=CHOR_{13}$, an N-vinyl lactam, or a mixture of those monomers,

wherein $R_3$ is hydrogen or methyl, $R_5$ is hydrogen or $C_1$-$C_4$alkyl, $R_{13}$ is a hydrocarbon radical having from 1 to 10 carbon atoms that is substituted by one or more water-solubilizing groups, such as carboxy, hydroxy or tert-amino, or a polyethylene oxide group having from 2 to 100 repeating units, or

a group which comprises sulfate, phosphate, sulfonate or phosphonate groups, and $R_{14}$ has the meaning given for $R_{13}$ or $R_5$.

**19.** A composition according to claim 18, wherein the water-soluble monomer $B_2$ is selected from the group consisting of 2-hydroxyethyl methacrylate, N,N-dimethylacrylamide, acrylic acid, methacrylic acid and N-vinyl-2-pyrrolidone.

**20.** A composition according to claim 6, wherein component A is a polysiloxane structure wherein $R_1$ is alkylene having 3 or 4 carbon atoms, $R_2$, $R_a$, $R_b$, $R_c$, $R_d$, $R_e$, $R_f$, $R_g$, $R_h$, $R_i$, $R_j$ and $R_k$ are each methyl, $x_1 + x_2$ is 10 to 100, $y_1$ is 0 to 2, $Y_2$ is 1 to 3, $Z_1$ is -O- or -NH- and $R_4$ is the divalent radical of an aliphatic or cycloaliphatic diisocyanate having from 6 to 10 carbon atoms, and Y is the same as $Y_1$, $R_6$ is hydrogen, $R_8$ is ethylene, and $Z_2$ is -O- or $-NC(CH_3)_3-$, and component B comprises from 0 to 30 %, based on the total monomer content, of a diolefinic monomer ($B_x$), which is the acrylate or methacrylate of allyl alcohol, of a straight or branched-chain alkylene glycol having from 2 to 6 carbon atoms, of poly(ethylene oxide)glycols, of poly(propylene oxide)glycols, of poly(n-butylene oxide)glycols, of thiodiethylene glycol, of neopentylene glycol, of trimethylolpropane, or of pentaerythritol; or the reaction product obtained by reacting 1 mol of a di- or tri-isocyanate of the structure $OCN-R_4-(NCO)_v$, wherein $R_4$ is the radical derived from the said isocyanate by removing the NCO group(s) and v is 1 or 2, with 2 or 3 mol of a hydroxyalkyl acrylate or methacrylate.

**21.** A composition according to claim 20, wherein $B_x$ is neopentylene glycol diacrylate, ethylene glycol dimethacrylate or the reaction product of 1 mol of isophorone diisocyanate and 2 mol of 2-hydroxyethyl methacrylate.

**22.** A composition according to claim 20, wherein component B comprises a water-insoluble monomer $B_1$ selected from the group consisting of methyl methacrylate, isopropyl methacrylate, isobutyl methacrylate, tert-butyl methacrylate, isobornyl methacrylate, cyclohexyl methacrylate and hexafluoroisopropyl methacrylate and mixtures thereof.

**23.** A composition according to claim 22, wherein component B comprises a water-insoluble monomer $B_1$ selected from the group consisting of methyl methacrylate, isopropyl methacrylate, isobutyl methacrylate, cyclohexyl methacrylate, isobornyl methacrylate and mixtures thereof.

**24.** A composition according to claim 21, wherein component B comprises as the water-insoluble monomer $B_1$ methyl methacrylate, isobornyl methacrylate or a mixture thereof.

**25.** A composition according to claim 20, wherein component B comprises a water-insoluble monomer $B_1$ which is a mixture of vinyl acetate and dimethyl maleate in a 2/1 to 5/1 molar ratio plus methyl methacrylate, isopropyl methacrylate, isobutyl methacrylate, tert-butyl methacrylate, cyclohexyl methacrylate or hexafluoroisopropyl methacrylate or a mixture thereof.

**26.** A composition according to claim 20, wherein component B comprises a water-insoluble monomer $B_1$ selected from the group consisting of 2-ethylhexyl acrylate, n-butyl acrylate, n-butyl methacrylate, n-octyl acrylate, n-octyl methacrylate, n-decyl acrylate, n-decyl methacrylate, perfluoroalkyl-($C_6$-$C_{10}$)-substituted alkyl acrylate or methacrylate, and mixtures thereof.

**27.** A composition according to claim 20, wherein component B comprises a water-soluble monomer $B_2$ selected from the group consisting of 2-hydroxyethyl methacrylate, N,N-dimethylacrylamide, acrylic acid, methacrylic acid and N-vinyl-2-pyrrolidone.

**28.** A composition according to claim 20, which comprises
(A) from 15 to 40 % by weight of a polysiloxane of the structure $A_2$, wherein $Z_1$ and $Z_2$ are each -O- and $y_2$ is 1 or 2, and
(B) from 85 to 60 % by weight of a mixture of a water-insoluble monomer ($B_1$), of a water-soluble monomer ($B_2$), and of a diolefinic monomer ($B_x$), wherein, based on the percentage by weight of the total weight of monomers,

$B_1$ is from 60 to 95 % of a water-insoluble monomer selected from the group consisting of methyl

methacrylate, isopropyl methacrylate, isobutyl methacrylate, tert-butyl methacrylate, cyclohexyl methacrylate, isobornyl methacrylate and mixtures thereof,

$B_2$ is from 20 to 0 % of a water-soluble monomer selected from the group consisting of 2-hydroxyethyl methacrylate, N,N-dimethylacrylamide, acrylic acid, methacrylic acid, N-vinyl-2-pyrrolidone and mixtures thereof, and

$B_x$ is from 20 to 5 % of a diolefinic monomer selected from the group consisting of neopentylene glycol diacrylate, ethylene glycol dimethacrylate and the reaction product of 1 mol of isophorone diisocyanate and 2 mol of 2-hydroxyethyl methacrylate.

**29.** A composition according to claim 20, which comprises
(A) from 40 to 60 % by weight of a polysiloxane of the structure $A_2$, wherein $Z_1$ and $Z_2$ are each -O- and $y_2$ is 1 or 2, and
(B) from 60 to 40 % by weight of a mixture of a water-insoluble monomer ($B_1$), of a water-soluble monomer ($B_2$), and of a diolefinic monomer ($B_x$), wherein, based on the percentage by weight of the total weight of monomers,

$B_1$ is from 70 to 100 % of a water-insoluble monomer selected from the group consisting of ethyl acrylate or methacrylate, n-butyl acrylate or methacrylate, n-hexyl acrylate or methacrylate, 2-ethylhexyl acrylate or methacrylate, n-octyl acrylate or methacrylate, n-decyl acrylate or methacrylate and mixtures thereof and with mixtures thereof with methyl or isobornyl methacrylate,

$B_2$ is from 25 to 0 % of a water-soluble monomer selected from the group consisting of 2-hydroxyethyl methacrylate, N,N-dimethylacrylamide, acrylic acid, methacrylic acid, N-vinyl-2-pyrrolidone and mixtures thereof, and

$B_x$ is from 5 to 0 % of a diolefinic monomer selected from the group consisting of neopentylene glycol diacrylate, ethylene glycol dimethacrylate and the reaction product of 1 mol of isophorone diisocyanate and 2 mol of 2-hydroxyethyl methacrylate.

**30.** A composition according to claim 20, which comprises
(A) from 20 to 60 % by weight of a polysiloxane of the structure $A_2$ wherein $Z_1$ and $Z_2$ are each -O-, and $y_2$ is 1 or 2, and
(B) from 80 to 40 % by weight of a mixture of a water-insoluble monomer ($B_1$), of a water-soluble monomer ($B_2$), and of a diolefinic monomer ($B_x$), wherein, based on the percentage by weight of the total weight of monomers,

$B_1$ is from 0 to 80 % of a water-insoluble monomer selected from the group consisting of methyl methacrylate, 2-ethylhexyl acrylate, hexafluoroisopropyl methacrylate, perfluoroalkyl-($C_6$-$C_{10}$) acrylate or methacrylate, isopropyl methacrylate, isobutyl methacrylate, tert-butyl methacrylate, cyclohexyl methacrylate, isobornyl methacrylate and mixtures thereof,

$B_2$ is from 100 to 15 % of water-soluble monomer selected from the group consisting of 2-hydroxyethyl methacrylate, N,N-dimethylacrylamide, N-vinyl-2-pyrrolidone acrylamide and mixtures thereof, and

$B_x$ is from 0 to 5 % of a diolefinic monomer selected from the group consisting of neopentylene glycol diacrylate, ethylene glycol dimethacrylate and the reaction product of 1 mol of isophorone diisocyanate and 2 mol of 2-hydroxyethyl methacrylate.

**31.** A hard contact lens prepared from the polymer of the composition according to claim 5.

**32.** A hard contact lens prepared from the polymer of the composition according to claim 28.

**33.** A soft contact lens prepared from the polymer of the composition according to claim 5.

**34.** A soft contact lens prepared from the polymer of the composition according to claim 29.

**35.** A soft hydrogel contact lens prepared from the polymer of the composition according to claim 5.

**36.** A soft hydrogel contact lens prepared from the polymer of the composition according to claim 30.

**37.** A polymer comprising the copolymerization product of the composition according to claim 5.

**38.** A process for the production of a polymer from the composition according to claim 5, comprising the reaction of components (A) and (B) under the action of heat or irradiation.

**Claims for the following Contracting State: AT**

**1.** A process for the preparation of a linear or branched polysiloxane macromer having a molecular weight from about 400 to 100 000, as measured by end group analysis or gel permeation chromatography, the macromer comprising at least one terminal or pendant polymerizable olefinic group, and at least one such polymerizable olefinic group per 5000 molecular weight unit of polysiloxane, the said group being attached to the polysiloxane by way of a urethane, thiourethane or urea linkage, and the said macromer having the structure $A_1$, $A_2$, $A_3$ or $A_4$

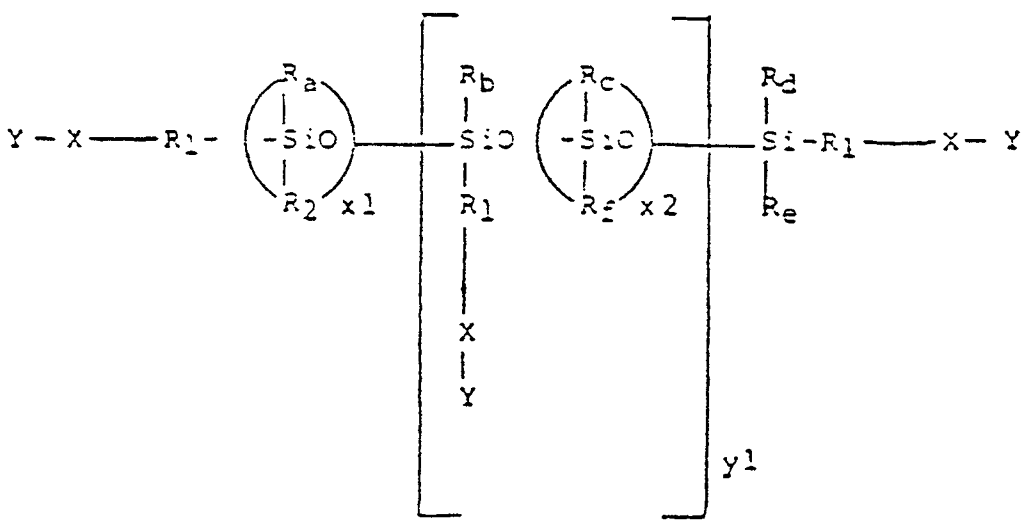

($A_1$)

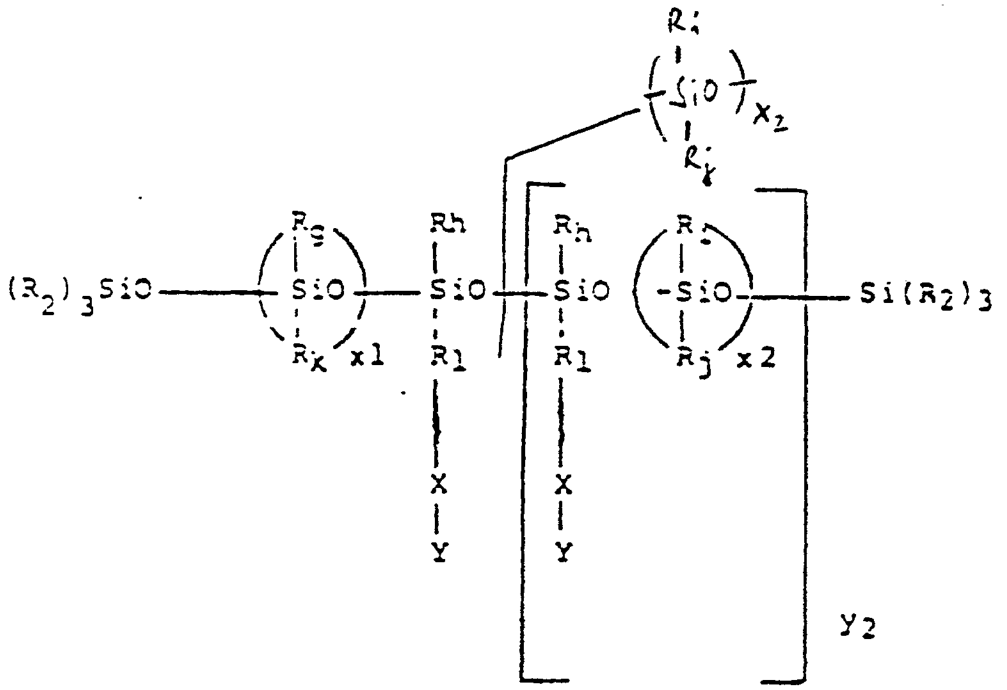

(A₂)

$Y_1$-(T - $R_4$)$_n$-T-$Y_1$ ,    ($A_3$)

or

$Y_1$-($T_1$ - $R_4$)$_n$-$T_1$-$Y_1$ ,    ($A_4$) ,

wherein:

$R_1$ is a linear or branched alkylene group having from 2 to 6 carbon atoms or a polyoxyalkylene group of the structure G or $G_1$

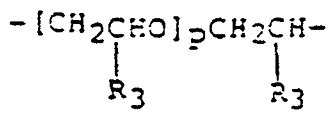

(G)

$-[CH_2CH_2CH_2CH_2O]_pCH_2CH_2CH_2CH_2-$    ($G_1$) ,

wherein $R_3$ is hydrogen or methyl and p is an integer from 1-50, $R_2$, $R_a$, $R_b$, $R_c$, $R_d$, $R_e$, $R_f$, $R_g$, $R_h$, $R_i$, $R_j$ and $R_k$ are independently methyl or phenyl, $x_1$, $x_2$ are integers from 1 to 500 with the proviso that the sum of $x_1 + x_2$ is 7 to 1300, $y_1$ is 0 to 14 and $y_2$ is 1 to 13 with the proviso that the ratio of

$$\frac{x_1 + x_2}{y_1 + 2}$$

or

$$\frac{x_1 + x_2}{y_2 + 1}$$

is not greater than 70,
X is - $Z_1$ - CO - NH -,
$Z_1$ is oxygen, sulfur or $-NR_5-$, wherein $R_5$ is hydrogen or $C_1$-$C_4$alkyl, $Z_1$ is bonded to $R_1$;
$Y_1$ is

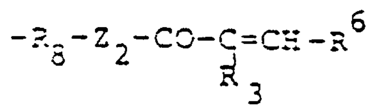

or
$-R_7-O-CH=CH_2$

wherein:
$R_6$ is: hydrogen, methyl, $-COOR_5$ or $-COOR_7OH$,

$Z_2$ = oxygen or $-NR_5-$,

Y is the same as $Y_1$, or Y is H, alkyl having from 1 to 8 carbon atoms, cyclohexyl, phenyl, o-tolyl, m-tolyl or p-tolyl, with the proviso that at least one of the radicals Y must have the same meaning as $Y_1$,

$R_7$ is a linear or branched alkylene having from 2 to 10 carbon atoms, phenylene or phenylalkylene having from 2 to 10 carbon atoms in the alkylene, or polyoxyalkylene of the structure G or $G_1$;

$R_8$ is an alkylene group having from 2 to 6 carbon atoms,

$R_4$ is a divalent radical obtained by removing the NCO groups from an aliphatic, cycloaliphatic, araliphatic or aromatic diisocyanate;

T is the group

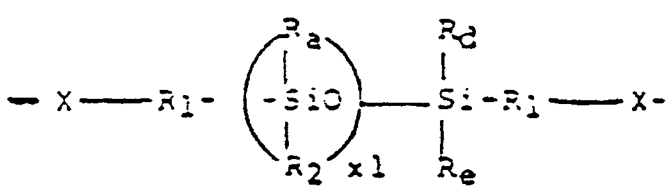

,

$T_1$ is the group

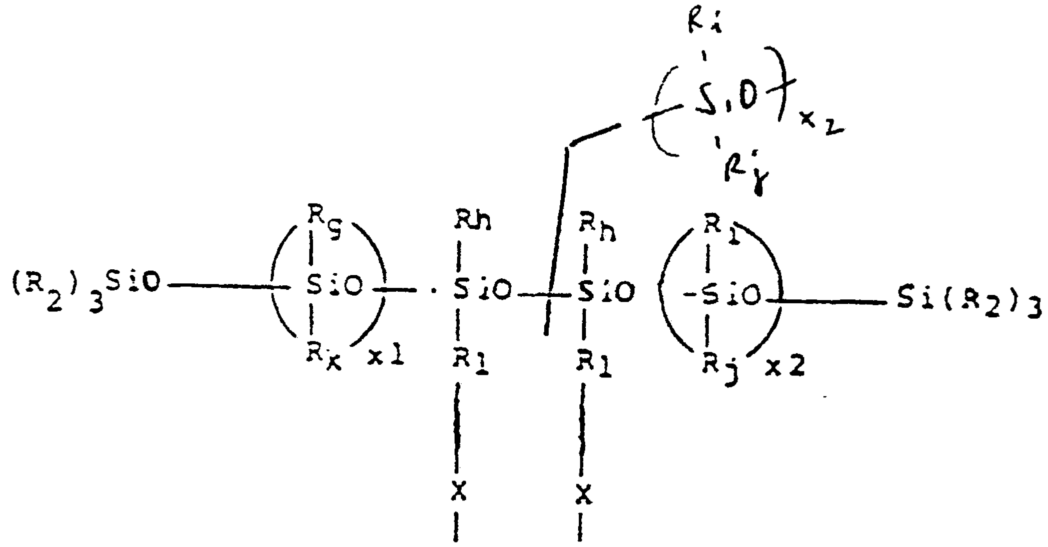

,

and

n is 1 to 10,

which comprises reacting polyfunctional polysiloxanes of the structure $L_1$ or $L_2$

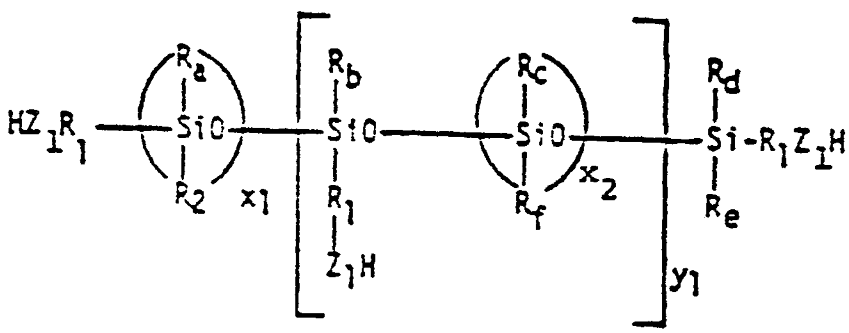

$L_1$

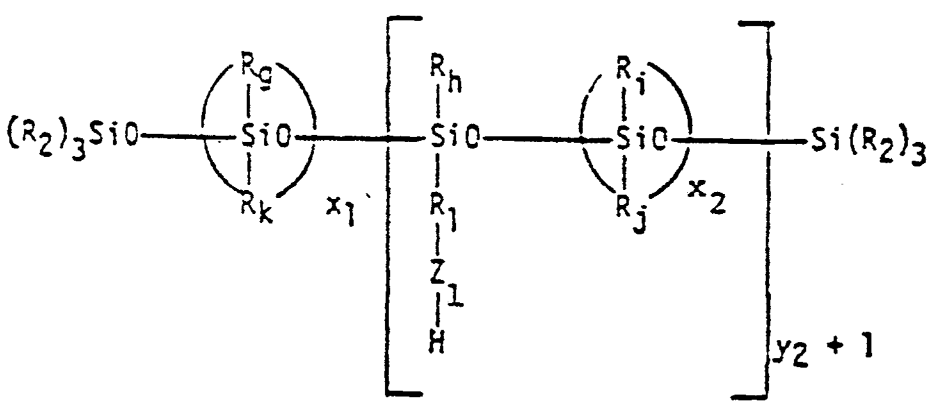

$L_2$

wherein all variables are defined as described hereinbefore, with an isocyanato-substituted vinyl compound.

2. A process according to claim 1, wherein $R_1$ is alkylene having 3 or 4 carbon atoms, $R_2$, $R_a$, $R_b$, $R_c$, $R_d$, $R_e$, $R_f$, $R_g$, $R_h$, $R_i$, $R_j$ and $R_k$ are each methyl, $x_1 + x_2$ is 10 to 100, $y_1$ is 0 to 2, $y_2$ is 1 to 3, $Z_1$ is -O- or -NH- and $R_4$ is a divalent radical of an aliphatic or cycloaliphatic diisocyanate having from 6 to 10 carbon atoms, and Y is the same as $Y_1$, $R_6$ is hydrogen, $R_8$ is ethylene, and $Z_2$ is -O- or $-NC(CH_3)_3-$.

3. A process according to claim 2, wherein the polysiloxane has the structure $A_2$, $Z_1$ and $Z_2$ are each -O-, and $y_2$ is 1 or 2.

4. A process according to claim 1, wherein the polysiloxane has the structure $A_3$ or $A_4$ wherein $R_4$ is the divalent radical derived from isophorone diisocyanate.

5. A process for the preparation of a polymerizable composition comprising
   (A) from 5 to 75 % by weight, based on components (A) and (B), of a polysiloxane macromer according to claim 1,
   and
   (B) from 95 to 25 % by weight of one or more mono-, di- or tri-functional vinyl monomer(s) polymerizable by free radical polymerization,
   which comprises mixing conventionally components (A) and (B) of the composition.

6. A process according to claim 5 for the preparation of a composition comprising
   (A) from 15 to 60 % by weight of the linear or branched polysiloxane macromer, and
   (B) from 85 to 40 % by weight of a mixture of water-soluble and water-insoluble monomers, or of a water-insoluble monomer, the said monomers being monoolefinic, diolefinic or a mixture of monoolefinic and diolefinic monomers, from 0 to 100 % by weight of the total monomer content being water-insoluble ($B_1$), from 100 to 0 % by weight of the total monomer content being water-soluble ($B_2$), and from 50 to 0 % by weight of the total monomer content being replaced by a diolefinic monomer ($B_x$).

7. A process according to claim 5, wherein $R_1$ is alkylene having 3 or 4 carbon atoms, $R_2$, $R_a$, $R_b$, $R_c$, $R_d$, $R_e$, $R_f$, $R_g$, $R_h$, $R_i$, $R_j$ and $R_k$ are each methyl, $x_1 + x_2$ is 10 to 100, $y_1$ is 0 to 2, $y_2$ is 1 to 3, $Z_1$ is -O- or -NH- and $R_4$ is the divalent radical of an aliphatic or cycloaliphatic diisocyanate having from 6 to 10 carbon atoms, and Y is the same as $Y_1$, $R_6$ is hydrogen, $R_8$ is ethylene, and $Z_2$ is -O- or $-NC(CH_3)_3-$.

8. A process according to claim 7, wherein the polysiloxane has the structure $A_2$, $Z_1$ and $Z_2$ are each -O-, and $Y_2$ is 1 or 2.

9. A process according to claim 5, wherein the polysiloxane has the structure $A_3$ or $A_4$ wherein $R_4$ is the divalent radical derived from isophorone diisocyanate.

10. A process according to claim 6, wherein monomer B is a water-insoluble monomer $B_1$ which is an acrylate or methacrylate of formula $CH_2=CR_3COOR_{12}$, an acrylamide or methacrylamide of formula $CH_2=CR_3CONHR_{12}$, a maleate or fumarate of formula $R_{12}OCOCH=CHCOOR_{12}$, an itaconate of formula $R_{12}OCOC(=CH_2)CH_2COOR_{12}$, a vinyl ester of formula $R_{12}COOCH=CH_2$, a vinyl ether of formula $CH_2=CHOR_{12}$, or a mixture of those monomers, wherein $R_3$ is hydrogen or methyl and $R_{12}$ is a linear or branched aliphatic, cycloaliphatic or aromatic group having from 1 to 21 carbon atoms and may comprise ether or thioether linkages or a -CO-, -SO- or $-SO_2-$ group; or $R_{12}$ is a heterocyclic group comprising oxygen, sulfur or nitrogen atoms, or a polypropylene oxide or poly-n-butylene oxide group having from 2 to 50 repeating alkoxy units; or is a perfluorinated alkyl group having from 1 to 12 carbon atoms; or is an alkyl-containing siloxane group having from 1 to 6 silicon atoms.

11. A process according to claim 10, wherein the water-insoluble monomer $B_1$ is selected from the group consisting of methyl methacrylate, isopropyl methacrylate, isobutyl methacrylate, tert-butyl methacrylate, isobornyl methacrylate, cyclohexyl methacrylate, hexafluoroisopropyl methacrylate and mixtures thereof.

12. A process according to claim 11, wherein the water-insoluble monomer $B_1$ is selected from the group consisting of methyl methacrylate, cyclohexyl methacrylate, isobornyl methacrylate and mixtures thereof.

13. A process according to claim 6, wherein component (B) comprises from 1 to 30 %, based on the total weight of monomer, of a diolefinic monomer ($B_x$).

14. A process according to claim 6, wherein the diolefinic monomer ($B_x$) of component B is the acrylate or

methacrylate of allyl alcohol, of a straight or branched-chain alkylene glycol having from 2 to 6 carbon atoms, of poly(ethylene oxide)glycols, of poly(propylene oxide)glycols, of poly(n-butylene oxide)glycols, of thiodiethylene glycol, of neopentylene glycol, of trimethylolpropane, or of pentaerythritol; or the reaction product obtained by reacting 1 mol of a di- or tri-isocyanate of the structure $OCN\text{-}R_4(NCO)_v$, wherein $R_4$ is the radical derived from the said isocyanate by removing the NCO group(s) and v is 1 or 2, with 2 or 3 mol of a hydroxyalkyl acrylate or methacrylate.

**15.** A process according to claim 6, wherein component B is a mixture of methyl methacrylate and 1 to 25 % by weight, based on the total monomer content, of neopentylene glycol diacrylate, ethylene glycol dimethacrylate or the reaction product of 1 mol of isophorone diisocyanate and 2 mol of 2-hydroxyethyl methacrylate.

**16.** A process according to claim 10, wherein the water-insoluble monomer $B_1$ is a mixture of vinyl acetate and dimethyl maleate in a 2/1 to 5/1 molar ratio plus methyl methacrylate, isopropyl methacrylate, isobutyl methacrylate, tert-butyl methacrylate, cyclohexyl methacrylate or hexafluoroisopropyl methacrylate or mixtures thereof.

**17.** A process according to claim 10, wherein the water-insoluble monomer $B_1$ is selected from the group consisting of 2-ethylhexyl acrylate, 2-ethylhexyl methacrylate, n-butyl acrylate, n-butyl methacrylate, n-octyl acrylate, n-octyl methacrylate, n-decyl acrylate, n-decyl methacrylate, perfluoroalkyl-($C_6$-$C_{10}$)-substituted alkyl acrylate or methacrylate, and mixtures thereof.

**18.** A process according to claim 6, wherein in monomer B the water-soluble monomer $B_2$ is an acrylate or methacrylate of formula $CH_2=CR_3COOR_{13}$, an acrylamide or methacrylamide of formula $CH_2=CR_3CONHR_{14}$ or $CH_2=CR_3CON(R_5)_2$, a maleate or fumarate of formula $R_{13}OCOCH=CHCOOR_{13}$, a vinyl ether of formula $CH_2=CHOR_{13}$, an N-vinyl lactam, or a mixture of those monomers,

wherein $R_3$ is hydrogen or methyl, $R_5$ is hydrogen or $C_1$-$C_4$alkyl, $R_{13}$ is a hydrocarbon radical having from 1 to 10 carbon atoms that is substituted by one or more water-solubilizing groups, such as carboxy, hydroxy or tert-amino, or a polyethylene oxide group having from 2 to 100 repeating units, or a group which comprises sulfate, phosphate, sulfonate or phosphonate groups, and $R_{14}$ has the meaning given for $R_{13}$ or $R_5$.

**19.** A process according to claim 18, wherein the water-soluble monomer $B_2$ is selected from the group consisting of 2-hydroxyethyl methacrylate, N,N-dimethylacrylamide, acrylic acid, methacrylic acid and N-vinyl-2-pyrrolidone.

**20.** A process according to claim 6, wherein component A is a polysiloxane structure wherein $R_1$ is alkylene having 3 or 4 carbon atoms, $R_2$, $R_a$, $R_b$, $R_c$, $R_d$, $R_e$, $R_f$, $R_g$, $R_h$, $R_i$, $R_j$ and $R_k$ are each methyl, $x_1 + x_2$ is 10 to 100, $y_1$ is 0 to 2, $Y_2$ is 1 to 3, $Z_1$ is -O- or -NH- and $R_4$ is the divalent radical of an aliphatic or cycloaliphatic diisocyanate having from 6 to 10 carbon atoms, and Y is the same as $Y_1$, $R_6$ is hydrogen, $R_8$ is ethylene, and $Z_2$ is -O- or $-NC(CH_3)_3-$, and component B comprises from 0 to 30 %, based on the total monomer content, of a diolefinic monomer ($B_x$), which is the acrylate or methacrylate of allyl alcohol, of a straight or branched-chain alkylene glycol having from 2 to 6 carbon atoms, of poly(ethylene oxide)glycols, of poly(propylene oxide)glycols, of poly(n-butylene oxide)glycols, of thiodiethylene glycol, of neopentylene glycol, of trimethylolpropane, or of pentaerythritol; or the reaction product obtained by reacting 1 mol of a di- or tri-isocyanate of the structure $OCN\text{-}R_4\text{-}(NCO)_v$, wherein $R_4$ is the radical derived from the said isocyanate by removing the NCO group(s) and v is 1 or 2, with 2 or 3 mol of a hydroxyalkyl acrylate or methacrylate.

**21.** A process according to claim 20, wherein $B_x$ is neopentylene glycol diacrylate, ethylene glycol dimethacrylate or the reaction product of 1 mol of isophorone diisocyanate and 2 mol of 2-hydroxyethyl methacrylate.

**22.** A process according to claim 20, wherein component B comprises a water-insoluble monomer $B_1$ selected from the group consisting of methyl methacrylate, isopropyl methacrylate, isobutyl methacrylate, tert-butyl methacrylate, isobornyl methacrylate, cyclohexyl methacrylate and hexafluoroisopropyl methacrylate and mixtures thereof.

**23.** A process according to claim 22, wherein component B comprises a water-insoluble monomer $B_1$ selected from the group consisting of methyl methacrylate, isopropyl methacrylate, isobutyl methacrylate, cyclohexyl methacrylate, isobornyl methacrylate and mixtures thereof.

**24.** A process according to claim 21, wherein component B comprises as the water-insoluble monomer $B_1$ methyl methacrylate, isobornyl methacrylate or a mixture thereof.

**25.** A process according to claim 20, wherein component B comprises a water-insoluble monomer $B_1$ which is a mixture of vinyl acetate and dimethyl maleate in a 2/1 to 5/1 molar ratio plus methyl methacrylate, isopropyl methacrylate, isobutyl methacrylate, tert-butyl methacrylate, cyclohexyl methacrylate or hexafluoroisopropyl methacrylate or a mixture thereof.

**26.** A process according to claim 20, wherein component B comprises a water-insoluble monomer $B_1$ selected from the group consisting of 2-ethylhexyl acrylate, n-butyl acrylate, n-butyl methacrylate, n-octyl acrylate, n-octyl methacrylate, n-decyl acrylate, n-decyl methacrylate, perfluoroalkyl-($C_6$-$C_{10}$)-substituted alkyl acrylate or methacrylate, and mixtures thereof.

**27.** A process according to claim 20, wherein component B comprises a water-soluble monomer $B_2$ selected from the group consisting of 2-hydroxyethyl methacrylate, N,N-dimethylacrylamide, acrylic acid, methacrylic acid and N-vinyl-2-pyrrolidone.

**28.** A process according to claim 20 for the preparation of a composition which comprises

(A) from 15 to 40 % by weight of a polysiloxane of the structure $A_2$, wherein $Z_1$ and $Z_2$ are each -O- and $y_2$ is 1 or 2, and

(B) from 85 to 60 % by weight of a mixture of a water-insoluble monomer ($B_1$), of a water-soluble monomer ($B_2$), and of a diolefinic monomer ($B_x$), wherein, based on the percentage by weight of the total weight of monomers,

$B_1$ is from 60 to 95 % of a water-insoluble monomer selected from the group consisting of methyl methacrylate, isopropyl methacrylate, isobutyl methacrylate, tert-butyl methacrylate, cyclohexyl methacrylate, isobornyl methacrylate and mixtures thereof,

$B_2$ is from 20 to 0 % of a water-soluble monomer selected from the group consisting of 2-hydroxyethyl methacrylate, N,N-dimethylacrylamide, acrylic acid, methacrylic acid, N-vinyl-2-pyrrolidone and mixtures thereof, and

$B_x$ is from 20 to 5 % of a diolefinic monomer selected from the group consisting of neopentylene glycol diacrylate, ethylene glycol dimethacrylate and the reaction product of 1 mol of isophorone diisocyanate and 2 mol of 2-hydroxyethyl methacrylate.

**29.** A process according to claim 20 for the preparation of a composition which comprises

(A) from 40 to 60 % by weight of a polysiloxane of the structure $A_2$, wherein $Z_1$ and $Z_2$ are each -O- and $y_2$ is 1 or 2, and

(B) from 60 to 40 % by weight of a mixture of a water-insoluble monomer ($B_1$), of a water-soluble monomer ($B_2$), and of a diolefinic monomer ($B_x$), wherein, based on the percentage by weight of the total weight of monomers,

$B_1$ is from 70 to 100 % of a water-insoluble monomer selected from the group consisting of ethyl acrylate or methacrylate, n-butyl acrylate or methacrylate, n-hexyl acrylate or methacrylate, 2-ethylhexyl acrylate or methacrylate, n-octyl acrylate or methacrylate, n-decyl acrylate or methacrylate and mixtures thereof and with mixtures thereof with methyl or isobornyl methacrylate,

$B_2$ is from 25 to 0 % of a water-soluble monomer selected from the group consisting of 2-hydroxyethyl methacrylate, N,N-dimethylacrylamide, acrylic acid, methacrylic acid, N-vinyl-2-pyrrolidone and mixtures thereof, and

$B_x$ is from 5 to 0 % of a diolefinic monomer selected from the group consisting of neopentylene glycol diacrylate, ethylene glycol dimethacrylate and the reaction product of 1 mol of isophorone diisocyanate and 2 mol of 2-hydroxyethyl methacrylate.

**30.** A process according to claim 20 for the preparation of a composition which comprises

(A) from 20 to 60 % by weight of a polysiloxane of the structure $A_2$ wherein $Z_1$ and $Z_2$ are each -O-, and $y_2$ is 1 or 2, and

(B) from 80 to 40 % by weight of a mixture of a water-insoluble monomer ($B_1$), of a water-soluble monomer ($B_2$), and of a diolefinic monomer ($B_x$), wherein, based on the percentage by weight of the total weight of monomers,

$B_1$ is from 0 to 80 % of a water-insoluble monomer selected from the group consisting of methyl methacrylate, 2-ethylhexyl acrylate, hexafluoroisopropyl methacrylate, perfluoroalkyl-($C_6$-$C_{10}$) acrylate or methacrylate, isopropyl methacrylate, isobutyl methacrylate, tert-butyl methacrylate, cyclohexyl methacrylate, isobornyl methacrylate and mixtures thereof,

$B_2$ is from 100 to 15 % of water-soluble monomer selected from the group consisting of 2-hydroxyethyl methacrylate, N,N-dimethylacrylamide, N-vinyl-2-pyrrolidone acrylamide and mixtures thereof, and

$B_x$ is from 0 to 5 % of a diolefinic monomer selected from the group consisting of neopentylene glycol diacrylate, ethylene glycol dimethacrylate and the reaction product of 1 mol of isophorone diisocyanate and 2 mol of 2-hydroxyethyl methacrylate.

**31.** A hard contact lens prepared from the polymer of the composition according to claim 5.

**32.** A hard contact lens prepared from the polymer of the composition according to claim 28.

**33.** A soft contact lens prepared from the polymer of the composition according to claim 5.

**34.** A soft contact lens prepared from the polymer of the composition according to claim 29.

**35.** A soft hydrogel contact lens prepared from the polymer of the composition according to claim 5.

**36.** A soft hydrogel contact lens prepared from the polymer of the composition according to claim 30.

**37.** A process for the preparation of a polymer comprising the copolymerization product of the composition according to claim 5, which comprises the conventional copolymerization of the composition according to claim 5.

**38.** A process according to claim 5, comprising the reaction of components (A) and (B) under the action of heat or irradiation.

**Revendications**
**Revendications pour les Etats contractants suivants: DE, FR, GB, IT, SE**

**1.** Macromère de polysiloxane linéaire ou ramifié ayant une masse moléculaire d'environ 400 à 100000, mesurée par analyse de groupe terminal ou chromatographie par perméation de gel, tandis que le macromère contient au moins un groupe oléfinique polymérisable terminal ou latéral et au moins un groupe oléfinique polymérisable de ce type par unité de masse moléculaire du polysiloxane de 5000, le groupe étant lié au polysiloxane par une liaison uréthane, thiouréthane ou urée, et le macromère ayant la structure $A_1$, $A_2$, $A_3$ ou $A_4$

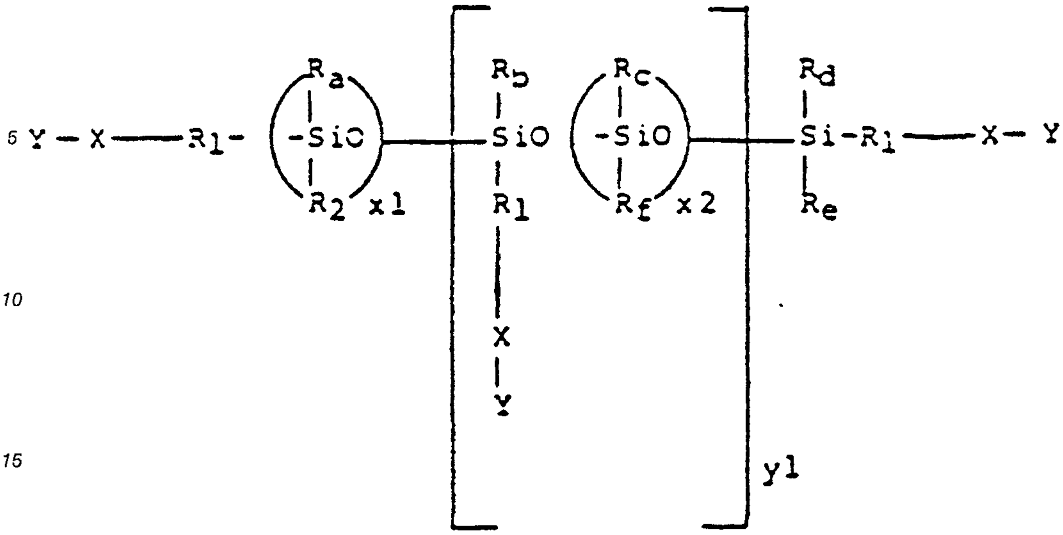

(A1)

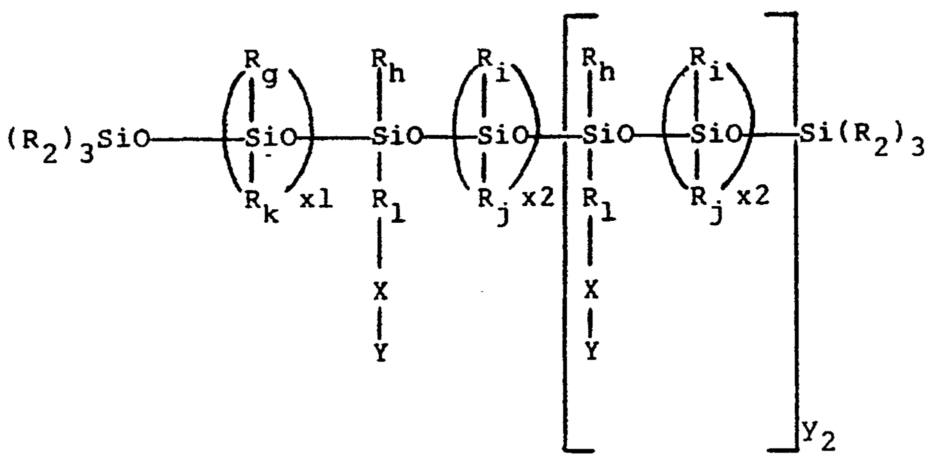

(A2)

$Y_1$-(T-$R_4$)$_n$-T-$Y_1$ ($A_3$)

$Y_1$-($T_1$-$R_4$)n-$T_1$-$Y_1$ ($A_4$)

$R_1$ est un groupe alkylène linéaire ou ramifié ayant 2-6 atomes de carbone ou un groupe polyoxyalkylène de structure G ou $G_1$

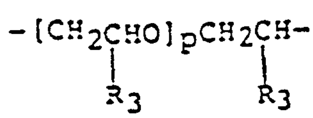

(G)

$-[CH_2CH_2CH_2CH_2O]_pCH_2CH_2CH_2CH_2-$ ($G_1$),

où $R_3$ est l'hydrogène ou un groupe méthyle et p est un entier de 1-50, $R_2$, $R_a$, $R_b$, $R_c$, $R_d$, $R_e$, $R_f$, $R_g$, $R_h$, $R_i$, $R_j$ et $R_k$sont indépendamment l'un de l'autre un groupe méthyle ou phényle, $x_1$, $x_2$ sont des entiers de 1 à 500, à la condition que la somme $x_1$ + $x_2$ soit de 7 à 1300, $y_1$ est 0 à 14 et $y_2$ est 1 à 13, à la condition que le rapport

$$\frac{x_1 + x_2}{y_1 + 2}$$

ou

$$\frac{x_1 + x_2}{y_2 + 1}$$

ne dépasse pas 70,
X est $-Z_1$-CO-NH-
$Z_1$ est l'oxygène, le soufre ou $NR_5$, où $R_5$ est l'hydrogène ou un groupe alkyle en $C_1$-$C_4$, $Z_1$ étant lié à $R_1$; à la condition que $Z_1$ dans les macromères de structure $A_1$ ne soit pas l'oxygène;

$Y_1$ est

$$-R_8-Z_2CO-\underset{R_3}{C}=CH-R_6$$

ou
$-R_7-O-CH=CH_2$,

ou:
$R_6$ est: l'hydrogène, ou un groupe méthyle, $-COOR_5$ ou $-COOR_7OH$,
$Z_2$ est l'oxygène ou $-NR_5-$,
Y est identique à $Y_1$, ou Y est H ou un groupe alkyle ayant de 1 à 8 atomes de carbone, cyclohexyle, phényle, o-tolyle, m-tolyle ou p-tolyle, à la condition qu'au moins un des Y ait la même signification que $Y_1$,
$R_7$ est un groupe alkylène linéaire ou ramifié ayant 2 à 10 atomes de carbone, phénylène ou phénylalkylène ayant 2 à 10 atomes de carbone dans le groupe alkylène, ou polyoxyalkylène de structure G ou $G_1$;
$R_8$ est un groupe alkylène ayant 2 à 6 atomes de carbone,
$R_4$ est un reste bivalent, qui est obtenu par élimination des groupes NCO d'un diisocyanate aliphatique, cycloaliphatique, araliphatique ou aromatique;
T est le groupe

$$-X-R_1-\left(-\underset{R_2}{\overset{R_a}{Si}}O\right)_{x1}-\underset{R_e}{\overset{R_d}{Si}}-R_1-X-$$

$T_1$ est le groupe

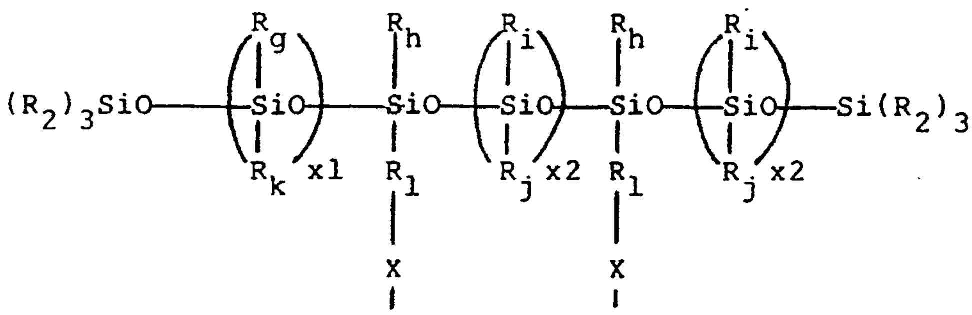

et n vaut de 1 à 10.

2. Macromère de polysiloxane selon la revendication 1, dans lequel $R_1$ est un groupe alkylène ayant 3 ou 4 atomes de carbone, $R_2$,$R_a$,$R_b$,$R_c$,$R_d$,$R_e$,$R_f$,$R_g$,$R_h$,$R_i$,$R_j$ et $R_k$ sont chacun un groupe méthyle, $x_1$ + $x_2$ vaut de 10 à 100, $y_1$ est 0 à 2, $y_2$ est 1 à 3, $Z_1$ est -O- ou -NH- et $R_4$ est un reste bivalent d'un diisocyanate aliphatique ou cycloaliphatique ayant de 6 à 10 atomes de carbone et Y est identique à $Y_1$, $R_6$ est l'hydrogène, $R_8$ est un groupe éthylène et $Z_2$ est -O- ou $-NC(CH_3)_3-$.

3. Macromère de polysiloxane selon la revendication 2, dans lequel le polysiloxane a la structure $A_2$, $Z_1$ et $Z_2$ sont chacun -O- et $y_2$ est 1 ou 2.

4. Macromère de polysiloxane selon la revendication 1, dans lequel le polysiloxane a la structure $A_3$ ou $A_4$, dans laquelle $R_4$ est le reste bivalent provenant du diisocyanate d'isophorone.

5. Composition polymérisable, comprenant
(A) 5 à 75% en poids, par rapport aux composants (A) et (B), d'un macromère de polysiloxane selon la revendication 1, et
(B) 95 à 25% en poids d'un ou plusieurs monomères vinyliques mono-, di- ou trifonctionnels, polymérisables par polymérisation avec des radicaux libres.

6. Composition selon la revendication 5, comprenant
(A) 15 à 60% en poids du macromère de polysiloxane linéaire ou ramifié et
(B) 85 à 40% en poids d'un mélange de monomères hydrosolubles et non hydrosolubles ou d'un monomère non hydrosoluble, les monomères étant monooléfiniques, dioléfiniques ou un mélange de monomères monooléfiniques et dioléfiniques, 0 à 100% en poids de l'ensemble des monomères étant non hydrosolubles, 100 à 0% en poids de l'ensemble des monomères étant hydrosolubles et 50 à 0% en poids de l'ensemble des monomères étant remplacés par un monomère dioléfinique ($B_x$).

7. Composition selon la revendication5, dans laquelle $R_1$ est un groupe alkylène ayant 3 ou 4 atomes de carbone, $R_2$,$R_a$,$R_b$,$R_c$,$R_d$,$R_e$,$R_f$,$R_g$,$R_h$,$R_i$,$R_j$ et $R_k$ sont chacun un groupe méthyle, $x_1$ + $x_2$ vaut de 10 à 100, $y_1$ est 0 à 2, $y_2$ est 1 à 3, $Z_1$ est -O- ou -NH- et $R_4$ est un reste bivalent d'un diisocyanate aliphatique ou cycloaliphatique ayant de 6 à 10 atomes de carbone et Y est identique à $Y_1$, $R_6$ est l'hydrogène, $R_8$ est un groupe éthylène et $Z_2$ est -O- ou $-NC(CH_3)_3-$.

8. Composition selon la revendication 7, dans laquelle le polysiloxane a la structure $A_2$, $Z_1$ et $Z_2$ sont chacun -O- et $y_2$est 1 ou 2.

9. Composition selon la revendication 5, dans laquelle le polysiloxane a la structure $A_3$ ou $A_4$, dans laquelle $R_4$ est le reste bivalent provenant du diisocyanate d'isophorone.

10. Composition selon la revendication 6, dans laquelle le monomère B est un monomère non hydrosoluble $B_1$, qui est un acrylate ou méthacrylate de formule $CH_2=CR_3COOR_{12}$, un acrylamide ou méthacrylamide de formule $CH_2=CR_3CONHR_{12}$, un maléate ou un fumarate de formule $R_{12}OCOCH=CHCOOR_{12}$, un itaconate de formule $R_{12}OCOC(=CH_2)CH_2COOR_{12}$, un ester vinylique de formule $R_{12}COOCH=CH_2$, un éther vinylique de formule $CH_2=CHOR_{12}$ ou un mélange de ces

monomères, où $R_3$ est l'hydrogène ou un groupe méthyle et $R_{12}$ est un groupe linéaire ou ramifié aliphatique, un groupe cycloaliphatique ou un groupe aromatique, ayant de 1 à 21 atomes de carbone, et peut comporter des liaisons éther ou thioéther ou un groupe -CO-, -SO- ou $-SO_2-$, ou dans lesquelles $R_{12}$ est un groupe hétérocyclique contenant des atomes d'oxygène, de soufre ou d'azote, un groupe poly(oxypropylène) ou poly(n-oxybutylène) ayant 2 à 50 motifs alcoxy récurrents, un groupe alkyle perfluoré ayant 1-12 atomes de carbone ou un groupe siloxane contenant de l'alkyle et ayant 1 à 6 atomes de Si.

**11.** Composition selon la revendication 10, dans laquelle le monomère non hydrosoluble $B_1$ est choisi parmi le méthacrylate de méthyle, le méthacrylate d'isopropyle, le méthacrylate d'isobutyle, le méthacrylate de tert-butyle, le méthacrylate d'isobornyle, le méthacrylate de cyclohexyle, le méthacrylate d'hexafluoroisopropyle et leurs mélanges.

**12.** Composition selon la revendication 11, dans laquelle le monomère non hydrosoluble $B_1$ est choisi parmi le méthacrylate de méthyle, le méthacrylate de cyclohexyle, le méthacrylate d'isobornyle et leurs mélanges.

**13.** Composition selon la revendication 6, dans laquelle le composant (B) contient 1 à 30%, sur la base du poids d'ensemble des monomères, d'un monomère dioléfinique ($B_x$).

**14.** Composition selon la revendication 6, dans laquelle le monomère dioléfinique ($B_x$) du composant B est l'acrylate ou méthacrylate d'alcool allylique, d'un alkylèneglycol linéaire ou ramifié ayant 2 à 6 atomes de carbone, de poly-(oxyéthylène)-glycols, de poly-(oxypropylène)-glycols, de poly-(n-oxybutylène)-glycols, de thiodiéthylèneglycol, de néopentylèneglycol, de triméthylolpropane ou de pentaérythrite; ou est le produit de réaction, obtenu par réaction de 1 mol d'un di- ou triisocyanate de structure $OCN-R_4-(NCO)_v$ avec 2 ou 3 mol d'un acrylate ou méthacrylate d'hydroxyalkyle, tandis que $R_4$ est le reste provenant de cet isocyanate après élimination du(des) groupe(s) NCO et v est 1 ou 2.

**15.** Composition selon la revendication 6, dans laquelle le composant B est un mélange de méthacrylate de méthyle et 1 à 25% en poids, par rapport à l'ensemble des monomères, de diacrylate de néopentylèneglycol, de diméthacrylate d'éthylèneglycol ou du produit de réaction de 1 mol de diisocyanate d'isophorone et 2 mol de méthacrylate de 2-hydroxyéthyle.

**16.** Composition selon la revendication 10, dans laquelle le monomère non hydrosoluble $B_1$ est un mélange d'acétate de vinyle et de maléate de diméthyle dans un rapport molaire de 2/1 à 5/1 plus du méthacrylate de méthyle, du méthacrylate d'isopropyle, du méthacrylate d'isobutyle, du méthacrylate de tert-butyle, du méthacrylate de cyclohexyle ou du méthacrylate d'hexafluoroisopropyle ou leurs mélanges.

**17.** Composition selon la revendication 10, dans laquelle le monomère non hydrosoluble $B_1$ est choisi parmi l'acrylate de 2-éthylhexyle, le méthacrylate de 2-éthylhexyle, l'acrylate de n-butyle, le méthacrylate de n-butyle, l'acrylate de n-octyle, le méthacrylate de n-octyle, l'acrylate de n-décyle, le méthacrylate de n-décyle, l'acrylate ou le méthacrylate de perfluoroalkylalkyle en $C_6$-$C_{10}$ substitué et leurs mélanges.

**18.** Composition selon la revendication 6, dans laquelle dans le monomère B le monomère hydrosoluble $B_2$ est un acrylate ou méthacrylate de formule $CH_2=CR_3COOR_{13}$, un acrylamide ou méthacrylamide de formule $CH_2=CR_3CONHR_{14}$ ou $CH_2=CR_3CON(R_5)_2$, un maléate ou fumarate de formule $R_{13}OCOCH=CHCOOR_{13}$, un éther vinylique de formule $CH_2=CHOR_{13}$, un lactame N-vinylique ou un mélange de ces monomères, où $R_3$ est l'hydrogène ou un groupe méthyle, $R_5$ est l'hydrogène ou un groupe alkyle en $C_1$-$C_4$, $R_{13}$ est un reste hydrocarboné ayant 1 à 10 atomes de carbone, substitué par un ou plusieurs groupes hydrosolubilisants, tels que carboxy, hydroxy ou tert-amino, ou un groupe poly(oxyéthylène) avec 2-100 unités récurrentes ou un groupe contenant des groupements sulfate, phosphate, sulfonate ou phosphonate, et $R_{14}$ a la signification indiquée pour $R_{13}$ ou $R_5$.

**19.** Composition selon la revendication 18, dans laquelle le monomère hydrosoluble $B_2$ est choisi parmi le méthacrylate de 2-hydroxyéthyle, le N,N-diméthylacrylamide, l'acide acrylique, l'acide méthacrylique et la N-vinyl-2-pyrrolidone.

**20.** Composition selon la revendication 6, dans laquelle le composant A est une structure polysiloxanique dans laquelle $R_1$ est un groupe alkylène ayant 3 ou 4 atomes de carbone, $R_2,R_a,R_b,R_c,R_d,R_e,R_f,R_g,R_h,R_i,R_j$ et $R_k$ sont chacun un groupe méthyle, $x_1 + x_2$ vaut de 10 à 100, $y_1$ est 0 à 2, $y_2$ est 1 à 3, $Z_1$ est -O- ou -NH- et $R_4$ est le reste bivalent d'un diisocyanate aliphatique ou cycloaliphatique ayant 6 à 10 atomes de carbone et Y est identique à $Y_1$, $R_6$ est l'hydrogène, $R_8$ est un groupe éthylène et $Z_2$ est -O- ou $-NC(CH_3)_3-$ et le composant B contient 0 à 30%, sur la base de l'ensemble des monomères, d'un monomère dioléfinique ($B_x$), qui est l'acrylate ou méthacrylate d'alcool allylique, d'un alkylèneglycol linéaire ou ramifié ayant 2 à 6 atomes de carbone, de poly-(oxyéthylène)-glycols, de poly-(oxypropylène)-glycols, de poly-(n-oxybutylène)-glycols, de thiodiéthylèneglycol, de néopentylèneglycol, de triméthylolpropane ou de pentaérythrite; ou est le produit de réaction, obtenu par réaction de 1 mol d'un di- ou triisocyanate de structure $OCN-R_4-(NCO)_v$ avec 2 ou 3 mol d'un acrylate ou méthacrylate d'hydroxyalkyle, tandis que $R_4$ est le reste provenant de cet isocyanate après élimination du(des) groupe(s) NCO et v est 1 ou 2.

**21.** Composition selon la revendication 20, dans laquelle $B_x$ est le diacrylate de néopentylèneglycol, le diméthacrylate d'éthylèneglycol ou le produit de réaction de 1 mol de diisocyanate d'isophorone et 2 mol de méthacrylate de 2-hydroxyéthyle.

**22.** Composition selon la revendication 20, dans laquelle le composant B contient le monomère non hydrosoluble $B_1$, choisi parmi le méthacrylate de méthyle, le méthacrylate d'isopropyle, le méthacrylate d'isobutyle, le méthacrylate de tert-butyle, le méthacrylate d'isobornyle, le méthacrylate de cyclohexyle, le méthacrylate d'hexafluoroisopropyle et leurs mélanges.

**23.** Composition selon la revendication 22, dans laquelle le composant B contient le monomère non hydrosoluble $B_1$, choisi parmi le méthacrylate de méthyle, le méthacrylate d'isopropyle, le méthacrylate d'isobutyle, le méthacrylate de cyclohexyle, le méthacrylate d'isobornyle et leurs mélanges.

**24.** Composition selon la revendication 21, dans laquelle le composant B contient en tant que monomère non hydrosoluble $B_1$ le méthacrylate de méthyle, le méthacrylate d'isobornyle ou leurs mélanges.

**25.** Composition selon la revendication 20, dans laquelle le composant B contient le monomère non hydrosoluble $B_1$, qui est un mélange d'acétate de vinyle et de maléate de diméthyle dans un rapport molaire de 2/1 à 5/1 plus du méthacrylate de méthyle, du méthacrylate d'isopropyle, du méthacrylate d'isobutyle, du méthacrylate de tert-butyle, du méthacrylate de cyclohexyle ou du méthacrylate d'hexafluoroisopropyle et leurs mélanges.

**26.** Composition selon la revendication 20, dans laquelle le composant B contient le monomère non hydrosoluble $B_1$, choisi parmi l'acrylate de 2-éthylhexyle, l'acrylate de n-butyle, le méthacrylate de n-butyle, l'acrylate de n-octyle, le méthacrylate de n-octyle, l'acrylate de n-décyle, le méthacrylate de n-décyle, l'acrylate ou le méthacrylate de perfluoroalkyl-alkyle en $C_6-C_{10}$ substitué et leurs mélanges.

**27.** Composition selon la revendication 20, dans laquelle le composant B contient le monomère hydrosoluble $B_2$, choisi parmi le méthacrylate de 2-hydroxyéthyle, le N,N-diméthylacrylamide, l'acide acrylique, l'acide méthacrylique et la N-vinyl-2-pyrrolidone.

**28.** Composition selon la revendication 20, comprenant

(A) 15 à 40% en poids d'un polysiloxane de structure $A_2$, où $Z_1$ et $Z_2$ sont chacun -O- et $y_2$ est 1 ou 2, et

(B) 85 à 60% en poids d'un mélange d'un monomère non hydrosoluble ($B_1$), d'un monomère hydrosoluble ($B_2$) et d'un monomère dioléfinique ($B_x$), où, sur la base du pourcentage en poids du poids de l'ensemble des monomères,

$B_1$ est 60 à 95% d'un monomère non hydrosoluble, choisi parmi le méthacrylate de méthyle, le méthacrylate d'isopropyle, le méthacrylate d'isobutyle, le méthacrylate de tert-butyle, le méthacrylate de cyclohexyle, le méthacrylate d'isobornyle et leurs mélanges,

$B_2$ est 20 à 0% d'un monomère hydrosoluble, choisi parmi le méthacrylate de 2-hydroxyéthyle, le N,N-diméthylacrylamide, l'acide acrylique, l'acide méthacrylique, la N-vinyl-2-pyrrolidone et leurs mélanges, et

$B_x$ est 20 à 5% d'un monomère dioléfinique, choisi parmi le diacrylate de néopentylèneglycol, le

diméthacrylate d' éthylèneglycol et le produit de réaction de 1 mol de diisocyanate d'isophorone et 2 mol de méthacrylate de 2-hydroxyéthyle.

**29.** Composition selon la revendication 20, comprenant

(A) 40 à 60% en poids d'un polysiloxane de structure $A_2$, où $Z_1$ et $Z_2$ sont chacun -O- et $y_2$ est 1 ou 2, et

(B) 60 à 40% en poids d'un mélange d'un monomère non hydrosoluble ($B_1$), d'un monomère hydrosoluble ($B_2$) et d'un monomère dioléfinique ($B_x$), où, sur la base du pourcentage en poids du poids de l'ensemble des monomères,

$B_1$ est 70 à 100% d'un monomère non hydrosoluble, choisi parmi l'acrylate ou le méthacrylate d'éthyle, l'acrylate ou le méthacrylate de n-butyle, l'acrylate ou le méthacrylate de n-hexyle, l'acrylate ou le méthacrylate de 2-éthylhexyle, l'acrylate ou le méthacrylate de n-octyle, l'acrylate ou le méthacrylate de n-décyle et leurs mélanges, et des mélanges de ceux-ci avec du méthacrylate de méthyle ou d'isobornyle,

$B_2$ est 25 à 0% d'un monomère hydrosoluble, choisi parmi le méthacrylate de 2-hydroxyéthyle, le N,N-diméthylacrylamide, l'acide acrylique, l'acide méthacrylique, la N-vinyl-2-pyrrolidone et leurs mélanges, et

$B_x$ est 5 à 0% d'un monomère dioléfinique, choisi parmi le diacrylate de néopentylèneglycol, le diméthacrylate d'éthylèneglycol et le produit de réaction de 1 mol de diisocyanate d'isophorone et 2 mol de méthacrylate de 2-hydroxyéthyle.

**30.** Composition selon la revendication 20, comprenant

(A) 20 à 60% en poids d'un polysiloxane de structure $A_2$, où $Z_1$ et $Z_2$ sont chacun -O- et $y_2$ est 1 ou 2, et

(B) 80 à 40% en poids d'un mélange d'un monomère non hydrosoluble ($B_1$), d'un monomère hydrosoluble ($B_2$) et d'un monomère dioléfinique ($B_x$), où, sur la base du pourcentage en poids du poids de l'ensemble des monomères,

$B_1$ est 0 à 80% d'un monomère non hydrosoluble, choisi parmi le méthacrylate de méthyle, l'acrylate de 2-éthylhexyle, le méthacrylate d'hexafluoroisopropyle, l'acrylate ou le méthacrylate de perfluoroalkyl-alkyle en $C_6$-$C_{10}$ substitué, le méthacrylate d'isopropyle, le méthacrylate d'isobutyle, le méthacrylate de tert-butyle, le méthacrylate de cyclohexyle, le méthacrylate d'isobornyle et leurs mélanges,

$B_2$ est 100 à 15% d'un monomère hydrosoluble, choisi parmi le méthacrylate de 2-hydroxyéthyle, le N,N-diméthylacrylamide, l'acrylamide de N-vinyl-2-pyrrolidone et leurs mélanges, et

$B_x$ est 0 à 5% d'un monomère dioléfinique, choisi parmi le diacrylate de néopentylèneglycol, le diméthacrylate d'éthylèneglycol et le produit de réaction de 1 mol de diisocyanate d'isophorone et 2 mol de méthacrylate de 2-hydroxyéthyle.

**31.** Lentille de contact dure, réalisée à partir du polymère de composition selon la revendication 5.

**32.** Lentille de contact dure, réalisée à partir du polymère de composition selon la revendication 28.

**33.** Lentille de contact souple, réalisée à partir du polymère de composition selon la revendication 5.

**34.** Lentille de contact souple, réalisée à partir du polymère de composition selon la revendication 29.

**35.** Lentille de contact souple en hydrogel, réalisée à partir du polymère de composition selon la revendication 5.

**36.** Lentille de contact souple en hydrogel, réalisée à partir du polymère de composition selon la revendication 30.

**37.** Polymère, comprenant le produit de copolymérisation de composition selon la revendication 5.

**38.** Procédé pour la préparation d'un polymère à partir de la composition selon la revendication 5, comprenant la réaction des composants (A) et (B), sous l'action de la chaleur ou d'une irradiation.

**Revendications pour les Etats contractants suivants: BE, CH, LI, LU, NL**

1. Macromère de polysiloxane linéaire ou ramifié ayant une masse moléculaire d'environ 400 à 100000, mesurée par analyse de groupe terminal ou chromatographie par perméation de gel, tandis que le macromère contient au moins un groupe oléfinique polymérisable terminal ou latéral et au moins un groupe oléfinique polymérisable de ce type par unité de masse moléculaire du polysiloxane de 5000, le groupe étant lié au polysiloxane par une liaison uréthane, thiouréthane ou urée, et le macromère ayant la structure $A_1$, $A_2$, $A_3$ ou $A_4$

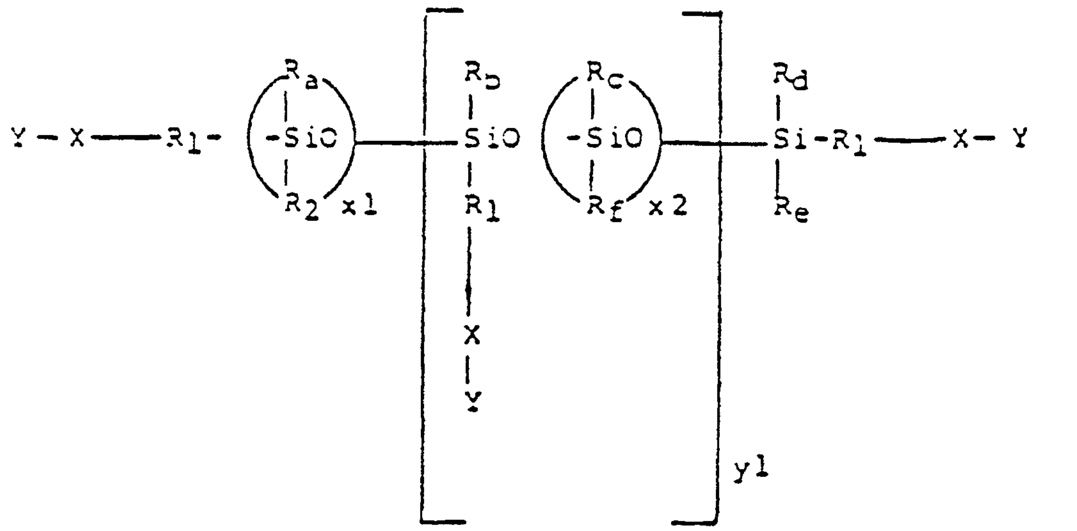

($A_1$)

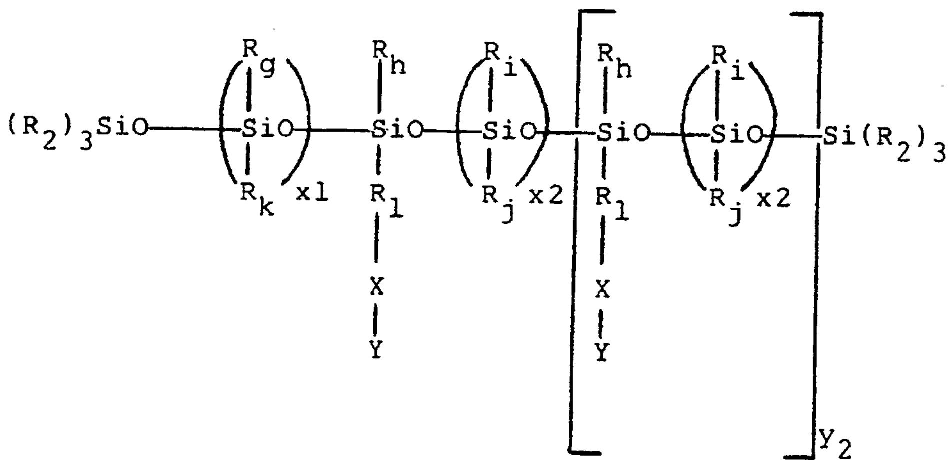

($A_2$)

$Y_1\text{-}(T\text{-}R_4)_n\text{-}T\text{-}Y_1$ ($A_3$)

$Y_1\text{-}(T_1\text{-}R_4)_n\text{-}T_1\text{-}Y_1$ ($A_4$)

où:

$R_1$ est un groupe alkylène linéaire ou ramifié ayant 2-6 atomes de carbone ou un groupe polyoxyalkylène de structure G ou $G_1$

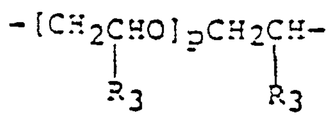

(G)

$-[CH_2CH_2CH_2CH_2O]_pCH_2CH_2CH_2CH_2-$ ($G_1$) ,

où $R_3$ est l'hydrogène ou un groupe méthyle et p est un entier de 1-50, $R_2$, $R_a$, $R_b$, $R_c$, $R_d$, $R_e$, $R_f$, $R_g$, $R_h$, $R_i$, $R_j$ et $R_k$sont indépendamment l'un de l'autre un groupe méthyle ou phényle, $x_1$, $x_2$ sont des entiers de 1 à 500, à la condition que la somme $x_1 + x_2$ soit de 7 à 1300, $y_1$ est 0 à 14 et $y_2$ est 1 à 13, à la condition que le rapport

$$\frac{x_1 + x_2}{y_1 + 2}$$

ou

$$\frac{x_1 + x_2}{y_2 + 1}$$

ne dépasse pas 70,
X est $-Z_1-CO-NH-$
$Z_1$ est l'oxygène, le soufre ou $NR_5$, où $R_5$ est l'hydrogène ou un groupe alkyle en $C_1$-$C_4$, $Z_1$ étant lié à $R_1$;

$Y_1$ est

$$-R_8-Z_2CO-\underset{R_3}{\underset{|}{C}}=CH-R_6$$

ou
$-R_7-O-CH=CH_2$,

où:
$R_6$ est: l'hydrogène, ou un groupe méthyle, $-COOR_5$ ou $-COOR_7OH$,
$Z_2$ est l'oxygène ou $-NR_5-$,
Y est identique à $Y_1$, ou Y est H ou un groupe alkyle ayant de 1 à 8 atomes de carbone, cyclohexyle, phényle, o-tolyle, m-tolyle ou p-tolyle, à la condition qu'au moins un des Y ait la même signification que $Y_1$,
$R_7$ est un groupe alkylène linéaire ou ramifié ayant 2 à 10 atomes de carbone, phénylène ou phénylalkylène ayant 2 à 10 atomes de carbone dans le groupe alkylène, ou polyoxyalkylène de structure G ou $G_1$;
$R_8$ est un groupe alkylène ayant 2 à 6 atomes de carbone,
$R_4$ est un reste bivalent, qui est obtenu par élimination des groupes NCO d'un diisocyanate aliphatique, cycloaliphatique, araliphatique ou aromatique;
T est le groupe

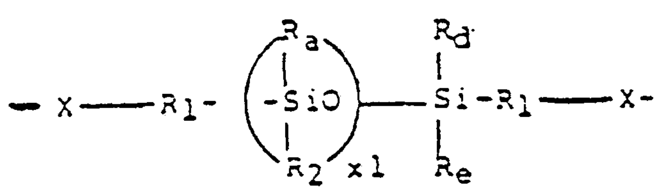

$T_1$ est le groupe

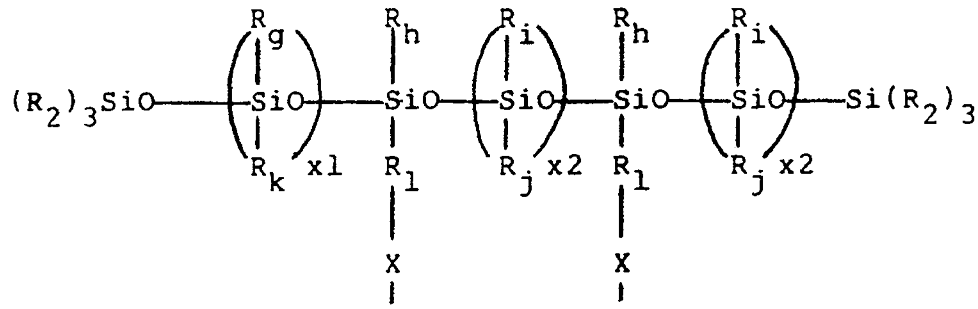

et n vaut de 1 à 10.

2. Macromère de polysiloxane selon la revendication 1, dans lequel $R_1$ est un groupe alkylène ayant 3 ou 4 atomes de carbone, $R_2$,$R_a$,$R_b$,$R_c$,$R_d$,$R_e$,$R_f$,$R_g$,$R_h$,$R_i$,$R_j$ et $R_k$ sont chacun un groupe méthyle, $x_1 + x_2$ vaut de 10 à 100, $y_1$ est 0 à 2, $y_2$ est 1 à 3, $Z_1$ est -O- ou -NH- et $R_4$ est un reste bivalent d'un diisocyanate aliphatique ou cycloaliphatique ayant de 6 à 10 atomes de carbone et Y est identique à $Y_1$, $R_6$ est l'hydrogène, $R_8$ est un groupe éthylène et $Z_2$ est -O- ou $-NC(CH_3)_3-$.

3. Macromère de polysiloxane selon la revendication 2, dans lequel le polysiloxane a la structure $A_2$, $Z_1$ et $Z_2$ sont chacun -O- et $y_2$ est 1 ou 2.

4. Macromère de polysiloxane selon la revendication 1, dans lequel le polysiloxane a la structure $A_3$ ou $A_4$, dans laquelle $R_4$ est le reste bivalent provenant du diisocyanate d'isophorone.

5. Composition polymérisable, comprenant
(A) 5 à 75% en poids, par rapport aux composants (A) et (B), d'un macromère de polysiloxane selon la revendication 1, et
(B) 95 à 25% en poids d'un ou plusieurs monomères vinyliques mono-, di- ou trifonctionnels, polymérisables par polymérisation avec des radicaux libres.

6. Composition selon la revendication 5, comprenant
(A) 15 à 60% en poids du macromère de polysiloxane linéaire ou ramifié et
(B) 85 à 40% en poids d'un mélange de monomères hydrosolubles et non hydrosolubles ou d'un monomère non hydrosoluble, les monomères étant monooléfiniques, dioléfiniques ou un mélange de monomères monooléfiniques et dioléfiniques, 0 à 100% en poids de l'ensemble des monomères étant non hydrosolubles, 100 à 0% en poids de l'ensemble des monomères étant hydrosolubles et 50 à 0% en poids de l'ensemble des monomères étant remplacés par un monomère dioléfinique ($B_x$).

7. Composition selon la revendication5, dans laquelle $R_1$ est un groupe alkylène ayant 3 ou 4 atomes de carbone, $R_2$,$R_a$,$R_b$,$R_c$,$R_d$,$R_e$,$R_f$,$R_g$,$R_h$,$R_i$,$R_j$ et $R_k$ sont chacun un groupe méthyle, $x_1 + x_2$ vaut de 10 à 100, $y_1$ est 0 à 2, $y_2$ est 1 à 3, $Z_1$ est -O- ou -NH- et $R_4$ est un reste bivalent d'un diisocyanate aliphatique ou cycloaliphatique ayant de 6 à 10 atomes de carbone et Y est identique à $Y_1$, $R_6$ est l'hydrogène, $R_8$ est un groupe éthylène et $Z_2$ est -O- ou $-NC(CH_3)_3-$.

8. Composition selon la revendication 7, dans laquelle le polysiloxane a la structure $A_2$, $Z_1$ et $Z_2$ sont chacun -O- et $y_2$est 1 ou 2.

9. Composition selon la revendication 5, dans laquelle le polysiloxane a la structure $A_3$ ou $A_4$, dans laquelle $R_4$ est le reste bivalent provenant du diisocyanate d'isophorone.

10. Composition selon la revendication 6, dans laquelle le monomère B est un monomère non hydrosoluble $B_1$, qui est un acrylate ou méthacrylate de formule $CH_2=CR_3COOR_{12}$, un acrylamide ou méthacrylamide de formule $CH_2=CR_3CONHR_{12}$, un maléate ou un fumarate de formule $R_{12}OCOCH=CHCOOR_{12}$, un itaconate de formule $R_{12}OCOC(=CH_2)CH_2COOR_{12}$, un ester vinylique de formule $R_{12}COOCH=CH_2$, un éther vinylique de formule $CH_2=CHOR_{12}$ ou un mélange de ces

monomères, où $R_3$ est l'hydrogène ou un groupe méthyle et $R_{12}$ est un groupe linéaire ou ramifié aliphatique, un groupe cycloaliphatique ou un groupe aromatique, ayant de 1 à 21 atomes de carbone, et peut comporter des liaisons éther ou thioéther ou un groupe -CO-, -SO- ou $-SO_2-$, ou dans lesquelles $R_{12}$ est un groupe hétérocyclique contenant des atomes d'oxygène, de soufre ou d'azote, un groupe poly(oxypropylène) ou poly(n-oxybutylène) ayant 2 à 50 motifs alcoxy récurrents, un groupe alkyle perfluoré ayant 1-12 atomes de carbone ou un groupe siloxane contenant de l'alkyle et ayant 1 à 6 atomes de Si.

**11.** Composition selon la revendication 10, dans laquelle le monomère non hydrosoluble $B_1$ est choisi parmi le méthacrylate de méthyle, le méthacrylate d'isopropyle, le méthacrylate d'isobutyle, le méthacrylate de tert-butyle, le méthacrylate d'isobornyle, le méthacrylate de cyclohexyle, le méthacrylate d'hexafluoroisopropyle et leurs mélanges.

**12.** Composition selon la revendication 11, dans laquelle le monomère non hydrosoluble $B_1$ est choisi parmi le méthacrylate de méthyle, le méthacrylate de cyclohexyle, le méthacrylate d'isobornyle et leurs mélanges.

**13.** Composition selon la revendication 6, dans laquelle le composant (B) contient 1 à 30%, sur la base du poids d'ensemble des monomères, d'un monomère dioléfinique ($B_x$).

**14.** Composition selon la revendication 6, dans laquelle le monomère dioléfinique ($B_x$) du composant B est l'acrylate ou méthacrylate d'alcool allylique, d'un alkylèneglycol linéaire ou ramifié ayant 2 à 6 atomes de carbone, de poly-(oxyéthylène)-glycols, de poly-(oxypropylène)-glycols, de poly-(n-oxybutylène)-glycols, de thiodiéthylèneglycol, de néopentylèneglycol, de triméthylolpropane ou de pentaérythrite; ou est le produit de réaction, obtenu par réaction de 1 mol d'un di- ou triisocyanate de structure $OCN-R_4-(NCO)_v$ avec 2 ou 3 mol d'un acrylate ou méthacrylate d'hydroxyalkyle, tandis que $R_4$ est le reste provenant de cet isocyanate après élimination du(des) groupe(s) NCO et v est 1 ou 2.

**15.** Composition selon la revendication 6, dans laquelle le composant B est un mélange de méthacrylate de méthyle et 1 à 25% en poids, par rapport à l'ensemble des monomères, de diacrylate de néopentylèneglycol, de diméthacrylate d'éthylèneglycol ou du produit de réaction de 1 mol de diisocyanate d'isophorone et 2 mol de méthacrylate de 2-hydroxyéthyle.

**16.** Composition selon la revendication 10, dans laquelle le monomère non hydrosoluble $B_1$ est un mélange d'acétate de vinyle et de maléate de diméthyle dans un rapport molaire de 2/1 à 5/1 plus du méthacrylate de méthyle, du méthacrylate d'isopropyle, du méthacrylate d'isobutyle, du méthacrylate de tert-butyle, du méthacrylate de cyclohexyle ou du méthacrylate d'hexafluoroisopropyle ou leurs mélanges.

**17.** Composition selon la revendication 10, dans laquelle le monomère non hydrosoluble $B_1$ est choisi parmi l'acrylate de 2-éthylhexyle, le méthacrylate de 2-éthylhexyle, l'acrylate de n-butyle, le méthacrylate de n-butyle, l'acrylate de n-octyle, le méthacrylate de n-octyle, l'acrylate de n-décyle, le méthacrylate de n-décyle, l'acrylate ou le méthacrylate de perfluoroalkylalkyle en $C_6$-$C_{10}$ substitué et leurs mélanges.

**18.** Composition selon la revendication 6, dans laquelle dans le monomère B le monomère hydrosoluble $B_2$ est un acrylate ou méthacrylate de formule $CH_2=CR_3COOR_{13}$, un acrylamide ou méthacrylamide de formule $CH_2=CR_3CONHR_{14}$ ou $CH_2=CR_3CON(R_5)_2$, un maléate ou fumarate de formule $R_{13}OCOCH=CHCOOR_{13}$, un éther vinylique de formule $CH_2=CHOR_{13}$, un lactame N-vinylique ou un mélange de ces monomères, où $R_3$ est l'hydrogène ou un groupe méthyle, $R_5$ est l'hydrogène ou un groupe alkyle en $C_1$-$C_4$, $R_{13}$ est un reste hydrocarboné ayant 1 à 10 atomes de carbone, substitué par un ou plusieurs groupes hydrosolubilisants, tels que carboxy, hydroxy ou tert-amino, ou un groupe poly(oxyéthylène) avec 2-100 unités récurrentes ou un groupe contenant des groupements sulfate, phosphate, sulfonate ou phosphonate, et $R_{14}$ a la signification indiquée pour $R_{13}$ ou $R_5$.

**19.** Composition selon la revendication 18, dans laquelle le monomère hydrosoluble $B_2$ est choisi parmi le méthacrylate de 2-hydroxyéthyle, le N,N-diméthylacrylamide, l'acide acrylique, l'acide méthacrylique et la N-vinyl-2-pyrrolidone.

20. Composition selon la revendication 6, dans laquelle le composant A est une structure polysiloxanique dans laquelle $R_1$ est un groupe alkylène ayant 3 ou 4 atomes de carbone $R_2,R_a,R_b,R_c,R_d,R_e,R_f,R_g,R_h,R_i,R_j$ et $R_k$ sont chacun un groupe méthyle, $x_1 + x_2$ vaut de 10 à 100, $y_1$ est 0 à 2, $y_2$ est 1 à 3, $Z_1$ est -O- ou -NH- et $R_4$ est le reste bivalent d'un diisocyanate aliphatique ou cycloaliphatique ayant 6 à 10 atomes de carbone et Y est identique à $Y_1$, $R_6$ est l'hydrogène, $R_8$ est un groupe éthylène et $Z_2$ est -O- ou $-NC(CH_3)_3-$ et le composant B contient 0 à 30%, sur la base de l'ensemble des monomères, d'un monomère dioléfinique ($B_x$), qui est l'acrylate ou méthacrylate d'alcool allylique, d'un alkylèneglycol linéaire ou ramifié ayant 2 à 6 atomes de carbone, de poly-(oxyéthylène)-glycols, de poly-(oxypropylène)-glycols, de poly-(n-oxybutylène)-glycols, de thiodiéthylèneglycol, de néopentylèneglycol, de triméthylolpropane ou de pentaérythrite; ou est le produit de réaction, obtenu par réaction de 1 mol d'un di- ou triisocyanate de structure $OCN-R_4-(NCO)_v$ avec 2 ou 3 mol d'un acrylate ou méthacrylate d'hydroxyalkyle, tandis que $R_4$ est le reste provenant de cet isocyanate après élimination du(des) groupe(s) NCO et v est 1 ou 2.

21. Composition selon la revendication 20, dans laquelle $B_x$ est le diacrylate de néopentylèneglycol, le diméthacrylate d'éthylèneglycol ou le produit de réaction de 1 mol de diisocyanate d'isophorone et 2 mol de méthacrylate de 2-hydroxyéthyle.

22. Composition selon la revendication 20, dans laquelle le composant B contient le monomère non hydrosoluble $B_1$, choisi parmi le méthacrylate de méthyle, le méthacrylate d'isopropyle, le méthacrylate d'isobutyle, le méthacrylate de tert-butyle, le méthacrylate d'isobornyle, le méthacrylate de cyclohexyle, le méthacrylate d'hexafluoroisopropyle et leurs mélanges.

23. Composition selon la revendication 22, dans laquelle le composant B contient le monomère non hydrosoluble $B_1$, choisi parmi le méthacrylate de méthyle, le méthacrylate d'isopropyle, le méthacrylate d'isobutyle, le méthacrylate de cyclohexyle, le méthacrylate d'isobornyle et leurs mélanges.

24. Composition selon la revendication 21, dans laquelle le composant B contient en tant que monomère non hydrosoluble $B_1$ le méthacrylate de méthyle, le méthacrylate d'isobornyle ou leurs mélanges.

25. Composition selon la revendication 20, dans laquelle le composant B contient le monomère non hydrosoluble $B_1$, qui est un mélange d'acétate de vinyle et de maléate de diméthyle dans un rapport molaire de 2/1 à 5/1 plus du méthacrylate de méthyle, du méthacrylate d'isopropyle, du méthacrylate d'isobutyle, du méthacrylate de tert-butyle, du méthacrylate de cyclohexyle ou du méthacrylate d'hexafluoroisopropyle et leurs mélanges.

26. Composition selon la revendication 20, dans laquelle le composant B contient le monomère non hydrosoluble $B_1$, choisi parmi l'acrylate de 2-éthylhexyle, l'acrylate de n-butyle, le méthacrylate de n-butyle, l'acrylate de n-octyle, le méthacrylate de n-octyle, l'acrylate de n-décyle, le méthacrylate de n-décyle, l'acrylate ou le méthacrylate de perfluoroalkyl-alkyle en $C_6$-$C_{10}$ substitué et leurs mélanges.

27. Composition selon la revendication 20, dans laquelle le composant B contient le monomère hydrosoluble $B_2$, choisi parmi le méthacrylate de 2-hydroxyéthyle, le N,N-diméthylacrylamide, l'acide acrylique, l'acide méthacrylique et la N-vinyl-2-pyrrolidone.

28. Composition selon la revendication 20, comprenant

(A) 15 à 40% en poids d'un polysiloxane de structure $A_2$, où $Z_1$ et $Z_2$ sont chacun -O- et $y_2$ est 1 ou 2, et

(B) 85 à 60% en poids d'un mélange d'un monomère non hydrosoluble ($B_1$), d'un monomère hydrosoluble ($B_2$) et d'un monomère dioléfinique ($B_x$), où, sur la base du pourcentage en poids du poids de l'ensemble des monomères,

$B_1$ est 60 à 95% d'un monomère non hydrosoluble, choisi parmi le méthacrylate de méthyle, le méthacrylate d'isopropyle, le méthacrylate d'isobutyle, le méthacrylate de tert-butyle, le méthacrylate de cyclohexyle, le méthacrylate d'isobornyle et leurs mélanges,

$B_2$ est 20 à 0% d'un monomère hydrosoluble, choisi parmi le méthacrylate de 2-hydroxyéthyle, le N,N-diméthylacrylamide, l'acide acrylique, l'acide méthacrylique, la N-vinyl-2-pyrrolidone et leurs mélanges, et

$B_x$ est 20 à 5% d'un monomère dioléfinique, choisi parmi le diacrylate de néopentylèneglycol, le

diméthacrylate d'éthylèneglycol et le produit de réaction de 1 mol de diisocyanate d'isophorone et 2 mol de méthacrylate de 2-hydroxyéthyle.

**29.** Composition selon la revendication 20, comprenant

(A) 40 à 60% en poids d'un polysiloxane de structure $A_2$, où $Z_1$ et $Z_2$ sont chacun -O- et $y_2$ est 1 ou 2, et

(B) 60 à 40% en poids d'un mélange d'un monomère non hydrosoluble ($B_1$), d'un monomère hydrosoluble ($B_2$) et d'un monomère dioléfinique ($B_x$), où, sur la base du pourcentage en poids du poids de l'ensemble des monomères,

$B_1$ est 70 à 100% d'un monomère non hydrosoluble, choisi parmi l'acrylate ou le méthacrylate d'éthyle, l'acrylate ou le méthacrylate de n-butyle, l'acrylate ou le méthacrylate de n-hexyle, l'acrylate ou le méthacrylate de 2-éthylhexyle, l'acrylate ou le méthacrylate de n-octyle, l'acrylate ou le méthacrylate de n-décyle et leurs mélanges, et des mélanges de ceux-ci avec du méthacrylate de méthyle ou d'isobornyle,

$B_2$ est 25 à 0% d'un monomère hydrosoluble, choisi parmi le méthacrylate de 2-hydroxyéthyle, le N,N-diméthylacrylamide, l'acide acrylique, l'acide méthacrylique, la N-vinyl-2-pyrrolidone et leurs mélanges, et

$B_x$ est 5 à 0% d'un monomère dioléfinique, choisi parmi le diacrylate de néopentylèneglycol, le diméthacrylate d'éthylèneglycol et le produit de réaction de 1 mol de diisocyanate d'isophorone et 2 mol de méthacrylate de 2-hydroxyéthyle.

**30.** Composition selon la revendication 20, comprenant

(A) 20 à 60% en poids d'un polysiloxane de structure $A_2$, où $Z_1$ et $Z_2$ sont chacun -O- et $y_2$ est 1 ou 2, et

(B) 80 à 40% en poids d'un mélange d'un monomère non hydrosoluble ($B_1$), d'un monomère hydrosoluble ($B_2$) et d'un monomère dioléfinique ($B_x$), où, sur la base du pourcentage en poids du poids de l'ensemble des monomères,

$B_1$ est 0 à 80% d'un monomère non hydrosoluble, choisi parmi le méthacrylate de méthyle, l'acrylate de 2-éthylhexyle, le méthacrylate d'hexafluoroisopropyle, l'acrylate ou le méthacrylate de perfluoroalkyl-alkyle en $C_6$-$C_{10}$ substitué, le méthacrylate d'isopropyle, le méthacrylate d'isobutyle, le méthacrylate de tert-butyle, le méthacrylate de cyclohexyle, le méthacrylate d'isobornyle et leurs mélanges,

$B_2$ est 100 à 15% d'un monomère hydrosoluble, choisi parmi le méthacrylate de 2-hydroxyéthyle, le N,N-diméthylacrylamide, l'acrylamide de N-vinyl-2-pyrrolidone et leurs mélanges, et

$B_x$ est 0 à 5% d'un monomère dioléfinique, choisi parmi le diacrylate de néopentylèneglycol, le diméthacrylate d'éthylèneglycol et le produit de réaction de 1 mol de diisocyanate d'isophorone et 2 mol de méthacrylate de 2-hydroxyéthyle.

**31.** Lentille de contact dure, réalisée à partir du polymère de composition selon la revendication 5.

**32.** Lentille de contact dure, réalisée à partir du polymère de composition selon la revendication 28.

**33.** Lentille de contact souple, réalisée à partir du polymère de composition selon la revendication 5.

**34.** Lentille de contact souple, réalisée à partir du polymère de composition selon la revendication 29.

**35.** Lentille de contact souple en hydrogel, réalisée à partir du polymère de composition selon la revendication 5.

**36.** Lentille de contact souple en hydrogel, réalisée à partir du polymère de composition selon la revendication 30.

**37.** Polymère, comprenant le produit de copolymérisation de composition selon la revendication 5.

**38.** Procédé pour la préparation d'un polymère à partir de la composition selon la revendication 5, comprenant la réaction des composants (A) et (B), sous l'action de la chaleur ou d'une irradiation.

**Revendications pour l'Etat contractant suivant: AT**

1. Procédé pour la préparation d'un macromère de polysiloxane linéaire ou ramifié ayant une masse moléculaire d'environ 400 à 100000, mesurée par analyse de groupe terminal ou chromatographie par perméation de gel, tandis que le macromère contient au moins un groupe oléfinique polymérisable terminal ou latéral et au moins un groupe oléfinique polymérisable de ce type par unité de masse moléculaire du polysiloxane de 5000, le groupe étant lié au polysiloxane par une liaison uréthane, thiouréthane ou urée, et le macromère ayant la structure $A_1$, $A_2$, $A_3$ ou $A_4$

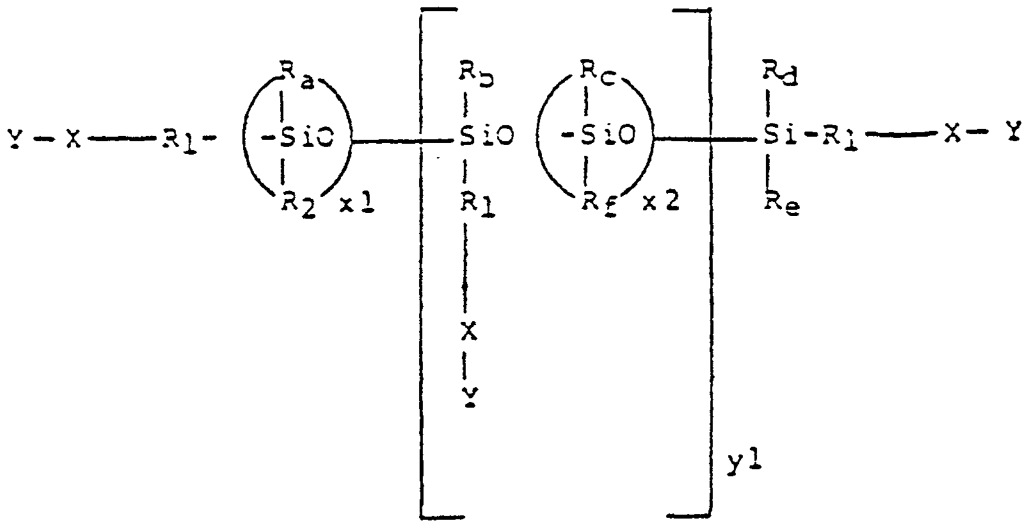

($A_1$)

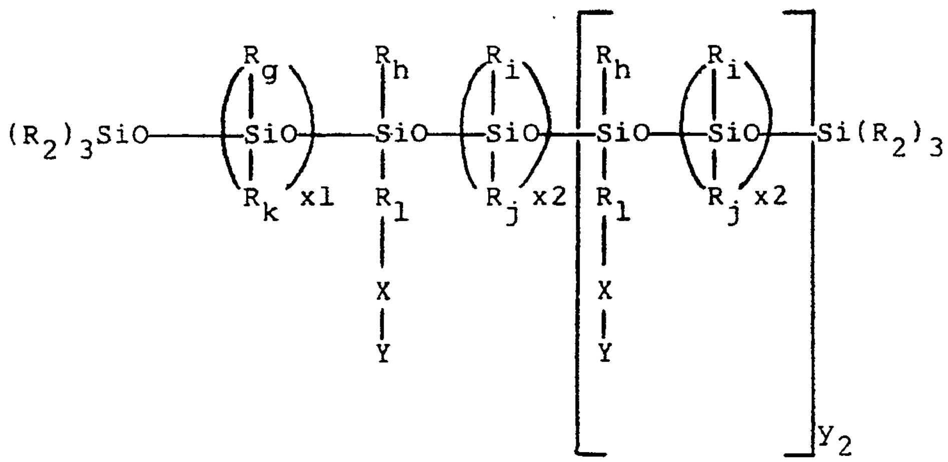

($A_2$)

$Y_1\text{-}(T\text{-}R_4)_n\text{-}T\text{-}Y_1$ ($A_3$)

$Y_1\text{-}(T_1\text{-}R_4)_n\text{-}T_1\text{-}Y_1$ ($A_4$)

où:

$R_1$ est un groupe alkylène linéaire ou ramifié ayant 2-6 atomes de carbone ou un groupe polyoxyalkylène de structure G ou $G_1$

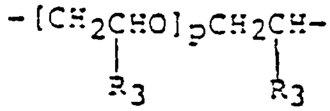

(G)

$-[CH_2CH_2CH_2CH_2O]_pCH_2CH_2CH_2CH_2-$ ($G_1$) ,

où $R_3$ est l'hydrogène ou un groupe méthyle et p est un entier de 1-50, $R_2$, $R_a$, $R_b$, $R_c$, $R_d$, $R_e$, $R_f$, $R_g$, $R_h$, $R_i$, $R_j$ et $R_k$sont indépendamment l'un de l'autre un groupe méthyle ou phényle, $x_1$, $x_2$ sont des entiers de 1 à 500, à la condition que la somme $x_1 + x_2$ soit de 7 à 1300, $y_1$ est 0 à 14 et $y_2$ est 1 à 13, à la condition que le rapport

$$\frac{x_1 + x_2}{y_1 + 2}$$

ou

$$\frac{x_1 + x_2}{y_2 + 1}$$

ne dépasse pas 70,
X est $-Z_1$-CO-NH-
$Z_1$ est l'oxygène, le soufre ou $NR_5$, où $R_5$ est l'hydrogène ou un groupe alkyle en $C_1$-$C_4$, $Z_1$ étant lié à $R_1$;

$Y_1$ est

$$-R_8-Z_2CO-\underset{R_3}{C}=CH-R_6$$

ou
$-R_7-O-CH=CH_2$,

où:
$R_6$ est: l'hydrogène, ou un groupe méthyle, $-COOR_5$ ou $-COOR_7OH$,
$Z_2$ est l'oxygène ou $-NR_5-$,
Y est identique à $Y_1$, ou Y est H ou un groupe alkyle ayant de 1 à 8 atomes de carbone, cyclohexyle, phényle, o-tolyle, m-tolyle ou p-tolyle, à la condition qu'au moins un des Y ait la même signification que $Y_1$,
$R_7$ est un groupe alkylène linéaire ou ramifié ayant 2 à 10 atomes de carbone, phénylène ou phénylalkylène ayant 2 à 10 atomes de carbone dans le groupe alkylène, ou polyoxyalkylène de structure G ou $G_1$;
$R_8$ est un groupe alkylène ayant 2 à 6 atomes de carbone,
$R_4$ est un reste bivalent, qui est obtenu par élimination des groupes NCO d'un diisocyanate aliphatique, cycloaliphatique, araliphatique ou aromatique;
T est le groupe

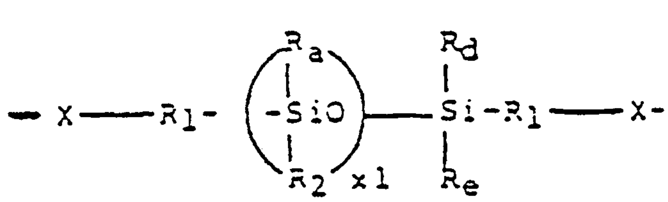

$T_1$ est le groupe

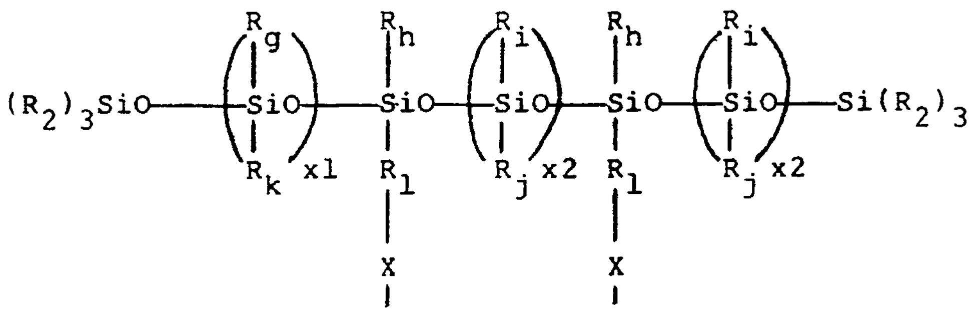

et n vaut de 1 à 10,
caractérisé en ce qu'on fait réagir des polysiloxanes polyfonctionnels ayant les structures $L_1$ ou $L_2$

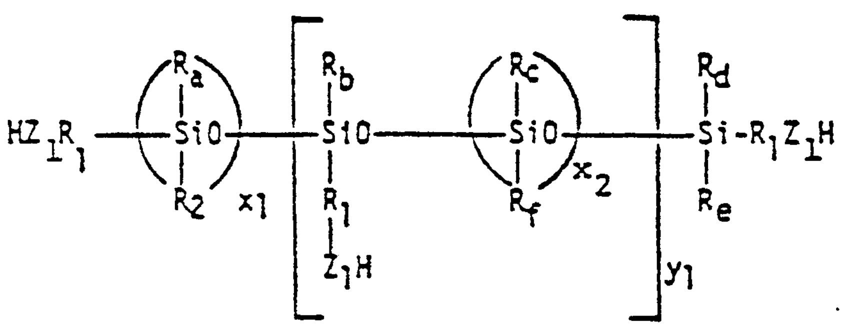

$L_1$

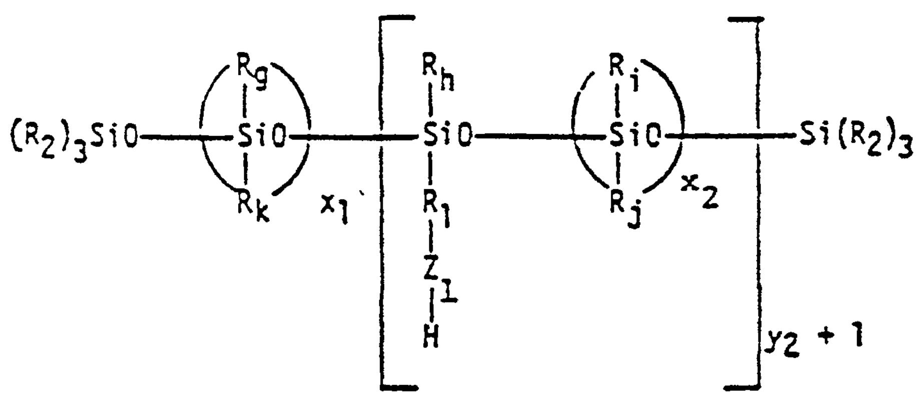

$L_2$

où toutes les variables sont telles que définies précédemment, avec un composé vinylique à substitution isocyanato.

2. Procédé selon la revendication 1, dans lequel $R_1$ est un groupe alkylène ayant 3 ou 4 atomes de carbone, $R_2$,$R_a$,$R_b$,$R_c$,$R_d$,$R_e$,$R_f$,$R_g$,$R_h$,$R_i$,$R_j$ et $R_k$ sont chacun un groupe méthyle, $x_1 + x_2$ vaut de 10 à 100, $y_1$ est 0 à 2, $y_2$ est 1 à 3, $Z_1$ est-O- ou -NH- et $R_4$ est un reste bivalent d'un diisocyanate aliphatique ou cycloaliphatique ayant de 6 à 10 atomes de carbone et Y est identique à $Y_1$, $R_6$ est l'hydrogène, $R_8$ est un groupe éthylène et $Z_2$ est -O- ou $-NC(CH_3)_3-$.

3. Procédé selon la revendication 2, dans lequel le polysiloxane a la structure $A_2$, $Z_1$ et $Z_2$ sont chacun -O- et $y_2$ est 1 ou 2.

4. Procédé selon la revendication 1, dans lequel le polysiloxane a la structure $A_3$ ou $A_4$, dans laquelle $R_4$ est le reste bivalent provenant du diisocyanate d'isophorone.

5. Procédé pour la préparation d'une composition polymérisable, comprenant

(A) 5 à 75% en poids, par rapport aux composants (A) et (B), d'un macromère de polysiloxane selon la revendication 1,et
(B) 95 à 25% en poids d'un ou plusieurs monomères vinyliques mono-, di- ou trifonctionnels, polymérisables par polymérisation avec des radicaux libres, caractérisé en ce qu'on mélange de manière classique les composants (A) et (B) de la composition.

6. Procédé selon la revendication 5 pour la préparation d'une composition comprenant
(A) 15 à 60% en poids du macromère de polysiloxane linéaire ou ramifié et
(B) 85 à 40% en poids d'un mélange de monomères hydrosolubles et non hydrosolubles ou d'un monomère non hydrosoluble, les monomères étant monooléfiniques, dioléfiniques ou un mélange de monomères monooléfiniques et dioléfiniques, 0 à 100% en poids de l'ensemble des monomères étant non hydrosolubles, 100 à 0% en poids de l'ensemble des monomères étant hydrosolubles et 50 à 0% en poids de l'ensemble des monomères étant remplacés par un monomère dioléfinique $(B_x)$.

7. Procédé selon la revendication 5, dans lequel $R_1$ est un groupe alkylène ayant 3 ou 4 atomes de carbone, $R_2$,$R_a$,$R_b$,$R_c$,$R_d$,$R_e$,$R_f$,$R_g$,$R_h$,$R_i$,$R_j$ et $R_k$ sont chacun un groupe méthyle, $x_1 + x_2$ vaut de 10 à 100, $y_1$ est 0 à 2, $y_2$ est 1 à 3, $Z_1$ est -O- ou -NH- et $R_4$ est un reste bivalent d'un diisocyanate aliphatique ou cycloaliphatique ayant de 6 à 10 atomes de carbone et Y est identique à $Y_1$, $R_6$ est l'hydrogène, $R_8$ est un groupe éthylène et $Z_2$ est -O- ou $-NC(CH_3)_3-$.

8. Procédé selon la revendication 7, dans lequel le polysiloxane a la structure $A_2$, $Z_1$ et $Z_2$ sont chacun -O- et $y_2$ est 1 ou 2.

9. Procédé selon la revendication 5, dans lequel le polysiloxane a la structure $A_3$ ou $A_4$, dans laquelle $R_4$ est le reste bivalent provenant du diisocyanate d'isophorone.

10. Procédé selon la revendication 6, dans lequel le monomère B est un monomère non hydrosoluble $B_1$, qui est un acrylate ou méthacrylate de formule $CH_2=CR_3COOR_{12}$, un acrylamide ou méthacrylamide de formule $CH_2=CR_3CONHR_{12}$, un maléate ou un fumarate de formule $R_{12}OCOCH=CHCOOR_{12}$, un itaconate de formule $R_{12}OCOC(=CH_2)CH_2COOR_{12}$, un ester vinylique de formule $R_{12}COOCH=CH_2$, un éther vinylique de formule $CH_2=CHOR_{12}$ ou un mélange de ces monomères, où $R_3$ est l'hydrogène ou un groupe méthyle et $R_{12}$ est un groupe linéaire ou ramifié aliphatique, un groupe cycloaliphatique ou un groupe aromatique, ayant de 1 à 21 atomes de carbone, et peut comporter des liaisons éther ou thioéther ou un groupe -CO-, -SO- ou $-SO_2-$, ou dans lesquelles $R_{12}$ est un groupe hétérocyclique contenant des atomes d'oxygène, de soufre ou d'azote, un groupe poly(oxopropylène) ou poly(n-oxobutylène) ayant 2 à 50 motifs alcoxy récurrents, un groupe alkyle perfluoré ayant 1-12 atomes de carbone ou un groupe siloxane contenant de l'alkyle et ayant 1 à 6 atomes de Si.

11. Procédé selon la revendication 10, dans lequel le monomère non hydrosoluble $B_1$ est choisi parmi le méthacrylate de méthyle, le méthacrylate d'isopropyle, le méthacrylate d'isobutyle, le méthacrylate de tert-butyle, le méthacrylate d'isobornyle, le méthacrylate de cyclohexyle, le méthacrylate d'hexefluoroisopropyle et leurs mélanges.

12. Procédé selon la revendication 11, dans lequel le monomère non hydrosoluble $B_1$ est choisi parmi le méthacrylate de méthyle, le méthacrylate de cyclohexyle, le méthacrylate d'isobornyle et leurs mélanges.

13. Procédé selon la revendication 6, dans lequel le composant (B) contient 1 à 30%, sur la bsse du poids d'ensemble des monomères, d'un monomère dioléfinique $(B_x)$.

14. Procédé selon la revendication 6, dans lequel le monomère dioléfinique $(B_x)$ du composant B est l'acrylate ou méthacrylate d'alcool allylique, d'un alkylèneglycol linéaire ou ramifié ayant 2 à 6 atomes de carbone, de poly-(oxyéthylène)-glycols, de poly-(oxypropylène)-glycols, de poly-(n-oxybutylène)-glycols, de thiodiéthylèneglycol, de néopentylèneglycol, de triméthylolpropane ou de pentaérythrite; ou est le produit de réaction, obtenu par réaction de 1 mol d'un di- ou triisocyanate de structure $OCN-R_4-(NCO)_v$ avec 2 ou 3 mol d'un acrylate ou méthacrylate d'hydroxyalkyle, tandis que $R_4$ est le reste provenant de cet isocyanate après élimination du(des) groupe(s) NCO et v est 1 ou 2.

**15.** Procédé selon la revendication 6, dans lequel le composant B est un mélange de méthacrylate de méthyle et 1 à 25% en poids, par rapport à l'ensemble des monomères, de diacrylate de néopentylèneglycol, de diméthacrylate d'éthylèneglycol ou du produit de réaction de 1 mol de diisocyanate d'isophorone et 2 mol de méthacrylate de 2-hydroxyéthyle.

**16.** Procédé selon la revendication 10, dans lequel le monomère non hydrosoluble $B_1$ est un mélange d'acétate de vinyle et de maléate de diméthyle dans un rapport molaire de 2/1 à 5/1 plus du méthacrylate de méthyle, du méthacrylate d'isopropyle, du méthacrylate d'isobutyle, du méthacrylate de tert-butyle, du méthacrylate de cyclohexyle ou du méthacrylate d'hexafluoroisopropyle ou leurs mélanges.

**17.** Procédé selon la revendication 10, dans lequel le monomère non hydrosoluble $B_1$ est choisi parmi l'acrylate de 2-éthylhexyle, le méthacrylate de 2-éthylhexyle, l'acrylate de n-butyle, le méthacrylate de n-butyle, l'acrylate de n-octyle, le méthacrylate de n-octyle, l'acrylate de n-décyle, le méthacrylate de n-décyle, l'acrylate ou le méthacrylate de perfluoroalktl-alkyl en $C_6$-$C_{10}$ substitué et leurs mélanges.

**18.** Procédé selon la revendication 6, dans lequel dans le monomère B le monomère hydrosoluble $B_2$ est un acrylate ou méthacrylate de formule $CH_2=CR_3COOR_{13}$, un acrylamide ou méthacrylamide de formule $CH_2=CR_3CONHR_{14}$ ou $CH_2=CR_3CON(R_5)_2$, un maléate ou fumarate de formule $R_{13}OCOCH=CHCOOR_{13}$, un éther vinylique de formule $CH_2=CHOR_{13}$, un lactame N-vinylique ou un mélange de ces monomères, où $R_3$ est l'hydrogène ou un groupe méthyle, $R_5$ est l'hydrogène ou un groupe alkyle en $C_1$-$C_4$, $R_{13}$ est un reste hydrocarboné ayant 1 à 10 atomes de carbone, substitué par un ou plusieurs groupes hydrosolubilisants, tels que carboxy, hydroxy ou tert-amino, ou un groupe poly(oxyéthylène) avec 2-100 unités récurrentes ou un groupe contenant des groupements sulfate, phosphate, sulfonate ou phosphonate, et $R_{14}$ a la signification indiquée pour $R_{13}$ ou $R_5$.

**19.** Procédé selon la revendication 18, dans lequel le monomère hydrosoluble $B_2$ est choisi parmi le méthacrylate de 2-hydroxyéthyle, le N,N-diméthylacrylamide, l'acide acrylique, l'acide méthacrylique et la N-vinyl-2-pyrrolidone.

**20.** Procédé selon la revendication 6, dans lequel le composant A est une structure polysiloxanique dans laquelle $R_1$ est un groupe alkylène ayant 3 ou 4 atomes de carbone, $R_2$,$R_a$,$R_b$,$R_c$,$R_d$,$R_e$,$R_f$,$R_g$,$R_h$,$R_i$,$R_j$ et $R_k$ sont chacun un groupe méthyle, $x_1 + x_2$ vaut de 10 à 100, $y_1$ est 0 à 2, $y_2$ est 1 à 3, $Z_1$ est -O- ou -NH- et $R_4$ est le reste bivalent d'un diisocyanate aliphatique ou cycloaliphatique ayant 6 à 10 atomes de carbone et Y est identique à $Y_1$, $R_6$ est l'hydrogène, $R_8$ est un groupe éthylène et $Z_2$ est -O- ou $-NC(CH_3)_3-$ et le composant B contient 0 à 30%, sur la base de l'ensemble des monomères d'un monomère dioléfinique ($B_x$), qui est l'acrylate ou méthacrylate d'alcool allylique, d'un alkylèneglycol linéaire ou ramifié ayant 2 à 6 atomes de carbone, de poly-(oxyéthylène)-glycols, de poly-(oxypropylène)-glycols, de poly-(n-oxybutylène)-glycols, de thiodiéthylèneglycol, de néopentylèneglycol, de triméthylolpropane ou de pentaérythrite; ou est le produit de réaction, obtenu par réaction de 1 mol d'un di- ou triisocyanate de structure $OCN-R_4-(NCO)_v$ avec 2 ou 3 mol d'un acrylate ou méthacrylate d'hydroxyalkyle, tandis que $R_4$ est le reste provenant de cet isocyanate après élimination du(des) groupe(s) NCO et v est 1 ou 2.

**21.** Procédé selon la revendication 20, dans lequel $B_x$ est le diacrylate de néopentylèneglycol, le diméthacrylate d'éthylèneglycol ou le produit de réaction de 1 mol de diisocyanate d'isophorone et 2 mot de méthacrylate de 2-hydroxyéthyle.

**22.** Procédé selon la revendication 20, dans lequel le composant B contient le monomère non hydrosoluble $B_1$, choisi parmi le méthacrylate de méthyle, le méthacrylate d'isopropyle, le méthacrylate d'isobutyle, le méthacrylate de tert-butyle, le méthacrylate d'isobornyle, le méthacrylate de cyclohexyle, le méthacrylate d'hexafluoroisopropyle et leurs mélanges.

**23.** Procédé selon la revendication 22, dans lequel le composant B contient le monomère non hydrosoluble $B_1$, choisi parmi le méthacrylate de méthyle, le méthacrylate d'isopropyle, le méthacrylate d'isobutyle, le méthacrylate de cyclohexyle, le méthacrylate d'isobornyle et leurs mélanges.

**24.** Procédé selon la revendication 21, dans lequel le composant B contient en tant que monomère non

hydrosoluble $B_1$ le méthacrylate de méthyle, le méthacrylate d'isobornyle ou leurs mélanges.

**25.** Procédé selon la revendication 20, dans lequel le composant B contient le monomère non hydrosoluble $B_1$, qui est un mélange d'acétate de vinyle et de maléate de diméthyle dans un rapport molaire de 2/1 à 5/1 plus du méthacrylate de méthyle, du méthacrylate d'isopropyle, du méthacrylate d'isobutyle, du méthacrylate de tert-butyle, du méthacrylate de cyclohexyle ou du méthacrylate d'hexafluoroisopropyle et leurs mélanges.

**26.** Procédé selon la revendication 20, dans lequel le composant B contient le monomère non hydrosoluble $B_1$, choisi parmi l'acrylate de 2-éthylhexyle, l'acrylate de n-butyle, le méthacrylate de n-butyle, l'acrylate de n-octyle, le méthacrylate de n-octyle, l'acrylate de n-décyle, le méthacrylate de n-décyle, l'acrylate ou le méthacrylate de perfluoroalkyl-alkyle en $C_6$-$C_{10}$ substitué et leurs mélanges.

**27.** Procédé selon la revendication 20, dans lequel le composant B contient le monomère hydrosoluble $B_2$, choisi parmi le méthacrylate de 2-hydroxyéthyle, le N,N-diméthylacrylamide, l'acide acrylique, l'acide méthacrylique et la N-vinyl-2-pyrrolidone.

**28.** Procédé selon la revendication 20 pour la préparation d'une composition comprenant

(A) 15 à 40% en poids d'un polysiloxane de structure $A_2$, où $Z_1$ et $Z_2$ sont chacun -O- et $y_2$ est 1 ou 2, et

(B) 85 à 60% en poids d'un mélange d'un monomère non hydrosoluble ($B_1$), d'un monomère hydrosoluble ($B_2$) et d'un monomère dioléfinique ($B_x$), où, sur la base du pourcentage en poids du poids de l'ensemble des monomères,

$B_1$ est 60 à 95% d'un monomère non hydrosoluble, choisi parmi le méthacrylate de méthyle, le méthacrylate d'isopropyle, le méthacrylate d'isobutyle, le méthacrylate de tert-butyle, le méthacrylate de cyclohexyle, le méthacrylate d'isobornyle et leurs mélanges,

$B_2$ est 20 à 0% d'un monomère hydrosoluble, choisi parmi le méthacrylate de 2-hydroxyéthyle, le N,N-diméthylacrylamide, l'acide acrylique, l'acide méthacrylique, la N-vinyl-2-pyrrolidone et leurs mélanges, et

$B_x$ est 20 à 5% d'un monomère dioléfinique, choisi parmi le diacrylate de néopentylèneglycol, le diméthacrylate d'éthylèneglycol et le produit de réaction de 1 mol de diisocyanate d'isophorone et 2 mol de méthacrylate de 2-hydroxyéthyle.

**29.** Procédé selon la revendication 20 pour la préparation d'une composition comprenant

(A) 40 à 60% en poids d'un polysiloxane de structure $A_2$, où $Z_1$ et $Z_2$ sont chacun -O- et $y_2$ est 1 ou 2, et

(B) 60 à 40% en poids d'un mélange d'un monomère non hydrosoluble ($B_1$), d'un monomère hydrosoluble ($B_2$) et d'un monomère dioléfinique ($B_x$), où, sur la base du pourcentage en poids du poids de l'ensemble des monomères,

$B_1$ est 70 à 100% d'un monomère non hydrosoluble, choisi parmi l'acrylate ou le méthacrylate d'éthyle, l'acrylate ou le méthacrylate de n-butyle, l'acrylate ou le méthacrylate de n-hexyle, l'acrylate ou le méthacrylate de 2-éthylhexyle, l'acrylate ou le méthacrylate de n-octyle, l'acrylate ou le méthacrylate de n-décyle et leurs mélanges, et des mélanges de ceux-ci avec du méthacrylate de méthyle ou d'isobornyle,

$B_2$ est 25 à 0% d'un monomère hydrosoluble, choisi parmi le méthacrylate de 2-hydroxyéthyle, le N,N-diméthylacrylamide, l'acide acrylique, l'acide méthacrylique, la N-vinyl-2-pyrrolidone et leurs mélanges, et

$B_x$ est 5 à 0% d'un monomère dioléfinique, choisi parmi le diacrylate de néopentylèneglycol, le diméthacrylate d'éthylèneglycol et le produit de réaction de 1 mol de diisocyanate d'isophorone et 2 mol de méthacrylate de 2-hydroxyéthyle.

**30.** Procédé selon la revendication 20 pour la préparation d'une composition comprenant

(A) 20 à 60% en poids d'un polysiloxane de structure $A_2$, où $Z_1$ et $Z_2$ sont chacun -O- et $y_2$ est 1 ou 2, et

(B) 80 à 40% en poids d'un mélange d'un monomère non hydrosoluble ($B_1$), d'un monomère hydrosoluble ($B_2$) et d'un monomère dioléfinique ($B_x$), où, sur la base du pourcentage en poids du poids de l'ensemble des monomères,

$B_1$ est 0 à 80% d'un monomère non hydrosoluble, choisi parmi le méthacrylate de méthyle, l'acrylate

de 2-éthylhexyle, le méthacrylate d'hexafluoroisopropyle, l'acrylate ou le méthacrylate de perfluoroalkyl-alkyle en $C_6$-$C_{10}$ substitué, le méthacrylate d'isopropyle, le méthacrylate d'isobutyle, le méthacrylate de tert-butyle, le méthacrylate de cyclohexyle, le méthacrylate d'isobornyle et leurs mélanges,
$B_2$ est 100 à 15% d'un monomère hydrosoluble, choisi parmi le méthacrylate de 2-hydroxyéthyle, le N,N-diméthylacrylamide, l'acrylamide de N-vinyl-2-pyrrolidone et leurs mélanges, et
$B_x$ est 0 à 5% d'un monomère dioléfinique, choisi parmi le diacrylate de néopentylèneglyco, le diméthacrylate d'éthylèneglycol et le produit de réaction de 1 mol de diisocyanate d'isophorone et 2 mol de méthacrylate de 2-hydroxyéthyle.

**31.** Lentille de contact dure, réalisée à partir du polymère de composition selon la revendication 5.

**32.** Lentille de contact dure, réalisée à partir du polymère de composition selon la revendication 28.

**33.** Lentille de contact souple, réalisée à partir du polymère de composition selon la revendication 5.

**34.** Lentille de contact souple, réalisée à partir du polymère de composition selon la revendication 29.

**35.** Lentille de contact souple en hydrogel, réalisée à partir du polymère de composition selon la revendication 5.

**36.** Lentille de contact souple en hydrogel, réalisée à partir du polymère de composition selon la revendication 30.

**37.** Procédé pour la préparation d'un polymère comprenant le produit de copolymérisation de la composition selon la revendication 5, caractérisé en ce qu'on copolymérise de manière classique la composition selon la revendication 5.

**38.** Procédé selon la revendication 5, comprenant la réaction des composants (A) et (B), sous l'action de la chaleur ou d'une irradiation.